(19) **Europäisches Patentamt / European Patent Office / Office européen des brevets**

(11) **EP 3 130 627 B1**

(12) **EUROPEAN PATENT SPECIFICATION**

(45) Date of publication and mention
of the grant of the patent:
**11.07.2018 Bulletin 2018/28**

(21) Application number: **15776757.5**

(22) Date of filing: **09.04.2015**

(51) Int Cl.:
$C08J\ 3/20\ ^{(2006.01)}$     $C08K\ 3/10\ ^{(2018.01)}$
$C08K\ 3/32\ ^{(2006.01)}$     $C08L\ 77/00\ ^{(2006.01)}$
$C08K\ 3/00\ ^{(2018.01)}$     $C08K\ 3/08\ ^{(2006.01)}$
$C08K\ 5/17\ ^{(2006.01)}$     $C08K\ 5/52\ ^{(2006.01)}$
$C08K\ 5/521\ ^{(2006.01)}$     $C08G\ 69/26\ ^{(2006.01)}$
$C08G\ 69/30\ ^{(2006.01)}$     $C08K\ 7/14\ ^{(2006.01)}$
$C08K\ 3/013\ ^{(2018.01)}$     $C08K\ 3/105\ ^{(2018.01)}$
$C08K\ 5/524\ ^{(2006.01)}$     $C08K\ 5/5313\ ^{(2006.01)}$

(86) International application number:
**PCT/JP2015/061139**

(87) International publication number:
**WO 2015/156363 (15.10.2015 Gazette 2015/41)**

(54) **POLYAMIDE RESIN COMPOSITION**

POLYAMIDHARZZUSAMMENSETZUNG

COMPOSITION DE RÉSINE DE POLYAMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
09.04.2014   JP 2014080413
09.04.2014   JP 2014080429
09.04.2014   JP 2014080426
09.04.2014   JP 2014080422
09.04.2014   JP 2014080419
05.09.2014   JP 2014181658
08.12.2014   JP 2014248159

(43) Date of publication of application:
**15.02.2017 Bulletin 2017/07**

(73) Proprietor: **ASAHI KASEI KABUSHIKI KAISHA Tokyo 101-8101 (JP)**

(72) Inventors:
• **OKAMOTO, Masashi**
**Tokyo 101-8101 (JP)**
• **SHIKANO, Yasukazu**
**Tokyo 101-8101 (JP)**

(74) Representative: **D Young & Co LLP**
**120 Holborn**
**London EC1N 2DY (GB)**

(56) References cited:
**EP-A1- 1 574 547**     **EP-A1- 1 956 048**
**JP-A- 2000 129 119**     **JP-A- 2001 279 092**
**JP-A- 2004 269 784**     **JP-A- 2005 060 705**
**JP-A- 2010 159 334**     **JP-A- 2011 026 396**

• **DATABASE CA [Online] CHEMICAL ABSTRACTS SERVICE, COLUMBUS, OHIO, US; 11 February 2011 (2011-02-11), YAMAMOTO, SHIGERU ET AL: "Manufacture of polyamides for improving processability and mechanical strength of moldings", XP002768837, retrieved from STN Database accession no. 2011:174170 -& JP 2011 026396 A (ASAHI KASEI CHEMICALS CORP) 10 February 2011 (2011-02-10)**

**Description**

Technical Field

The present invention relates to a polyamide resin composition, a material for polyamide resin molding, a molded article thereof, and a method for producing the same.

Background Art

Polyamide resins are known as engineering plastics and are widely utilized as parts and materials for use in various fields such as the general-purpose consumption field (packages and containers), the automobile field, the electric or electronic field, the machinery or industrial field, the office equipment field, and the aviation or space field. In recent years, for these various parts, there has been a very growing demand for the replacement of metal materials with the polyamide resins for the purpose of integration, weight reduction, etc. Also, there has been an increasing demand for further enhancement in tenacity, impact resistance, and durability. As a result, the polyamide resins have been required to have much higher performance levels.

Specifically, resin materials having high strength and excellent tenacity, impact resistance, and durability, which permit their replacements for metal materials, have been strongly demanded. Increase in molecular weight is an approach that responds to these demands for the polyamide resins.

A method which involves solid-phase-polymerizing a polyamide resin after melt polymerization is known as a method for increase in molecular weight for the polyamide resins. A great deal of solid-phase polymerization time or heat energy is necessary for obtaining a desired high-molecular-weight polyamide resin by the solid-phase polymerization method. In addition, a solid-phase polymerization step in the current of nitrogen or under reduced pressure is necessary for securing the quality (e.g., color) of polyamide resins. Thus, since the solid-phase polymerization method has complicated steps and also requires a long time, there has been a demand for a more convenient and shorter-time method for increase in molecular weight for polyamide resins.

A catalytic molecular weight-increasing extrusion method which involves adding a molecular weight-increasing catalyst such as sodium hypophosphite to a polyamide resin, and melt-kneading the mixture under a reduced pressure condition in an extruder, followed by extrusion is known as a method for increase in molecular weight for polyamide resins in a short time (see, for example, Patent Document 1).

Another catalytic molecular weight-increasing extrusion method which involves adding phosphoric acid as a molecular weight-increasing catalyst to a polyamide resin, and melt-kneading the mixture under a reduced pressure condition in an extruder, followed by extrusion is also known as a method for increase in molecular weight for polyamide resins (see, for example, Patent Document 2).

Furthermore, a polyamide composition having an increased molecular weight, comprising an apatite-based compound containing phosphorus, is also disclosed (see, for example, Patent Document 3).

List of Prior Art Documents

Patent Document

Patent Document 1: Japanese Patent Laid-Open No. 2011-26396
Patent Document 2: Japanese Patent Laid-Open No. 01-153725
Patent Document 3: Japanese Patent Laid-Open No. 2000-226512

Summary of Invention

Problems to be Solved by Invention

The aforementioned techniques disclosed in Patent Documents 1 and 2 are techniques capable of increasing the molecular weights of polyamide resins in a short time using an extruder without the use of solid-phase polymerization, etc., which requires a long time for increase in molecular weight for polyamide resins. However, the technique disclosed in Patent Document 1 achieves increase in molecular weight, the degree of which, however, is not sufficient. In addition, further improvement in the tenacity of materials has been desired. The technique disclosed in Patent Document 2 achieves increase in molecular weight for polyamide resins, but has been required to be improved in terms of mold release properties from molds at the time of injection molding or suppression of gelation during residence under heat under strict conditions. Furthermore, Patent Document 3 discloses a high-molecular-weight polyamide composition which is obtained by a method for synthesizing apatite at the same time therewith by solid-phase polymerization from a monomer salt of polyamide. However, this composition containing an apatite-based compound has been required to be further improved in terms of mold release properties at the time of molding, or tenacity.

The present invention has been made in light of the problems of the conventional techniques described above, and an object of the present invention is to provide a polyamide resin composition that has high tenacity (tensile elongation and Charpy impact strength) and is excellent in moldability such as mold release properties and suppression of gelation during residence under heat.

Means for Solving Problems

The present inventors have conducted diligent studies to attain the object and consequently completed the present invention by finding that the object can be attained by a polyamide resin composition comprising (A) a polyamide resin, (B) 0.5 to 400 mmol of a phosphorus compound in terms of a phosphorus element concentration, and (C) 0.5 to 400 mmol of a metal element, per kg of the polyamide resin, wherein the content of an apatite-based compound is 0.3 parts by mass or smaller based on 100 parts by mass of the polyamide resin, and the viscosity number [VN] of the polyamide resin is 160 mL/g or higher.
Specifically, the present invention is as follows.

[1] A polyamide resin composition comprising
a polyamide resin,

(B) 0.5 to 400 mmol of a phosphorus compound in terms of a phosphorus element concentration, and
(C) 0.5 to 400 mmol of a metal element,
per kg of the polyamide resin, wherein
a content of an apatite-based compound is 0.3 parts by mass or smaller based on 100 parts by mass of the polyamide resin, and
a viscosity number [VN] of the polyamide resin is 160 mL/g or higher.

[2] The polyamide resin composition according to [1], wherein the phosphorus element concentration of the phosphorus compound (B) is 0.5 to 100 mmol per kg of the polyamide resin.
[3] The polyamide resin composition according to [1] or [2], wherein the concentration of the metal element (C) is 0.5 to 100 mmol per kg of the polyamide resin.
[4] The polyamide resin composition according to any one of [1] to [3], wherein the content of the apatite-based compound is 0.1 parts by mass or smaller based on 100 parts by mass of the polyamide resin.
[5] The polyamide resin composition according to any one of [1] to [4], wherein the polyamide resin composition exhibits no peak at diffraction angles ($2\theta$) of 25.5 to 26.5 degrees and 32.5 to 33.5 degrees derived from the apatite-based compound in X-ray diffractometry.
[6] The polyamide resin composition according to any one of [1] to [5], wherein the phosphorus compound (B) comprises a phosphoric acid compound.
[7] The polyamide resin composition according to any one of [1] to [5], wherein the phosphorus compound (B) comprises at least one member selected from the group consisting of a phosphoric acid and a phosphate.
[8] The polyamide resin composition according to any one of [1] to [7], further comprising (D) 10 to 250 parts by mass of a reinforcing material based on 100 parts by mass of the polyamide resin.
[9] The polyamide resin composition according to any one of [1] to [8], wherein the phosphorus element concentration in the composition after dipping treatment for 24 hours in water of 80°C is retained at 55% or more with respect to the phosphorus element concentration in the initial (before the dipping treatment) composition.
[10] The polyamide resin composition according to any one of [1] to [9], wherein the metal element (C) comprises at least a metal element of Group 2 in the periodic table.
[11] The polyamide resin composition according to any one of [1] to [9], wherein the metal element (C) comprises at least magnesium and/or calcium.
[12] The polyamide resin composition according to any one of [1] to [11], wherein the difference between the carboxyl group terminus concentration [COOH] and the amino group terminus concentration [NH2] ([COOH] - [NH2]) of the polyamide resin is -25 to 25 milliequivalents/kg.
[13] The polyamide resin composition according to any one of [1] to [12], wherein the polyamide resin comprises a polyamide resin obtained by the polycondensation of a diamine and a dicarboxylic acid.
[14] The polyamide resin composition according to any one of [1] to [13], further comprising (E) an amine component.
[15] The polyamide resin composition according to [14], wherein the amine component (E) is a polyamide resin prepolymer and/or a diamine having an amino group terminus concentration [NH2] higher than a carboxyl group terminus concentration [COOH].

[16] The polyamide resin composition according to any one of [1] to [15], wherein a reaction product of the phosphorus compound (B) and the amine component (E), which has been obtained by reacting the phosphorus compound with the amine component in advance, is added to the polyamide resin (A).

[17] A material for polyamide resin molding which is a polyamide resin composition

comprising

a polyamide resin,

(B) 0.5 to 400 mmol of a phosphorus compound in terms of a phosphorus element concentration, and
(C) 0.5 to 400 mmol of a metal element,
per kg of the polyamide resin, wherein
the content of an apatite-based compound is 0.3 parts by mass or smaller based on 100 parts by mass of the polyamide resin, and
the viscosity number [VN] of the polyamide resin is 160 mL/g or higher, wherein
the difference between a heat of fusion ΔH1 (J/g) per g of the polyamide resin at the time of a first temperature rise and a heat of fusion ΔH2 (J/g) per g of the polyamide resin at the time of a second temperature rise (ΔH1 - ΔH2) is 10 J/g or lower in the measurement of heats of fusion using a differential scanning calorimeter (DSC) .

[18] The material for polyamide resin molding according to [17], wherein the phosphorus element concentration of the phosphorus compound (B) is 0.5 to 100 mmol per kg of the polyamide resin.

[19] The material for polyamide resin molding according to [17] or [18], wherein the concentration of the metal element (C) is 0.5 to 100 mmol per kg of the polyamide resin.

[20] The material for polyamide resin molding according to any one of [17] to [19], wherein the content of the apatite-based compound is 0.1 parts by mass or smaller based on 100 parts by mass of the polyamide resin.

[21] The material for polyamide resin molding according to any one of [17] to [20], wherein the polyamide resin composition exhibits no peak at diffraction angles (2θ) of 25.5 to 26.5 degrees and 32.5 to 33.5 degrees derived from the apatite-based compound in X-ray diffractometry.

[22] The material for polyamide resin molding according to any one of [17] to [21], wherein the phosphorus compound (B) comprises a phosphoric acid compound.

[23] The material for polyamide resin molding according to any one of [17] to [21], wherein the phosphorus compound (B) comprises at least one member selected from the group consisting of a phosphoric acid and a phosphate.

[24] The material for polyamide resin molding according to any one of [17] to [23], further comprising (D) 10 to 250 parts by mass of a reinforcing material based on 100 parts by mass of the polyamide resin.

[25] The material for polyamide resin molding according to any one of [17] to [24], wherein the phosphorus element concentration in the composition after dipping treatment for 24 hours in water of 80°C is retained at 55% or more with respect to the phosphorus element concentration in the initial (before the dipping treatment) composition.

[26] The material for polyamide resin molding according to any one of [17] to [25], wherein the metal element (C) contains at least a metal element of Group 2 in the periodic table.

[27] The material for polyamide resin molding according to any one of [17] to [25], wherein the metal element (C) contains at least magnesium and/or calcium.

[28] The material for polyamide resin molding according to any one of [17] to [27], wherein the difference between the carboxyl group terminus concentration [COOH] and the amino group terminus concentration [NH2] ([COOH] - [NH2]) of the polyamide resin is -25 to 25 milliequivalents/kg.

[29] The material for polyamide resin molding according to any one of [17] to [28], wherein the polyamide resin comprises a polyamide resin obtained by the polycondensation of a diamine and a dicarboxylic acid.

[30] The material for polyamide resin molding according to any one of [17] to [29], further comprising (E) an amine component.

[31] The material for polyamide resin molding according to [30], wherein the amine component (E) is a polyamide resin prepolymer and/or a diamine having an amino group terminus concentration [NH2] higher than a carboxyl group terminus concentration [COOH].

[32] The material for polyamide resin molding according to any one of [17] to [31], wherein a reaction product of the phosphorus compound (B) and the amine component (E), which has been obtained by reacting the phosphorus compound with the amine component in advance, is added to the polyamide resin (A).

[33] A molded article comprising the polyamide resin composition according to any one of [1] to [16].

[34] A method for producing a polyamide resin composition containing (A) a polyamide resin, (B) 0.5 to 400 mmol of a phosphorus compound in terms of a phosphorus element concentration, and (C2) 0.5 to 400 mmol of a metal compound in terms of a metal element (C), per kg of the polyamide resin, the method comprising

kneading the polyamide resin (A) and the phosphorus compound (B), and
adding the metal compound (C2) after at least one degassing step.

[35] The method for producing the polyamide resin composition according to [34], wherein a viscosity number [VN] of the polyamide resin component in the polyamide resin composition is 160 mL/g or higher.

[36] The method for producing the polyamide resin composition according to [34] or [35], wherein
an extruder having one or more degassing regions is used,
the polyamide resin (A) and the phosphorus compound (B) are kneaded to obtain a kneaded product, and
after the kneaded product passes through the first degassing region of the extruder, the metal compound (C2) is added as the metal element (C) to the kneaded product.

[37] The method for producing the polyamide resin composition according to any one of [34] to [36], wherein the metal compound (C2) is at least one member selected from the group consisting of a metal halide, a metal oxide, a metal hydroxide, and a metal carbonate.

[38] The method for producing the polyamide resin composition according to any one of [34] to [37], wherein degassing is carried out at least once again after the addition of the metal compound (C2).

[39] The method for producing the polyamide resin composition according to any one of [34] to [38], wherein
the polyamide resin (A), the phosphorus compound (B), and a reinforcing material (D) are kneaded, and
the metal compound (C2) is added after the first degassing operation for the kneaded product.

[40] The method for producing the polyamide resin composition according to any one of [34] to [38], wherein
the polyamide resin (A) and the phosphorus compound (B) are kneaded,
a reinforcing material (D) is added after the first degassing operation for the kneaded product, and
then the metal compound (C2) is added.

[41] The method for producing the polyamide resin composition according to any one of [34] to [38], wherein the polyamide resin (A) and the phosphorus compound (B) are kneaded, and
the metal compound (C2) and a reinforcing material (D) are added at the same time after the first degassing operation for the kneaded product.

Advantages of Invention

The present invention can provide a polyamide resin composition that has high tenacity (tensile elongation and Charpy impact strength) and is excellent in moldability such as mold release properties and suppression of gelation during residence under heat.

Brief Description of Drawing

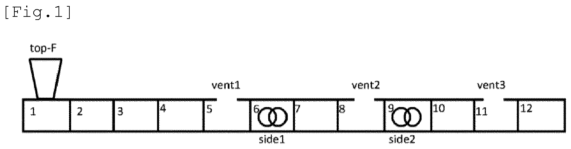

[Figure 1] Figure 1 is a schematic diagram showing one example of the configuration of an extruder.

Mode for Carrying Out Invention

Hereinafter, the mode for carrying out the present invention (hereinafter, referred to as the "present embodiment") will be described in detail.

The polyamide resin composition according to the present embodiment is a polyamide resin composition comprising a polyamide resin, (B) 0.5 to 400 mmol of a phosphorus compound in terms of a phosphorus element concentration, and (C) 0.5 to 400 mmol of a metal element, per kg of the polyamide resin, wherein the content of an apatite-based compound is 0.3 parts by mass or smaller based on 100 parts by mass of the polyamide resin, and the viscosity number [VN] of the polyamide resin is 160 mL/g or higher.

Because of the configuration as described above, the polyamide resin composition according to the present embodiment has high tenacity (tensile elongation and Charpy impact strength) and is excellent in moldability such as mold release properties and suppression of gelation during residence under heat.

(Polyamide resin)

The polyamide resin composition of the present embodiment contains a polyamide resin. The "polyamide resin" means a polyamide resin which is a polymer having an amide bond (-NHCO-) in the principal chain.

In the present specification, the polyamide resin means a polyamide resin in a state contained in the polyamide resin composition, not the polyamide resin (A) at a raw material stage, unless otherwise specified.

In the present specification, the polyamide resin (A) at a raw material stage for use in a method for producing a polyamide resin composition and the polyamide resin in a state contained in the polyamide resin composition can be clearly distinguished from each other by their molecular weights. The molecular weights can be evaluated by use of molecular weight measurement by GPC (gel permeation chromatography), or solution viscosity.

Furthermore, the polyamide resin (A) at a raw material stage and the polyamide resin in a state contained in the polyamide resin composition have the same characteristics except for their molecular weights, for example, the same melting points and peak temperatures of cold crystallization temperatures. The difference in molecular weight between the polyamide resin (A) at a raw material stage and the polyamide resin in a state contained in the polyamide resin composition can be analyzed by the GPC or the solution viscosity, and the other characteristics can also be confirmed to be the same by verification methods selected according to the characteristics.

Examples of the polyamide resin include, but are not limited to, a polyamide resin obtained by the polycondensation of a diamine and a dicarboxylic acid, a polyamide resin obtained by the ring-opening polymerization of a lactam, a polyamide resin obtained by the self-condensation of an aminocarboxylic acid, and a copolymer obtained by the copolymerization of two or more types of the units (monomers) constituting these polyamide resins. For the polyamide resin, only one of these polyamides may be used alone, or two or more thereof may be used in combination.

Hereinafter, the raw material for the polyamide resin (polyamide resin (A)) will be described. Examples of the diamine include, but are not limited to, aliphatic diamines, alicyclic diamines, and aromatic diamines.

Examples of the aliphatic diamines include, but are not limited to: linear saturated aliphatic diamines having 2 to 20 carbon atoms such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecamethylenediamine, and tetradecamethylenediamine; and branched saturated aliphatic diamines having 3 to 20 carbon atoms such as 2-methylpentamethylenediamine (also referred to as 2-methyl-1,5-diaminopentane), 2,2,4-trimethylhexamethylenediamine, 2,4,4-trimethylhexamethylenediamine, 2-methyloctamethylenediamine, and 2,4-dimethyloctamethylenediamine. Examples of the branched saturated aliphatic diamines include a diamine having a substituent branched from the principal chain.

Examples of the alicyclic diamines include, but are not limited to, 1,4-cyclohexanediamine, 1,3-cyclohexanediamine, and 1,3-cyclopentanediamine.

Examples of the aromatic diamines include, but are not limited to, meta-xylylenediamine, para-xylylenediamine, meta-phenylenediamine, ortho-phenylenediamine, and para-phenylenediamine.

Examples of the dicarboxylic acid include, but are not limited to, aliphatic dicarboxylic acids, alicyclic dicarboxylic acids, and aromatic dicarboxylic acids.

Examples of the aliphatic dicarboxylic acids include, but are not limited to, linear or branched saturated aliphatic dicarboxylic acids having 3 to 20 carbon atoms such as malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, adipic acid, 2-methyladipic acid, trimethyladipic acid, pimelic acid, suberic acid, azelaic acid, sebacic acid, dodecanedioic acid, tetradecanedioic acid, hexadecanedioic acid, octadecanedioic acid, eicosanedioic acid, and diglycolic acid.

Examples of the alicyclic dicarboxylic acids include, but are not limited to, alicyclic carboxylic acids such as 1,4-cyclohexanedicarboxylic acid, 1,3-cyclohexanedicarboxylic acid, and 1,3-cyclopentanedicarboxylic acid. The number of carbon atoms in the alicyclic structure of each alicyclic carboxylic acid is not particularly limited and is preferably 3 to 10, more preferably 5 to 10, from the viewpoint of the balance between water absorbability and crystallinity of the resulting polyamide resin. Among these alicyclic dicarboxylic acids, 1,4-cyclohexanedicarboxylic acid is preferred from the viewpoint of mechanical characteristics.

The alicyclic dicarboxylic acid may be unsubstituted or may have a substituent. Examples of the substituent include, but are not limited to, alkyl groups having 1 to 4 carbon atoms such as a methyl group, an ethyl group, a n-propyl group, an isopropyl group, a n-butyl group, an isobutyl group, and a tert-butyl group.

Examples of the aromatic dicarboxylic acids include, but are not limited to, unsubstituted or substituent-substituted aromatic dicarboxylic acids having 8 to 20 carbon atoms. Examples of the substituent include, but are not limited to, alkyl groups having 1 to 6 carbon atoms, aryl groups having 6 to 12 carbon atoms, arylalkyl groups having 7 to 20 carbon atoms, halogen groups such as a chloro group and a bromo group, alkylsilyl groups having 3 to 10 carbon atoms, sulfonic acid groups, and groups which are salts thereof such as sodium salts. Specific examples of the aromatic dicarboxylic acids include, but are not limited to, terephthalic acid, isophthalic acid, naphthalenedicarboxylic acid, 2-chloroterephthalic acid, 2-methylterephthalic acid, 5-methylisophthalic acid, and sodium 5-sulfoisophthalate.

The dicarboxylic acid may further contain a trivalent or higher polyvalent carboxylic acid such as trimellitic acid, trimesic acid, or pyromellitic acid, without impairing the object of the present embodiment. One of these may be used alone, or two or more thereof may be used in combination.

Examples of the lactam include, but are not limited to, butyrolactam, pivalolactam, ε-caprolactam, caprylolactam, enantolactam, undecanolactam, and laurolactam (dodecanolactam). Among them, ε-caprolactam, and laurolactam are preferred, and ε-caprolactam is more preferred, from the viewpoint of tenacity.

Examples of the aminocarboxylic acid include, but are not limited to, compounds obtained by the ring-opening of the lactams described above (ω-aminocarboxylic acid, α,ω-aminocarboxylic acid, etc.).

The aminocarboxylic acid is preferably a linear or branched saturated aliphatic carboxylic acid having 4 to 14 carbon atoms which is substituted at the ω-position by an amino group, from the viewpoint of enhancing crystallinity. Specific examples thereof include 6-aminocaproic acid, 11-aminoundecanoic acid, and 12-aminododecanoic acid. Examples of the aminocarboxylic acid also include, but are not limited to, para-aminomethylbenzoic acid. Among them, 12-aminododecanoic acid is preferred from the viewpoint of low water absorbability.

Examples of the polyamide resin include, but are not limited to, polyamide resins such as polyamide 4 (poly-α-pyrrolidone), polyamide 6 (polycaproamide), polyamide 11 (polyundecanamide), polyamide 12 (polydodecanamide), polyamide 46 (polytetramethylene adipamide), polyamide 56 (polypentamethylene adipamide), polyamide 66 (polyhexamethylene adipamide), polyamide 610 (polyhexamethylene sebacamide), polyamide 612 (polyhexamethylene dodecamide), polyamide 116 (polyundecamethylene adipamide), polyamide 92 (polynonamethylene oxamide), polyamide TMHT (trimethylhexamethylene terephthalamide), polyamide 6T (polyhexamethylene terephthalamide), polyamide 2Me-5T (poly-2-methylpentamethylene terephthalamide; Me represents a methyl group; the same holds true for the description below), polyamide 9T (polynonamethylene terephthalamide), polyamide 2Me-8T (poly-2-methyloctamethylene terephthalamide), polyamide 6I (polyhexamethylene isophthalamide), polyamide 6C (polyhexamethylene cyclohexane dicarboxamide), polyamide 2Me-5C (poly-2-methylpentamethylene cyclohexane dicarboxamide), polyamide 9C (polynonamethylene cyclohexane dicarboxamide), polyamide 2Me-8C (poly-2-methyloctamethylene cyclohexane dicarboxamide), polyamide PACM12 (polybis(4-aminocyclohexyl)methane dodecamide), polyamide dimethyl PACM12 (polybis(3-methyl-aminocyclohexyl)methane dodecamide), polyamide MXD6 (poly-meta-xylylene adipamide), polyamide 10T (polydecamethylene terephthalamide), polyamide 11T (polyundecamethylene terephthalamide), polyamide 12T (polydodecamethylene terephthalamide), polyamide 10C (polydecamethylene cyclohexane dicarboxamide), polyamide 11C (polyundecamethylene cyclohexane dicarboxamide), and polyamide 12C (polydodecamethylene cyclohexane dicarboxamide).

Preferable examples of the polyamide resin include polyamide 6 (polycaproamide), polyamide 66 (polyhexamethylene adipamide), polyamide 610 (polyhexamethylene sebacamide), polyamide 612 (polyhexamethylene dodecamide), polyamide 6T (polyhexamethylene terephthalamide), polyamide 2Me-5T (poly-2-methylpentamethylene terephthalamide), polyamide 9T (polynonamethylene terephthalamide), polyamide 2Me-8T (poly-2-methyloctamethylene terephthalamide), polyamide 6C (polyhexamethylene cyclohexane dicarboxamide), polyamide 2Me-5C (poly-2-methylpentamethylene cyclohexane dicarboxamide), polyamide 9C (polynonamethylene cyclohexane dicarboxamide), polyamide 2Me-8C (poly-2-methyloctamethylene cyclohexane dicarboxamide), polyamide 10T (polydecamethylene terephthalamide), polyamide 10C (polydecamethylene cyclohexane dicarboxamide), and polyamide 6I (polyhexamethylene isophthalamide). These polyamide resins are preferred from the viewpoint of tenacity, strength, and moldability. From similar viewpoints, the polyamide resin more preferably comprises polyamide 6, polyamide 66, polyamide 610, polyamide 612, polyamide 6C, polyamide 2Me-5C, polyamide 9C, polyamide 2Me-8C, or polyamide 10C, further preferably comprises polyamide 66, polyamide 610, or polyamide 612, and still further preferably comprises polyamide 66 (hereinafter, also referred to as "PA66").

The polyamide resin may be a polyamide copolymer obtained by the copolymerization of two or more of the units (monomers) constituting the various polyamides mentioned above.

Examples of the polyamide copolymer include, but are not limited to, polyamide copolymers such as polyamide 66/6I, PA66/6I/6, PA66/6T, PA6T/2Me-5T (Me represents a methyl group), PA9T/2Me-8T, PA6C/2Me-5C, and PA9C/2Me-8C.

Among the various polyamide resins mentioned above, polyamide 6, polyamide 66, polyamide 610, polyamide 66/6, polyamide 66/6I, polyamide 6C/2Me-5C, and polyamide 2Me-5C are more preferred, polyamide 6, polyamide 66, polyamide 66/6, and polyamide 66/6I are further preferred, and polyamide 66 is still further preferred in view of the balance between strength/tenacity and crystallinity.

As a preferred example, the polyamide resin used in the present embodiment preferably comprises a polyamide resin obtained by the polycondensation of a diamine and a dicarboxylic acid, from the viewpoint of heat resistance, strength, and moldability. The polyamide resin used in the present embodiment is more preferably a polyamide resin comprising 50% by mass or more of the polyamide resin obtained by the polycondensation of a diamine and a dicarboxylic acid, further preferably a polyamide resin comprising 70% by mass or more of the polyamide resin obtained by the polycondensation of a diamine and a dicarboxylic acid, still further preferably a polyamide resin comprising 90% by mass or more of the polyamide resin obtained by the polycondensation of a diamine and a dicarboxylic acid, particularly preferably the polyamide resin obtained by the polycondensation of a diamine and a dicarboxylic acid. Examples of the method for allowing the polyamide resin used in the present embodiment to contain the polyamide resin obtained by the polycondensation of a diamine and a dicarboxylic acid include, but are not particularly limited to, containment methods such as copolymerization and alloy (mixing).

For the production of the polyamide resin by the polymerization of predetermined monomers, an end-capping agent can be further added thereto in order to adjust the molecular weight. This end-capping agent is not particularly limited, and any end-capping agent known in the art can be used.

Examples of the end-capping agent include, but are not limited to, monocarboxylic acids, monoamines, acid anhydrides, monoisocyanates, monoacid halides, monoesters, and monoalcohols. Among them, monocarboxylic acids and monoamines are preferred from the viewpoint of the heat stability of the polyamide resin (A). Only one of these end-capping agents may be used alone, or two or more thereof may be used in combination.

The monocarboxylic acid that can be used as the end-capping agent can be any monocarboxylic acid having reactivity with an amino group. Examples thereof include, but are not limited to: aliphatic monocarboxylic acids such as formic acid, acetic acid, propionic acid, butyric acid, valeric acid, caproic acid, caprylic acid, lauric acid, tridecylic acid, myristic acid, palmitic acid, stearic acid, pivalic acid, and isobutyric acid; alicyclic monocarboxylic acids such as cyclohexanecarboxylic acid; and aromatic monocarboxylic acids such as benzoic acid, toluic acid, α-naphthalenecarboxylic acid, β-naphthalenecarboxylic acid, methylnaphthalenecarboxylic acid, and phenylacetic acid. Only one of these monocarboxylic acids may be used alone, or two or more thereof may be used in combination.

The monoamine that can be used as the end-capping agent can be any monoamine having reactivity with a carboxyl group. Examples thereof include, but are not limited to: aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; and aromatic monoamines such as aniline, toluidine, diphenylamine, and naphthylamine. Only one of these monoamines may be used alone, or two or more thereof may be used in combination.

Examples of the acid anhydride that can be used as the end-capping agent include, but are not limited to, phthalic anhydride, maleic anhydride, benzoic anhydride, acetic anhydride, and hexahydrophthalic anhydride. Only one of these acid anhydrides may be used alone, or two or more thereof may be used in combination.

Examples of the monoisocyanate that can be used as the end-capping agent include, but are not limited to, phenyl isocyanate, tolyl isocyanate, dimethylphenyl isocyanate, cyclohexyl isocyanate, butyl isocyanate, and naphthyl isocyanate. Only one of these monoisocyanates may be used alone, or two or more thereof may be used in combination.

Examples of the monoacid halide that can be used as the end-capping agent include, but are not limited to, halogen-substituted monocarboxylic acids of monocarboxylic acids such as benzoic acid, diphenylmethanecarboxylic acid, diphenylsulfonecarboxylic acid, diphenyl sulfoxide carboxylic acid, diphenyl sulfide carboxylic acid, diphenyl ether carboxylic acid, benzophenonecarboxylic acid, biphenylcarboxylic acid, α-naphthalenecarboxylic acid, β-naphthalenecarboxylic acid, and anthracenecarboxylic acid. Only one of these monoacid halides may be used alone, or two or more thereof may be used in combination.

Examples of the monoester that can be used as the end-capping agent include, but are not limited to, glycerin monopalmitate, glycerin monostearate, glycerin monobehenate, glycerin monomontanate, pentaerythritol monopalmitate, pentaerythritol monostearate, pentaerythritol monobehenate, pentaerythritol monomontanate, sorbitan monopalmitate, sorbitan monostearate, sorbitan monobehenate, sorbitan monomontanate, sorbitan dimontanate, sorbitan trimontanate, sorbitol monopalmitate, sorbitol monostearate, sorbitol monobehenate, sorbitol tribehenate, sorbitol monomontanate, and sorbitol dimontanate. Only one of these monoesters may be used alone, or two or more thereof may be used in combination.

Examples of the monoalcohol that can be used as the end-capping agent include, but are not limited to, propanol, butanol, pentanol, hexanol, heptanol, octanol, nonanol, decanol, undecanol, dodecanol, tridecanol, tetradecanol, pentadecanol, hexadecanol, heptadecanol, octadecanol, nonadecanol, eicosanol, docosanol, tricosanol, tetracosanol, hexacosanol, heptacosanol, octacosanol, triacontanol (all of these monoalcohols are in a linear or branched form), oleyl alcohol, behenyl alcohol, phenol, cresol (o-, m-, and p-forms), biphenol (o-, m-, and p-forms), 1-naphthol, and 2-naphthol. Only one of these monoalcohols may be used alone, or two or more thereof may be used in combination.

The melting point of the polyamide resin is not particularly limited and is preferably 200°C or higher and 340°C or lower, more preferably 210°C or higher and 335°C or lower, further preferably 240°C or higher and 330°C or lower. The melting point of the polyamide resin is 200°C or higher, whereby the heat resistance of the polyamide resin composition tends to be improved. Also, the melting point of the polyamide resin is 340°C or lower, whereby thermal decomposition or degradation during the melt processing of the polyamide resin composition tends to be able to be suppressed more effectively.

The melting point of the polyamide resin can be measured according to JIS-K7121. For example, Diamond DSC manufactured by PerkinElmer, Inc. can be used as a measurement apparatus.

The peak temperature of the cold crystallization temperature of the polyamide resin measured by differential scanning calorimetry (DSC) is not particularly limited and is preferably 220°C or higher. The peak temperature of the cold crystallization temperature of the polyamide resin is 220°C or higher, whereby moldability tends to be further improved. The differential scanning calorimetry (DSC) can be carried out according to JIS-K7121 under conditions involving a rate of temperature rise of 20°C/min.

The molecular weight of the raw material polyamide resin (A) or the polyamide resin contained in the polyamide resin composition can be measured by various methods. Examples thereof include molecular weight measurement by GPC (gel permeation chromatography), and solution viscosity. Specifically, the solution viscosity is a viscosity number [VN] measured according to ISO307 (JIS-K6933) or a formic acid relative viscosity [RV] measured according to ASTM-D789. As one example, the measurement according to ISO307 (JIS-K6933) can be carried out using a solution having a polyamide resin concentration of 0.5% by mass in sulfuric acid with 96% concentration at 25°C.

As for conversion to the different specifications described above, for example, a conversion table described in ISO307 (JIS-K6933 can be appropriately used.

In the present specification, the viscosity number [VN] employs the molecular weight of the raw material polyamide resin (A) as an index, and is evaluated such that a higher numeric value of VN means a higher molecular weight (for the same [VN], [RV] is also described within parentheses in the case of PA66).

The viscosity number [VN] of the polyamide resin composition of the present embodiment is 160 mL/g (RV (PA66): 58) or higher and is preferably 165 mL/g or higher and 350 mL/g or lower (RV (PA66): 61 or higher and 477 or lower). The viscosity number [VN] of the polyamide resin composition of the present embodiment is 160 mL/g or higher, whereby impact resistance can be improved. Also, the viscosity number [VN] of the polyamide resin composition of the present embodiment is 350 mL/g or lower, whereby melt processability such as moldability can be secured. The viscosity number [VN] of the polyamide resin composition of the present embodiment is more preferably 175 mL/g or higher and 310 mL/g or lower (RV (PA66): 69 or higher and 306 or lower), further preferably 180 mL/g or higher and 290 mL/g or lower (RV (PA66): 72 or higher and 245 or lower), still further preferably 190 mL/g or higher and 270 mL/g or lower (RV (PA66): 81 or higher and 197 or lower), particularly preferably 200 mL/g or higher and 250 mL/g or lower (RV (PA66): 90 or higher and 157 or lower).

In the present embodiment, the viscosity number [VN] of the polyamide resin composition can be measured by a method described in Examples mentioned later.

Examples of the method for obtaining the polyamide resin composition having the viscosity number [VN] within the range mentioned above include a method which involves appropriately adjusting the molecular weight of the raw material polyamide resin (A).

Examples of the method for adjusting the molecular weight of the raw material polyamide resin (A) include a solid-phase polymerization method which involves heating the raw material polyamide resin (A) in a solid state (e.g., pellet) at a temperature equal to or lower than the melting point to increase the molecular weight, and a catalytic molecular weight-increasing extrusion method which involves adding a molecular weight-increasing catalyst to the raw material polyamide resin (A) and increasing the molecular weight of the raw material polyamide resin (A) by melt extrusion.

In the case of adding an additive such as a reinforcing material (D) to the raw material polyamide resin (A) and producing the polyamide resin composition by melt kneading, the catalytic molecular weight-increasing extrusion method capable of carrying out kneading of the additive and increase in the molecular weight of the raw material polyamide resin (A) at the same time is more preferred than a method, such as the solid-phase polymerization method, which involves increasing the molecular weight of the raw material polyamide resin (A) in another step, because the catalytic molecular weight-increasing extrusion method requires fewer steps and a shorter time. In addition, this method is also preferred because of excellent plasticization at the time of melt processing such as molding.

If necessary, the polyamide resin composition can also be produced by increasing the molecular weight of the raw material polyamide resin (A) in an extruder. In this case, the viscosity number [VN] of the polyamide resin (A) as a raw material for extrusion does not have to be much high. If it is desired to efficiently produce the polyamide resin composition by decreasing loads on an extruder motor and increasing a discharge rate, the viscosity number [VN] of the raw material polyamide resin (A) is preferably 70 mL/g or higher and 200 mL/g or lower, more preferably 90 mL/g or higher and 180 mL/g or lower, further preferably 100 mL/g or higher and 170 mL/g or lower, particularly preferably 120 mL/g or higher and lower than 165 mL/g.

The polymer end of the polyamide resin used in the present embodiment is any of 1) an amino group terminus, 2) a carboxyl group terminus, 3) an end brought about by the end-capping agent, and 4) other ends.

The polymer end of the polyamide resin means the terminal moiety of the polymer chain of a polymer obtained by the polymerization of a dicarboxylic acid and a diamine (optionally including a lactam and/or an aminocarboxylic acid) through an amide bond.

The amino group terminus 1) means that the polymer end is an amino group (-NH2). The end of the polymer chain is derived from the raw material diamine, lactam, or aminocarboxylic acid.

The carboxyl group terminus 2) means that the polymer end is a carboxyl group (-COOH). The end of the polymer chain is derived from the raw material dicarboxylic acid, diamine, lactam, or aminocarboxylic acid.

The end 3) brought about by the end-capping agent means that the polymer end is capped with the end-capping agent added during polymerization, and has a structure derived from the end-capping agent such as a monocarboxylic acid or a monoamine.

Other ends 4) are polymer ends that are not classified into 1) to 3). Examples thereof include an end formed through the deammoniation reaction of an amino group terminus, and an end formed through the decarboxylation reaction of a carboxyl group terminus.

For the quantification of these terminal groups, measurement can be carried out using 1H-NMR as described in Examples mentioned later. For example, the terminus concentration of the amino group terminus can be calculated on the basis of the integration ratio of hydrogen bonded to carbon adjacent to the nitrogen atom of the terminal amino group.

The increase in the molecular weight of the raw material polyamide resin (A) is achieved, for example, by forming an amide bond between the carboxyl group terminus and the amino group terminus through dehydration polycondensation (amidation reaction). This amidation reaction is known to be an equilibrium reaction including reverse reaction. Thus, for further promoting the increase in the molecular weight of the raw material polyamide resin (A) or for maintaining the high-molecular-weight state of the polyamide resin by suppressing the reverse reaction during melt processing such as molding, it is preferred to maximize the product of the carboxyl group terminus concentration [COOH] and the amino group terminus concentration [NH2] in the polyamide resin.

Two polymer ends are present at both ends, respectively, of the polymer chain (in the case of a linear polymer). Thus, the total terminal group concentration varies depending on the molecular weight of the polymer. Specifically, the total terminal group concentration is constant for the same molecular weights. In this respect, a value closer to [COOH] = [NH2] ([COOH] - [NH2] = 0) should be obtained in order to maximize the product of the carboxyl group terminus concentration [COOH] and the amino group terminus concentration [NH2].

In the case of carrying out polymerization for the polyamide resin (e.g., PA66) which is obtained by the polycondensation of a diamine and a dicarboxylic acid, in a general way, an aqueous solution of an equivalent salt of hexamethylenediamine (diamine) and adipic acid (dicarboxylic acid) is used as a raw material, and this raw material is heated for polymerization. However, in such a polymerization method, not only water (water as a solvent in the aqueous solution and condensation water at the time of amide bond formation) but a portion of the diamine is escaped out of the polymerization system by the heating during polymerization, resulting in [COOH] - [NH2] > 30 milliequivalents/kg as the polyamide resin.

Thus, the difference between the carboxyl group terminus concentration [COOH] and the amino group terminus concentration [NH2] ([COOH] - [NH2]) in the polyamide resin contained in the polyamide resin composition of the present embodiment is preferably -25 to 25 milliequivalents/kg. When the difference between the carboxyl group terminus concentration [COOH] and the amino group terminus concentration [NH2] ([COOH] - [NH2]) in the polyamide resin contained in the polyamide resin composition of the present embodiment is 25 milliequivalents/kg or lower, favorable hydrolysis resistance is attained. When this difference is -25 milliequivalents/kg or higher, decomposition gas derived from the terminal amino group can be prevented. Therefore, moldability is improved, and color is improved.

The difference between the carboxyl group terminus concentration [COOH] and the amino group terminus concentration [NH2] ([COOH] - [NH2]) in the polyamide resin contained in the polyamide resin composition of the present embodiment is preferably -15 to 25 milliequivalents/kg, more preferably -5 to 25 milliequivalents/kg, further preferably 0 to 25 milliequivalents/kg, still further preferably 1 to 20 milliequivalents/kg, yet still further preferably 1 to 15 milliequivalents/kg, particularly preferably 5 to 15 milliequivalents/kg.

Examples of the method for producing the polyamide resin having such a terminus concentration include a method which involves adding an amine component to a polyamide resin having a general terminus concentration ([COOH] - [NH2] > 30 milliequivalents/kg) during melt processing such as extrusion to increase the amino group terminus concentration of the polyamide resin, and a production method which involves using a raw material in which monomer raw materials for the polyamide resin are supplemented with an excess of a diamine component compared with the equivalent amounts of the dicarboxylic acid and the diamine in anticipation of the aforementioned amount of the diamine escaped, and polymerizing the raw material.

In the present embodiment, the carboxyl group terminus concentration [COOH] and the amino group terminus concentration [NH2] can be measured by a method described in Examples mentioned later.

(Method for producing polyamide resin (A) as raw material)

Examples of the method for producing the polyamide resin (A) as a raw material include, but are not particularly limited to, the following various methods:

1) a method which involves heating an aqueous solution or an aqueous suspension of a dicarboxylic acid and a diamine, or an aqueous solution or an aqueous suspension of a mixture of dicarboxylic acid and diamine salts with other components such as a lactam and/or an aminocarboxylic acid (hereinafter, this mixture is also referred to as the "mixture"), and performing polymerization while maintaining the molten state (hereinafter, this method is also referred to "thermal melt polymerization method");

2) a method which involves heating an aqueous solution or an aqueous suspension of a dicarboxylic acid and a diamine or the mixture, and isolating the deposited prepolymer ("prepolymer method");

3) a method which involves elevating the degree of polymerization of a polyamide obtained by the thermal melt polymerization method, at a temperature equal to or lower than the melting point while maintaining the solid state ("thermal melt polymerization/solid-phase polymerization method");

4) a method which involves heating an aqueous solution or an aqueous suspension of a dicarboxylic acid and a diamine or the mixture, and further melting the deposited prepolymer again in an extruder such as a kneader to elevate its degree of polymerization ("prepolymer/extrusion polymerization method");

5) a method which involves heating an aqueous solution or an aqueous suspension of a dicarboxylic acid and a diamine or the mixture, and further elevating the degree of polymerization of the deposited prepolymer at a temperature equal to or lower than the melting point of the polyamide while maintaining the solid state ("prepolymer/solid-phase polymerization method");

6) a method which involves polymerizing a dicarboxylic acid and a diamine or the mixture while maintaining the solid state ("monomer/solid-phase polymerization method");

7) a method which involves polymerizing "dicarboxylic acid and diamine salts" or the mixture while maintaining the solid state ("salt/solid-phase polymerization method"); and

8) a method which involves performing polymerization using a dicarboxylic acid halide equivalent to a dicarboxylic acid, and a diamine ("solution method").

For the polyamide resin composition of the present embodiment, the increase in molecular weight can also be sufficiently achieved by the step of increasing the molecular weight of the raw material polyamide resin (A) in an extruder. In this case, for the method for producing the polyamide resin (A) as a raw material, it is unnecessary to intentionally increase the molecular weight of the polyamide resin (A) at a raw material stage. From such a viewpoint, the thermal melt polymerization method or the prepolymer method is preferred because the method requires fewer steps and is capable of easily producing a polyamide resin having a stable molecular weight.

Examples of the polymerization scheme in the method for producing the polyamide resin (A) as a raw material include, but are not limited to, batch polymerization and continuous polymerization. The polymerization apparatus is not particularly limited, and an apparatus known in the art (e.g., an autoclave-type reactor, a tumbler-type reactor, and an extruder-type reactor such as a kneader) can also be used.

(Component (B): Phosphorus compound)

The polyamide resin composition of the present embodiment contains a phosphorus compound (B) (hereinafter, also simply referred to as "component (B)" or "(B)"). The phosphorus compound (B) is not particularly limited as long as the compound contains a phosphorus element. Examples thereof can include phosphoric acid, phosphorous acid, hypophosphorous acid, and derivatives thereof such as esters, metal salts, and amine salts. Only one of these phosphorus compounds (B) may be used alone, or two or more thereof may be used in combination.

Among them, a phosphoric acid compound is preferred as the phosphorus compound (B) from the viewpoint that the compound does not cause discoloration when mixed with heat stabilizers copper iodide and potassium iodide for the polyamide resin.

Examples of the phosphoric acid compound include, but are not particularly limited to, orthophosphoric acid represented by $H_3PO_4$, pyrophosphoric acid (diphosphoric acid) represented by $H_4P_2O$, and metaphosphoric acid (polyphosphoric acid) represented by $(HPO_3)_n$, which are oxo acids of phosphorus, and phosphoric acid derivatives thereof.

Examples of the phosphoric acid derivatives include, but are not particularly limited to: phosphoric acid esters derived from, for example, $H_3PO_4$, by the substitution of one or more H by an organic substituent (examples thereof include, but are not particularly limited to: aliphatic groups such as a methyl group, an ethyl group, a n-propyl group, an i-propyl group, a n-butyl group, an i-butyl group, a t-butyl group, a n-pentyl group, a n-hexyl group, a n-octyl group, a 2-ethylhexyl group, a decyl group, a lauryl group, a tridecyl group, a stearyl group, and an oleyl group; and aromatic groups such as a phenyl group and a biphenyl group); and phosphoric acid metal salts (lithium phosphate, sodium phosphate, potassium phosphate, magnesium phosphate, calcium phosphate, strontium phosphate, zinc phosphate, aluminum phosphate, etc.) and phosphoric acid amine salts (including phosphoric acid ammonium salts, and phosphoric acid diamine salts), which are salts with bases.

A phosphoric acid compound in which H in the molecule is not substituted by an organic substituent is more capable of exerting effects such as mold release properties at the time of molding by addition in a small amount. Therefore, the phosphoric acid compound is preferably at least one member selected from the group consisting of a phosphoric acid and a phosphate, more preferably unsubstituted orthophosphoric acid, pyrophosphoric acid, or metaphosphoric acid, a metal salt thereof, or a salt thereof with a base, further preferably unsubstituted orthophosphoric acid, pyrophosphoric acid, or metaphosphoric acid, or an amine salt thereof.

The phosphorus compound (B) may be in a solid state or in a liquid (including an aqueous solution) state.

The phosphorus compound (B) may be added as it is or may be added in a diluted state such as a master batch, in the process of producing the polyamide resin composition. The master batch is not particularly limited and may be in a pellet, granule, or powder form. A dilution using the polyamide resin is preferred.

For the polyamide resin composition of the present embodiment, the increase in molecular weight can also be sufficiently achieved by the step of increasing the molecular weight of the raw material polyamide resin (A) in an extruder. In this case, the phosphorus compound (B) is preferably a phosphoric acid compound from the viewpoint that the molecular weight of the raw material polyamide resin (A) can be increased in an extruder. Among others, unsubstituted orthophosphoric acid, pyrophosphoric acid, or metaphosphoric acid, a metal salt thereof, or a salt thereof with a base is preferred.

The content of the phosphorus compound (B) in the polyamide resin composition of the present embodiment is 0.5 to 400 mmol in terms of a phosphorus element concentration per kg of the polyamide resin. When the phosphorus compound (B) is contained within the range described above, the polyamide resin composition tends to have favorable mold release properties at the time of molding, color, etc. When the content of the phosphorus compound (B) in the polyamide resin composition is 0.5 mmol or larger in terms of a phosphorus element concentration per kg of the polyamide resin, the polyamide resin composition has favorable mold release properties at the time of molding, color, etc. On the other hand, when the content of the phosphorus compound (B) in the polyamide resin composition is 400 mmol or smaller in terms of a phosphorus element concentration per kg of the polyamide resin, gas from the polyamide resin composition can be prevented during melt processing such as extrusion or molding, and melt processability tends to be favorable. From the same viewpoints as above, the content of the phosphorus compound (B) in the polyamide resin composition is preferably 0.5 to 200 mmol, more preferably 0.5 to 100 mmol, further preferably 1 to 100 mmol, still further preferably 3 to 50 mmol, particularly preferably 5 to 20 mmol, in terms of a phosphorus element concentration per kg of the polyamide resin. The concentration of the phosphorus element contained in the polyamide resin composition can be measured by various methods. Examples thereof include inductively coupled plasma (ICP) spectrometry. Specifically, the phosphorus element concentration (% by mass) in the polyamide resin composition is determined by ICP analysis, while ash in the polyamide resin composition is measured, for example, on the basis of the provision of ISO3451-4. The ash is subtracted from the polyamide resin composition, and the obtained value can be used as the amount of the polyamide resin to determine the phosphorus element concentration (% by mass) in the polyamide resin composition by calculation. The phosphorus element concentration (% by mass) can be converted to a phosphorus element concentration (mol%) by use of the atomic weight of the phosphorus atom (30.97 g/mol) .

((C): Metal element)

In the polyamide resin composition of the present embodiment, examples of the metal element (C) (hereinafter, also simply referred to as "(C)") can include, but are not particularly limited to, metal elements of Groups 1 and 2 in the periodic table, and metal elements such as manganese, iron, nickel, copper, zinc, and aluminum. Use of such a metal element tends to more efficiently deactivate the ability of the component (B) to increase molecular weights in the case of increasing the molecular weight of the raw material polyamide resin (A) in an extruder, and to be able to suppress gelation during molding. A metal element of Group 1 or 2 in the periodic table is more preferred.

The metal element (C) is more preferably a metal element of Group 2 in the periodic table or a metal element such as manganese, iron, nickel, zinc, or aluminum, further preferably a metal element of Group 2 in the periodic table, still further preferably magnesium or calcium, particularly preferably calcium, from the viewpoint that reduction in physical properties upon contact of the polyamide resin composition with a liquid such as water can be prevented. One of these metal elements (C) may be used alone, or two or more thereof may be used in combination.

The content of the metal element (C) in the polyamide resin composition of the present embodiment is 0.5 to 400 mmol per kg of the polyamide resin. The content of the metal element (C) in the polyamide resin composition falls within the range described above, whereby gelation during residence under heat can be suppressed in the polyamide resin composition of the present embodiment. When the content of the metal element (C) in the polyamide resin composition is 0.5 mmol or larger per kg of the polyamide resin, gelation during residence under heat can be sufficiently suppressed in the polyamide resin composition. On the other hand, the content of the metal element (C) in the polyamide resin composition is 400 mmol or smaller per kg of the polyamide resin, whereby reduction in the strength of the polyamide resin composition, for example, can be prevented because of the appropriate amount of the metal element added. From the same viewpoints as above, the content of the metal element (C) in the polyamide resin composition is preferably 0.5 to 200 mmol, more preferably 0.5 to 100 mmol, further preferably 1 to 100 mmol, still further preferably 3 to 50 mmol, particularly preferably 5 to 20 mmol, per kg of the polyamide resin. For intentionally reacting the component (C) with the component (B), it is preferred to set the content (mol) of the component (C) to a level equal to or larger than the content (mol) of the phosphorus element in the component (B).

Examples of the method for allowing the polyamide resin composition to contain the metal element (C) include, but are not particularly limited to, a method which involves adding a metal compound (C2) which is different from the phosphorus compound (B), a method which involves adding the phosphorus compound (B) as a metal salt, and a method which involves adding a metal compound (C2) which is different from the phosphorus compound (B), and reacting the metal compound (C2) with the whole or a portion of the phosphorus compound (B) during melt processing such as extrusion to form a metal salt of the phosphorus compound (B).

For the polyamide resin composition of the present embodiment, the increase in molecular weight can also be sufficiently achieved by the step of increasing the molecular weight of the raw material polyamide resin (A) in an extruder. In this case, the molecular weight of the raw material polyamide resin (A) can be increased by the phosphorus compound (B) in an extruder. The method which involves adding a metal compound (C2) which is different from the phosphorus compound (B), and reacting the metal compound (C2) with the whole or a portion of the phosphorus compound (B) during melt processing such as extrusion to form a metal salt of the phosphorus compound (B) is preferred from the viewpoint that gelation during residence under heat can be suppressed in the polyamide resin composition by deactivating the catalytic effect of increasing molecular weights by the phosphorus compound (B) in the polyamide resin composition.

When the phosphorus compound (B) to be added as a raw material is water-soluble for the production of the polyamide resin composition of the present embodiment by extrusion, a method which involves adding a metal compound (C2) of a metal element of Group 2 in the periodic table or a metal element such as manganese, iron, nickel, zinc, or aluminum, which is different from the phosphorus compound (B), and reacting the metal compound (C2) with the whole or a portion of the phosphorus compound (B) during melt processing such as extrusion to form a lower water-soluble metal salt of the phosphorus compound (B) is preferred from the viewpoint that the elution of a phosphorus component in the polyamide resin composition into a liquid such as water can be prevented upon contact of the polyamide resin composition with the liquid.

In this case, the metal compound (C2) to be added which is different from the phosphorus compound (B) is not limited and is preferably at least one member selected from the group consisting of a metal halide, a metal oxide, a metal hydroxide, and a metal carbonate. In the case of selecting any of them, the catalytic effect of increasing molecular weights by the component (B) tends to be able to be deactivated more efficiently, and gelation during residence under heat tends to be able to be suppressed in the polyamide resin composition. Specific examples of the group descried above include, but are not limited to, lithium halides (lithium iodide, lithium bromide, lithium chloride, and lithium fluoride), lithium oxide, lithium hydroxide, lithium carbonate, sodium halides (sodium iodide, sodium bromide, sodium chloride, and sodium fluoride), sodium oxide, sodium hydroxide, sodium carbonate, magnesium halides (magnesium iodide, magnesium bromide, magnesium chloride, and magnesium fluoride), magnesium oxide, magnesium hydroxide, magnesium carbonate, potassium halides (potassium iodide, potassium bromide, potassium chloride, and potassium fluoride), potassium oxide, potassium hydroxide, potassium carbonate, calcium halides (calcium iodide, calcium bromide, calcium chloride, and calcium fluoride), calcium oxide, calcium hydroxide, calcium carbonate, iron halides (iron iodide, iron bromide, iron chloride, and iron fluoride), iron oxide, iron hydroxide, iron carbonate, copper halides (copper iodide, copper bromide, copper chloride, and copper fluoride), copper oxide, copper hydroxide, copper carbonate, zinc halides (zinc iodide, zinc bromide, zinc chloride, and zinc fluoride), zinc oxide, zinc hydroxide, zinc carbonate, aluminum halides (aluminum iodide, aluminum bromide, aluminum chloride, and aluminum fluoride), aluminum oxide, aluminum hydroxide, and aluminum carbonate. Only one of these metal compounds (C2) which are different from the phosphorus compound (B) may be used, or two or more thereof may be used in combination.

The metal compound (C2) is preferably lithium iodide, lithium bromide, lithium oxide, lithium hydroxide, lithium carbonate, sodium iodide, sodium bromide, sodium oxide, sodium hydroxide, sodium carbonate, magnesium iodide, magnesium bromide, magnesium oxide, magnesium hydroxide, magnesium carbonate, potassium iodide, potassium bromide, potassium oxide, potassium hydroxide, potassium carbonate, calcium iodide, calcium bromide, calcium oxide, calcium hydroxide, calcium carbonate, iron iodide, iron bromide, iron oxide, iron hydroxide, iron carbonate, copper iodide, copper bromide, copper oxide, copper hydroxide, copper carbonate, zinc iodide, zinc bromide, zinc oxide, zinc hydroxide, zinc carbonate, aluminum iodide, aluminum bromide, aluminum oxide, aluminum hydroxide, or aluminum carbonate, from the viewpoint of reducing the corrosion of a processing machine such as an extruder or a molding machine. More preferred examples thereof include lithium iodide, lithium oxide, lithium carbonate, sodium iodide, sodium oxide, sodium carbonate, magnesium iodide, magnesium oxide, magnesium hydroxide, magnesium carbonate, potassium iodide, potassium oxide, potassium carbonate, calcium iodide, calcium oxide, calcium hydroxide, calcium carbonate, iron iodide, iron oxide, iron hydroxide, iron carbonate, copper iodide, copper oxide, copper hydroxide, copper carbonate, zinc iodide, zinc oxide, zinc hydroxide, zinc carbonate, aluminum oxide, aluminum hydroxide, and aluminum carbonate.

From the viewpoint of efficiently deactivating the phosphorus compound (B), further preferred examples of the metal compound (C2) include lithium iodide, lithium oxide, sodium iodide, sodium oxide, magnesium iodide, magnesium oxide, magnesium hydroxide, potassium iodide, potassium oxide, calcium iodide, calcium oxide, calcium hydroxide, iron iodide, iron oxide, iron hydroxide, copper iodide, copper oxide, copper hydroxide, zinc iodide, zinc oxide, zinc hydroxide, aluminum oxide, and aluminum hydroxide. Still further preferred examples thereof include lithium iodide, lithium oxide, sodium iodide, sodium oxide, magnesium iodide, magnesium oxide, magnesium hydroxide, potassium iodide, potassium oxide, calcium iodide, calcium oxide, calcium hydroxide, aluminum oxide, and aluminum hydroxide. Yet still further preferred examples thereof include potassium iodide, magnesium oxide, magnesium hydroxide, calcium oxide, and calcium hydroxide.

The metal compound (C2) is more preferably a compound containing a metal element of Group 2 in the periodic table, further preferably a compound containing magnesium or a compound containing calcium, particularly preferably a compound containing calcium, from another viewpoint, i.e., from the viewpoint that the elution of a phosphorus component in the polyamide resin composition into a liquid such as water can be prevented upon contact of the polyamide resin composition with the liquid, as mentioned above.

For the production of the polyamide resin composition of the present embodiment by the method which involves adding a metal compound (C2) which is different from the phosphorus compound (B) or the method which involves adding a metal compound (C2) which is different from the phosphorus compound (B), and reacting the metal compound (C2) with the whole or a portion of the phosphorus compound (B) during melt processing such as extrusion to form a metal salt of the phosphorus compound (B), the amount of the metal compound (C2) added which is different from the phosphorus compound (B) is preferably 0.5 to 400 mmol in terms of a metal element per kg of the polyamide resin. The content of the metal element (C) in the polyamide resin composition falls within the range described above, whereby gelation during residence under heat can be suppressed in the polyamide resin composition of the present embodiment. When the content of the metal element (C) in the polyamide resin composition is 0.5 mmol or larger per kg of the polyamide resin, gelation during residence under heat can be sufficiently suppressed in the polyamide resin composition. On the other hand, the content of the metal element (C) in the polyamide resin composition is 400 mmol or smaller per kg of the polyamide resin, whereby reduction in the strength of the polyamide resin composition, for example, can be prevented because of the appropriate amount of the metal element added. From the same viewpoints as above, the content of the metal element (C) in the polyamide resin composition is preferably 0.5 to 200 mmol, more preferably 0.5 to 100 mmol, further preferably 1 to 100 mmol, still further preferably 3 to 50 mmol, particularly preferably 5 to 20 mmol, per kg of the polyamide resin. For intentionally reacting the component (C) with the component (B), it is preferred to set the content (mol) of the component (C) to a level equal to or larger than the content (mol) of the phosphorus element in the component (B).

In order to add the metal compound (C2) which is different from the phosphorus compound (B), the metal compound (C2) may be added as it is or may be added in a state such as a master batch. The master batch is not particularly limited and may be in a pellet, granule, or powder form. A dilution using the raw material polyamide resin (A) is preferred.

For the polyamide resin composition of the present embodiment, the increase in molecular weight can also be sufficiently achieved by the step of increasing the molecular weight of the raw material polyamide resin (A) in an extruder. In this case, the molecular weight of the raw material polyamide resin (A) can be increased by the phosphorus compound (B) in an extruder. It is preferred to knead the raw material polyamide resin (A) and the phosphorus compound (B), and add the metal compound (C2) which is different from the phosphorus compound (B) after a first degassing operation for the obtained kneaded product, from the viewpoint that gelation during residence under heat can be suppressed in the polyamide resin composition by deactivating the catalytic effect of increasing molecular weights by the phosphorus compound (B) in the polyamide resin composition. To be strict, however, a metal compound may be mixed into the raw material polyamide resin (A). When the amount of the metal compound mixed in the raw material polyamide resin (A) is a small amount with respect to the amount of the metal compound (C2) added which is different from the phosphorus compound (B), the metal compound may be mixed in the raw material polyamide resin (A) before the first degassing operation because influence on increase in the molecular weight of the raw material polyamide resin (A) is not inhibited. The amount of the metal compound component that may be mixed in the raw material polyamide resin (A) before the first degassing operation can be any amount without inhibiting the desired effect of the present embodiment and is preferably an equivalent of 20% or less, more preferably an equivalent of 10% or less, further preferably an equivalent of 5% or less, still further preferably an equivalent of 1% or less, of the amount of the metal compound component (C2) added which is different from the phosphorus compound (B), in terms of the equivalent amount of the metal compound component.

(Apatite-based compound)

In the polyamide resin composition of the present embodiment, the apatite-based compound is represented by, for example, the following general formula:

$$(A)\qquad \mathrm{A_{10-z}(HPO_4)_z(PO_4)_{6-z}(X)_{2-z} \cdot nH_2O}$$

wherein $0 \leq z < 2$, $0 \leq n \leq 16$, A represents a metal element, and X represents an anion or an anion compound.

The apatite-based compound is synthesized using, for example, a wet method which involves reacting calcium hydroxide with phosphoric acid in an aqueous solution of approximately pH 8, or a hydrothermal method which involves subjecting calcium monohydrogen phosphate to high-temperature and high-pressure conditions of approximately 200°C and 1.47 MPa (gauge pressure).

The apatite-based compound can be confirmed by measuring the wide-angle X-ray diffraction of the polyamide resin composition. Alternatively, the apatite-based compound can also be confirmed by eluting the polyamide resin by the dipping of the polyamide resin composition in a solvent capable of dissolving polyamides, such as phenol, and measuring the wide-angle X-ray diffraction of the remaining separated component. To be more specific, the wide-angle X-ray diffraction of the separated component can be measured using copper K$\alpha$ (wavelength $\lambda$ = 0.1542 nm) as a source of X-ray to confirm that peaks of the (002) plane exist at diffraction angles (2$\theta$) of 25.5 to 26.5 degrees and further, peaks of the (300) plane exist at diffraction angles (2$\theta$) of 32.5 to 33.5 degrees.

The content of the apatite-based compound can be determined, after the confirmation of the presence of the apatite compound by the qualitative confirmation described above, for example, by measuring the ignition loss (Ig.loss) of the polyamide resin composition according to JIS R3420 and determining the content from the amount of decrease in the weight thereof. Specifically, approximately 1 g of the polyamide resin composition after thorough drying is weighed into a platinum dish, ashed in an electric furnace of 650 $\pm$ 20°C, and cooled, followed by the measurement of the weight thereof to quantify the content of the apatite-based compound.

In the polyamide resin composition of the present embodiment, the content of the apatite-based compound is 0.3 parts by mass or smaller based on 100 parts by mass of the polyamide resin.

When the content of the apatite-based compound in the polyamide resin composition is 0.3 parts by mass or smaller based on 100 parts by mass of the polyamide resin, mold release properties at the time of molding and tenacity (tensile elongation) can be sufficiently exerted. In the polyamide resin composition of the present embodiment, the content of the apatite-based compound is preferably 0.1 parts by mass or smaller, more preferably 0 parts by mass, based on 100 parts by mass of the polyamide resin. Specifically, it is preferred that the polyamide resin composition of the present embodiment should exhibit no peak at diffraction angles (2$\theta$) of 25.5 to 26.5 degrees and 32.5 to 33.5 degrees in wide-angle X-ray diffraction.

(Component (D): Reinforcing material)

In the polyamide resin composition of the present embodiment, a reinforcing material (D) (hereinafter, also simply referred to as "component (D)" or "(D)") can be used as an optional component. Specifically, it is preferred that the polyamide resin composition of the present embodiment should further contain the reinforcing material (D). The reinforcing material (D) is not limited as long as the reinforcing material improves the strength and/or rigidity of materials. Examples thereof include glass fiber, carbon fiber, calcium silicate fiber, potassium titanate fiber, aluminum borate fiber, glass flakes, talc, kaolin, mica, hydrotalcite, calcium carbonate, zinc carbonate, zinc oxide, calcium monohydrogen phosphate, wollastonite, silica, zeolite, alumina, boehmite, aluminum hydroxide, titanium oxide, silicon oxide, magnesium oxide, calcium silicate, sodium aluminosilicate, magnesium silicate, Ketjen black, acetylene black, farness black, carbon nanotubes, graphite, brass, copper, silver, aluminum, nickel, iron, calcium fluoride, montmorillonite, and swellable fluorine mica. Among them, glass fiber, carbon fiber, glass flakes, talc, kaolin, mica, calcium carbonate, calcium monohydrogen phosphate, wollastonite, silica, carbon nanotubes, graphite, calcium fluoride, montmorillonite, and swellable fluorine mica are preferred from the viewpoint of enhancing strength and rigidity. More preferred examples thereof include glass fiber, carbon fiber, wollastonite, talc, mica, kaolin, and silicon nitride. Only one of these reinforcing materials (D) may be used alone, or two or more thereof may be used in combination.

It is more preferred that the glass fiber or the carbon fiber described above should have a number-average fiber diameter of 3 to 30 $\mu$m, a weight-average fiber length of 100 to 750 $\mu$m in the polyamide resin composition, and an aspect ratio between the weight-average fiber length and the number-average fiber diameter (value obtained by dividing the weight-average fiber length by the number-average fiber diameter) of 10 to 100, from the viewpoint that excellent mechanical characteristics can be imparted to the polyamide resin composition.

It is more preferred that the wollastonite described above should have a number-average fiber diameter of 3 to 30 $\mu$m, a weight-average fiber length of 10 to 500 $\mu$m in the polyamide resin composition, and an aspect ratio of 3 to 100, from the viewpoint that excellent mechanical characteristics can be imparted to the polyamide resin composition.

It is more preferred that the talc, the mica, the kaolin, and the silicon nitride should have a number-average fiber diameter of 0.1 to 3 $\mu$m, from the viewpoint that excellent mechanical characteristics can be imparted to the polyamide resin composition.

In this context, as for the number-average fiber diameter and the weight-average fiber length, the polyamide resin composition is placed in an electric furnace, and the organic matter contained therein is incinerated. For example, 100 or more filaments of the reinforcing material (D) are arbitrarily selected from the residue and observed under a scanning electron microscope (SEM). The fiber diameters of these filaments of the reinforcing material (D) can be measured to thereby measure the number-average fiber diameter. Their fiber lengths can be measured using a SEM photograph taken at a magnification of $\times$1000 to thereby determine the weight-average fiber length.

The reinforcing material (D) may be surface-treated with a silane coupling agent. Examples of the silane coupling agent include, but are not limited to: aminosilanes such as $\gamma$-aminopropyltriethoxysilane, $\gamma$-aminopropyltrimethoxysilane, and N-$\beta$-(aminoethyl)-$\gamma$-aminopropylmethyldimethoxysilane; mercaptosilanes such as $\gamma$-mercaptopropyltrimethoxysilane

and γ-mercaptopropyltriethoxysilane; epoxysilanes; and vinylsilanes. Among them, aminosilanes are preferred.

The glass fiber or the carbon fiber may further contain a sizing agent. Examples of the sizing agent include, but are not limited to, a copolymer containing a carboxylic anhydride-containing unsaturated vinyl monomer and an unsaturated vinyl monomer other than the carboxylic anhydride-containing unsaturated vinyl monomer as constitutional units, epoxy compounds, polycarbodiimide compounds, polyurethane resins, an acrylic acid homopolymer, a copolymer of acrylic acid and an additional copolymerizable monomer, and salts thereof with primary, secondary, and tertiary amines. One of these sizing agents may be used alone, or two or more thereof may be used in combination. Particularly, a copolymer containing a carboxylic anhydride-containing unsaturated vinyl monomer and an unsaturated vinyl monomer other than the carboxylic anhydride-containing unsaturated vinyl monomer as constitutional units, an epoxy compound, a polycarbodiimide compound, and a polyurethane resin, and a combination thereof are preferred, and a copolymer containing a carboxylic anhydride-containing unsaturated vinyl monomer and an unsaturated vinyl monomer other than the carboxylic anhydride-containing unsaturated vinyl monomer as constitutional units, a polycarbodiimide compound, and a polyurethane resin, and a combination thereof are more preferred, from the viewpoint of the mechanical strength of the polyamide resin composition.

In the copolymer containing a carboxylic anhydride-containing unsaturated vinyl monomer and an unsaturated vinyl monomer other than the carboxylic anhydride-containing unsaturated vinyl monomer as constitutional units, examples of the carboxylic anhydride-containing unsaturated vinyl monomer include, but are not limited to, maleic anhydride, itaconic anhydride, and citraconic anhydride. Among them, maleic anhydride is preferred.

In this context, the unsaturated vinyl monomer other than the carboxylic anhydride-containing unsaturated vinyl monomer refers to an unsaturated vinyl monomer different from the carboxylic anhydride-containing unsaturated vinyl monomer. Examples of the unsaturated vinyl monomer other than the carboxylic anhydride-containing unsaturated vinyl monomer include, but are not limited to, styrene, α-methylstyrene, ethylene, propylene, butadiene, isoprene, chloroprene, 2,3-dichlorobutadiene, 1,3-pentadiene, cyclooctadiene, methyl methacrylate, methyl acrylate, ethyl acrylate, and ethyl methacrylate. Particularly, styrene or butadiene is preferred. Among the combinations thereof, one or more members selected from the group consisting of a copolymer of maleic anhydride and butadiene, a copolymer of maleic anhydride and ethylene, and a copolymer of maleic anhydride and styrene, and a mixture thereof are more preferred.

The copolymer containing a carboxylic anhydride-containing unsaturated vinyl monomer and an unsaturated vinyl monomer other than the carboxylic anhydride-containing unsaturated vinyl monomer as constitutional units has a weight-average molecular weight of preferably 2,000 or higher. The weight-average molecular weight is more preferably 2,000 to 1,000,000, further preferably 2,000 to 1,000,000, from the viewpoint of improvement in the flowability of the polyamide resin composition. In the present specification, the weight-average molecular weight is a value measured by GPC.

Examples of the epoxy compound include, but are not limited to: aliphatic epoxy compounds such as ethylene oxide, propylene oxide, butene oxide, pentene oxide, hexene oxide, heptene oxide, octene oxide, nonene oxide, decene oxide, undecene oxide, dodecene oxide, pentadecene oxide, and eicosene oxide; alicyclic epoxy compounds such as glycidol, epoxypentanol, 1-chloro-3,4-epoxybutane, 1-chloro-2-methyl-3,4-epoxybutane, 1,4-dichloro-2,3-epoxybutane, cyclopentene oxide, cyclohexene oxide, cycloheptene oxide, cyclooctene oxide, methylcyclohexene oxide, vinylcyclohexene oxide, and epoxidized cyclohexene methyl alcohol; terpenic epoxy compounds such as pinene oxide; aromatic epoxy compounds such as styrene oxide, p-chlorostyrene oxide, and m-chlorostyrene oxide; epoxidized soybean oil; and epoxidized flaxseed oil.

The polycarbodiimide compound is obtained by condensing compounds containing one or more carbodiimide groups (-N=C=N-).

The degree of condensation of the polycarbodiimide compound is preferably 1 to 20, more preferably 1 to 10. When the degree of condensation of the polycarbodiimide compound falls within the range of 1 to 20, a more favorable aqueous solution or aqueous dispersion tends to be obtained. When the degree of condensation of the polycarbodiimide compound falls within the range of 1 to 10, a much more favorable aqueous solution or aqueous dispersion tends to be obtained.

The polycarbodiimide compound is preferably a polycarbodiimide compound partially having a polyol segment. By having the polyol segment, the polycarbodiimide compound tends to be readily rendered water-soluble and tends to be usable more suitably as the sizing agent for glass fiber or carbon fiber.

Such a polycarbodiimide compound is obtained by the decarboxylation reaction of a diisocyanate compound in the presence of a carbodiimidizing catalyst known in the art such as 3-methyl-1-phenyl-3-phospholene-1-oxide. An aromatic diisocyanate, an aliphatic diisocyanate, or an alicyclic diisocyanate, or a mixture thereof can be used as the diisocyanate compound. Examples thereof include, but are not limited to, 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcyclohexane diisocyanate, tetramethyl xylylene diisocyanate, 2,6-diisopropylphenyl isocyanate, and 1,3,5-triisopropylbenzene-2,4-diisocyanate. Any of these diisocyanate compounds are carbodiimidized to obtain a polycarbodiimide compound having two terminal isocyanate groups. Among them, dicyclohexylmethane carbodiimide can be suitably used from the viewpoint of improvement in reactivity.

A polycarbodiimide compound having one terminal isocyanate group is obtained by, for example, a method which involves carbodiimidizing a monoisocyanate compound in an equimolar amount with respect to the polycarbodiimide compound having two terminal isocyanate groups, or a method which involves reacting the polycarbodiimide compound having two terminal isocyanate groups with a polyalkylene glycol monoalkyl ether in equimolar amounts to form a urethane bond. Examples of the monoisocyanate compound include, but are not limited to, hexyl isocyanate, phenyl isocyanate, and cyclohexyl isocyanate. Examples of the polyalkylene glycol monoalkyl ether include, but are not limited to, polyethylene glycol monomethyl ether and polyethylene glycol monoethyl ether.

The polyurethane resin is not particularly limited as long as the polyurethane resin is generally used as the sizing agent. For example, a polyurethane resin synthesized from an isocyanate such as m-xylylene diisocyanate (XDI), 4,4'-methylenebis(cyclohexyl isocyanate) (HMDI), or isophorone diisocyanate (IPDI), and a polyester or polyether diol can be suitably used.

The weight-average molecular weight of the acrylic acid homopolymer (polyacrylic acid) is preferably 1,000 to 90,000, more preferably 1,000 to 25,000.

Examples of the monomer that forms a copolymer with the acrylic acid constituting the copolymer of the acrylic acid and an additional copolymerizable monomer include, but are not limited to, one or more members selected from the group consisting of acrylic acid, maleic acid, methacrylic acid, vinylacetic acid, crotonic acid, isocrotonic acid, fumaric acid, itaconic acid, citraconic acid, and mesaconic acid among monomers having a hydroxy group and/or a carboxyl group (except for the case of the acrylic acid alone). It is preferred that the additional copolymerizable monomer should have one or more ester monomers among the monomers described above.

The acrylic acid polymer (including both of a homopolymer and a copolymer) may be in the form of a salt. Examples of the salt of the acrylic acid polymer include, but are not limited to, primary, secondary, or tertiary amine salts. Examples thereof include, but are not limited to, triethylamine salt, triethanolamine salt, and glycine salt. The degree of neutralization is preferably 20 to 90%, more preferably 40 to 60%, from the viewpoint of improvement in the stability of a mixed solution with other concomitant agents (silane coupling agent, etc.) and reduction in amine odor.

The weight-average molecular weight of the salt-forming acrylic acid polymer is not particularly limited and is preferably in the range of 3,000 to 50,000. The weight-average molecular weight is preferably 3,000 or higher from the viewpoint of improvement in glass fiber or carbon fiber sizing properties and is preferably 50,000 or lower from the viewpoint of improvement in the mechanical characteristics of the resulting polyamide resin composition.

The glass fiber or the carbon fiber is obtained through continuous reaction by applying the sizing agent mentioned above to glass fiber or carbon fiber using a method known in the art such as a roller-type applicator in a glass fiber or carbon fiber production process known in the art, and drying the fiber strand thus produced. The fiber strand may be used directly as a roving or may be used as a chopped glass strand through a further cutting step. The sizing agent is preferably applied (added) at a solid content corresponding to 0.2 to 3% by mass, more preferably 0.3 to 2% by mass, based on 100% by mass of the glass fiber or the carbon fiber. The amount of the sizing agent added is preferably 0.2% by mass or more in terms of a solid content based on 100% by mass of the glass fiber or the carbon fiber from the viewpoint of maintaining the bundling of the glass fiber or the carbon fiber. On the other hand, the amount of the sizing agent added is preferably 3% by mass or less from the viewpoint of improvement in the heat stability of the polyamide resin composition. The drying of the strand may be carried out after the cutting step, or the strand may be cut after the drying of the strand.

Since the reinforcing material (D) is an optional component in the polyamide resin composition of the present embodiment, the content thereof is not particularly limited and is preferably 10 to 250 parts by mass of the reinforcing material (D) based on 100 parts by mass of the polyamide resin. When the content of the reinforcing material (D) is 10 parts by mass or larger based on 100 parts by mass of the polyamide resin, the better effect of improving strength tends to be obtained. Also, the content of the reinforcing material (D) is 250 parts by mass or smaller based on 100 parts by mass of the polyamide resin, whereby more favorable productivity tends to be obtained in the extrusion step of the polyamide resin composition. From the same viewpoints as above, the content of the reinforcing material (D) is preferably 20 to 150 parts by mass, more preferably 25 to 100 parts by mass, further preferably 30 to 60 parts by mass, based on 100 parts by mass of the polyamide resin.

(Amine component (E))

The polyamide resin composition of the present embodiment can also contain an amine component (E) as an optional component. The amine component (E) is a compound having a monovalent functional group (-NH$_2$, -NHR, or -NRR') obtained by the removal of hydrogen from ammonia, primary amine, or secondary amine. In the case of adding the amine component (E), for example, at the time of raw material extrusion in the production of the polyamide resin composition, the amine component (E) is preferably a compound having two or more -$NH_2$ groups for increasing the amino group terminus of the polyamide resin.

Examples of the compound having two or more -$NH_2$ groups include, but are not particularly limited to, diamines, triamines, and prepolymers (oligomers) of various polymers having many amino group termini. Among them, the amine component (E) is preferably a diamine and/or a polyamide resin prepolymer (oligomer) having an amino group terminus concentration [NH2] higher than a carboxyl group terminus concentration [COOH], from the viewpoint of, for example, compatibility and kneading properties during the extrusion of the raw materials for the polyamide resin composition. The difference between the amino group terminus concentration [NH2] and the carboxyl group terminus concentration [COOH] ([NH2] - [COOH]) in the polyamide resin prepolymer is preferably 10 to 20000 milliequivalents/kg, more preferably 50 to 10000 milliequivalents/kg, further preferably 100 to 5000 milliequivalents/kg, still further preferably 300 to 1000 milliequivalents/kg.

Examples of the method for producing the polyamide resin prepolymer (oligomer) having many amino group termini include, but are not particularly limited to, a method which involves adding an excessive amount of a diamine to an aqueous solution of an equivalent salt of the diamine and a dicarboxylic acid, followed by polymerization, and a method which involves discontinuing the polymerization to obtain a polyamide resin prepolymer (oligomer) with a lower molecular weight.

In the case of allowing the polyamide resin composition of the present embodiment to contain the diamine, the diamine may be contained as it is or may be contained as a diamine salt with an acid (carbonic acid, phosphoric acid, etc.).

In the polyamide resin composition of the present embodiment, the amine component (E) may be contained as it is or may be contained in a diluted state such as a master batch. The form of the amine component (E) is not particularly limited and may be pellets, granules, or a powder.

In the case of allowing the polyamide resin composition of the present embodiment to contain the amine component (E), it is preferred that a reaction product of the phosphorus compound (B) and the amine component (E), which has been obtained by reacting the phosphorus compound with the amine component in advance, should be added to the polyamide resin (A).

In the case of allowing the polyamide resin composition of the present embodiment to contain the amine component (E), the content of the amine component (E) is preferably 0.5 to 1000 mmol per kg of the polyamide resin. The polyamide resin composition of the present embodiment contains the amine component (E) within the range described above, whereby the molecular weight of the polyamide resin is increased, and impact resistance can be improved. The content of the amine component (E) is preferably 1 to 500 mmol, more preferably 2 to 300 mmol, further preferably 3 to 100 mmol, still further preferably 4 to 50 mmol, particularly preferably 5 to 20 mmol, per kg of the polyamide resin. When the amine component (E) is a prepolymer (oligomer), the molecular weight measurement of the prepolymer (oligomer) by GPC is carried out, and the obtained number-average molecular weight (Mn) is regarded as the molecular weight of the amine component (E) to calculate the content of the amine component (E).

(Additional component that may be contained in polyamide resin composition)

The polyamide resin composition of the present embodiment can contain an additional component, if necessary, in addition to the components mentioned above without impairing the object of the present embodiment. Examples of the additional component include, but are not limited to, other polymers and usual additives for use in the raw material polyamide resin (A), for example, moldability-improving agents, colorants, flame retardants, plasticizers, stabilizers, antioxidants, ultraviolet absorbers, and crystal nucleating agents.

Examples of other polymers described above include, but are not limited to, polyethylene, polypropylene, polystyrene, ABS resins, polyacetal, polyethylene terephthalate, polybutylene terephthalate, polycarbonate, (modified) polyphenylene ether, polyphenylene sulfide, cycloolefin polymers, liquid-crystal polyester, polyether imide, polysulfone, polyether sulfone, polyamide-imide, thermoplastic polyimide, polyether ketone, polyether ether ketone, fluorine resins, and polybenzimidazole.

Examples of the moldability-improving agents include, but are not limited to, higher fatty acids, higher fatty acid metal salts, higher fatty acid esters, and higher fatty acid amides.

Examples of the higher fatty acids include, but are not limited to, saturated or unsaturated linear or branched aliphatic monocarboxylic acids having 8 to 40 carbon atoms such as stearic acid, palmitic acid, behenic acid, erucic acid, oleic acid, lauric acid, and montanic acid. Among them, stearic acid and montanic acid are preferred from the viewpoint of suppression of gas generation during melt processing and suppression of deposits on a mold during a molding process.

The higher fatty acid metal salts are metal salts of higher fatty acids. The metal elements constituting the metal salts are preferably elements of Groups 1, 2, and 3 in the periodic table, zinc, and aluminum, more preferably calcium, sodium, potassium, magnesium. Examples of the higher fatty acid metal salts include, but are not limited to, calcium stearate, aluminum stearate, zinc stearate, magnesium stearate, calcium montanate, sodium montanate, and calcium palmitate. Among them, metal salts of montanic acid and metal salts of stearic acid are preferred from the viewpoint of suppression of gas generation during melt processing and suppression of deposits on a mold during a molding process.

The higher fatty acid esters are esterification products of higher fatty acids and alcohols. Among them, an ester of an aliphatic carboxylic acid having 8 to 40 carbon atoms and an aliphatic alcohol having 8 to 40 carbon atoms is preferred from the viewpoint of suppression of gas generation during melt processing and suppression of deposits on a mold during a molding process. In this context, those mentioned above can be used as the higher fatty acids. Examples of the aliphatic alcohol include, but are not limited to, stearyl alcohol, behenyl alcohol, and lauryl alcohol. Examples of the higher fatty acid esters include, but are not limited to, stearyl stearate and behenyl behenate.

The higher fatty acid amides are amide compounds of higher fatty acids. Examples of the higher fatty acid amides include, but are not limited to, stearic acid amide, oleic acid amide, erucic acid amide, ethylenebisstearamide, ethylenebisoleamide, N-stearyl stearamide, and N-stearyl erucamide. Among them, stearic acid amide, erucic acid amide, ethylenebisstearamide, and N-stearyl erucamide are preferred, and ethylenebisstearamide and N-stearyl erucamide are more preferred, from the viewpoint of suppression of gas generation during melt processing and suppression of deposits on a mold during a molding process.

Only one of these higher fatty acids, higher fatty acid metal salts, higher fatty acid esters, or higher fatty acid amides may be used alone, or two or more thereof may be used in combination.

Examples of the colorants include, but are not limited to: dyes such as nigrosine; pigments such as titanium oxide and carbon black; metal particles such as aluminum, colored aluminum, nickel, tin, copper, gold, silver, platinum, iron oxide, stainless, and titanium; and metallic pigments such as pearl pigments made of mica, colored graphite, colored glass fiber, and colored glass flakes.

The flame retardants are preferably non-halogenated flame retardants and brominated flame retardants from the viewpoint of suppression of gas generation during melt processing and suppression of deposits on a mold during a molding process.

Examples of the non-halogenated flame retardants include, but are not limited to: phosphorus flame retardants such as red phosphorus, ammonium phosphate, and ammonium polyphosphate; inorganic compound flame retardants including metal hydroxides or hydrates of inorganic metal compounds such as aluminum hydroxide, magnesium hydroxide, dolomite, hydrotalcite, calcium hydroxide, barium hydroxide, basic magnesium carbonate, zirconium hydroxide, tin oxide, zinc stannate, and zinc hydroxystannate, and boric acid compounds such as zinc borate, zinc metaborate, and barium metaborate; triazine flame retardants such as melamine, melam, melem, melon (product obtained by the deammoniation of 3 molecules from 3 melem molecules at 300°C or higher), melamine cyanurate, melamine phosphate, melamine polyphosphate, succinoguanamine, adipoguanamine, methylglutaroguanamine, and melamine resins; and silicone flame retardants such as silicone resins, silicone oil, and silica.

Examples of the brominated flame retardants include, but are not limited to, at least one flame retardant selected from compounds consisting of brominated polystyrene, brominated polyphenylene ether, brominated bisphenol-type epoxy polymers and brominated cross-linked aromatic polymers. A flame retardant aid such as antimony trioxide can also be used in combination therewith.

Examples of the plasticizers include, but are not limited to, aliphatic alcohols, aliphatic amides, aliphatic bisamides, bisurea compounds, polyethylene wax, octyl p-oxybenzoate, and N-butylbenzenesulfonamide.

The stabilizers may include antidegradants for the purpose of prevention of thermal degradation and discoloration under heat, improvement in heat aging resistance and weather resistance, etc.

Examples of the antidegradants include, but are not limited to: copper compounds such as copper acetate and copper iodide; phenol stabilizers such as hindered phenol compounds; phosphite stabilizers: hindered amine stabilizers; triazine stabilizers; and sulfur stabilizers.

Examples of the antioxidants include, but are not limited to, alkylphenol, alkylene bisphenol, and alkylphenol thioether.

Examples of the ultraviolet absorbers include, but are not limited to, salicylic acid ester, benzotriazole, and hydroxybenzophenone.

Examples of the crystal nucleating agents include, but are not limited to, boron nitride and talc.

(Rate of phosphorus element concentration retention)

In the polyamide resin composition of the present embodiment, it is preferred that the phosphorus element concentration in the composition after dipping treatment for 24 hours in water of 80°C should be retained at 55% or more with respect to the phosphorus element concentration in the initial (before the dipping treatment) composition, particularly, from the viewpoint of suppressing reduction in physical properties upon contact with a liquid such as water. This will be described below.

The composition is dipped for 24 hours in water of 80°C and then isolated, and the phosphorus element in the composition is quantified. When the phosphorus element concentration in the initial (before the dipping treatment) composition is defined as P0 and the phosphorus element concentration in the composition after the dipping treatment is defined as P1, the rate of phosphorus element concentration retention (%) can be determined according to the following expression (1):

```
Rate of phosphorus element concentration retention (%) =

100 × P1/P0   Expression (1)
```

An exemplary dipping test will be described below. Pellets of the composition are freeze-crushed into a powder. At this time, the phosphorus element concentration in the composition is measured (P0). 1.0 g of the powder is placed in a container containing 50 mL of water (distilled water) of 80°C, which is then capped and kept at a water temperature of 80°C for 24 hours. Then, the composition powder is collected by filtration and dried, and the phosphorus element concentration of the resulting powder is measured (PI).

In the polyamide resin composition of the present embodiment, the rate of phosphorus element concentration retention after the dipping treatment is preferably 55 to 100%, more preferably 58 to 98%, further preferably 60 to 97%, still further preferably 63 to 96%, particularly preferably 65 to 95%. When the polyamide resin composition of the present embodiment has the rate of phosphorus element concentration retention within the range described above after the dipping treatment, reduction in physical properties can be suppressed upon contact with a liquid such as water (the rate of retention can be enhanced).

Examples of the method for obtaining the polyamide resin composition having the rate of phosphorus element concentration retention within the range described above after the dipping treatment include, but are not particularly limited to, a method which involves controlling the content of the phosphorus compound (B) within the range mentioned above with respect to the polyamide resin. In the case of allowing the polyamide resin composition to contain the metal element (C), examples thereof include a method which involves controlling the content of the metal element (C) within the range mentioned above, and a method which involves appropriately selecting the type of the metal element (C). The type of the metal element (C) is preferably a metal element of Group 2 in the periodic table, more preferably magnesium or calcium, particularly preferably calcium. Also, the rate of phosphorus element concentration retention after the dipping treatment can be controlled within the range described above, depending on conditions for producing the polyamide resin composition. When the phosphorus compound (B) to be added as a raw material is water-soluble for the production of the polyamide resin composition of the present embodiment by extrusion, specific examples of such a method include, but are not particularly limited to, a method which involves adding a metal compound (C2) which is different from the phosphorus compound (B), and reacting the metal compound (C2) with the whole or a portion of the phosphorus compound (B) during melt processing such as extrusion to form a lower water-soluble metal salt of the phosphorus compound (B).

(Method for producing polyamide resin composition)

The method for producing the polyamide resin composition of the present embodiment is

a method for producing a polyamide resin composition containing (A) a polyamide resin, (B) 0.5 to 400 mmol of a phosphorus compound in terms of a phosphorus element concentration, and (C2) 0.5 to 400 mmol of a metal compound in terms of a metal element (C), per kg of the polyamide resin, the method comprising
kneading the polyamide resin (A) and the phosphorus compound (B), and
adding the metal compound (C2) after at least one degassing step.

In the method for producing the polyamide resin composition of the present embodiment, it is preferred that the viscosity number [VN] of the polyamide resin component in the polyamide resin composition should be 160 mL/g or higher.

Specific examples of the method for producing the polyamide resin composition of the present embodiment include, but are not particularly limited to, the following methods:

(1) a method which involves melt-kneading the raw material polyamide resin (A) and the phosphorus compound (B) in an extruder, and increasing the molecular weight of the resulting melt-kneaded produced by solid-phase polymerization;
(2) a method which involves melt-kneading the raw material polyamide resin (A) whose molecular weight has been increased in advance, and the phosphorus compound (B) in an extruder; and
(3) a method which involves melt-kneading the raw material polyamide resin (A) and the phosphorus compound (B) in an extruder, and at the same time with this melt kneading, also increasing the molecular weight of the raw material polyamide resin (A) (catalytic molecular weight-increasing extrusion method).

Among them, the methods (1) and (3) are preferred if it is desired to efficiently produce the polyamide resin composition by decreasing loads on an extruder motor and increasing a discharge rate. The method (3) capable of carrying out kneading of the phosphorus compound (B) and increase in the molecular weight of the raw material polyamide resin (A) at the same time is more preferred because the method requires fewer steps and tends to offer preferable color.

A method other than solid-phase polymerization is preferred for producing the polyamide resin composition from another viewpoint, i.e., from the viewpoint of improving moldability.

Examples of the catalytic molecular weight-increasing extrusion method (3) include a method which involves kneading the raw material polyamide resin (A) and the phosphorus compound (B) effective for increase in molecular weight, followed by degassing for increase in molecular weight.

For adding the metal compound (C2) (optional component) which is different from the phosphorus compound (B) as the metal element (C), a method which involves kneading the raw material polyamide resin (A) and the phosphorus compound (B), degassing the kneaded product, and then adding the metal compound (C2) which is different from the phosphorus compound (B) from a side feed is preferred because increase in molecular weight tends to be able to be efficiently achieved for the raw material polyamide resin (A), though the method is not limited thereto.

The degassing is a pressure reduction operation and is, for example, an operation of connecting a region in an extruder (melt kneading apparatus) to a pressure reduction apparatus so that the region in the extruder has the same reduced pressure level as that of the pressure reduction apparatus. The region to be degassed is in a sealed state by the wall surface of the extruder, a stirring apparatus carried by the extruder, materials (e.g., filling resins), etc. Thus, when a degassing region is disposed in midstream of the extruder, it is preferred to seal the upstream and downstream portions of the degassing region with filling resins. For example, forward and reverse rotating screw (kneading) parts are installed in the extruder, and the region of interest can be sealed by slightly inhibiting the flow of the raw material polyamide resin (A).

It is preferred to establish the degassing (pressure reduction) treatment, from the viewpoint of efficiently removing, from the polyamide resin system, gas generated in the extruder or water generated during the molecular weight-increasing reaction (dehydration condensation reaction) of the raw material polyamide resin (A). By removing water in this way, the equilibrium reaction of depolymerization of the raw material polyamide resin (A) can be further inclined toward polymerization, and the increase in the molecular weight of the raw material polyamide resin (A) tends to be further promoted by synergistic effects with the effect of increasing molecular weights by the component (B) .

The reduced pressure level is based on atmospheric pressure and means the difference of the pressure of the degassing region from atmospheric pressure. For example, a reduced pressure level of 0.02 MPa indicates an absolute pressure of 0.1013 - 0.02 = 0.0813 MPa when the atmospheric pressure is 0.1013 MPa.

The reduced pressure level at the time of melt kneading is preferably 0.02 MPa or larger. The reduced pressure level is 0.02 MPa or larger, whereby the rate of removal of water (the ability to remove water) tends to be enhanced. Therefore, sufficient increase in the molecular weight of the raw material polyamide resin (A) tends to be able to be achieved. Also, the pressure tends to be able to be reduced to the maximum (reduced pressure level of 0.1013 MPa) of a pressure reduction apparatus (vacuum pump, etc.). For giving a priority to maintain a stable reduced pressure level for a long period, the reduced pressure level is preferably 0.1 MPa or smaller. The reduced pressure level at the time of melt kneading is preferably 0.02 MPa or larger and 0.1 MPa or smaller, more preferably 0.04 MPa or larger and 0.097 MPa or smaller, further preferably 0.05 MPa or larger and 0.095 MPa or smaller, particularly preferably 0.06 MPa or larger and 0.093 MPa or smaller.

The reduced pressure level can be measured and controlled by attaching a reduced pressure level meter (differential pressure gauge), or a vacuum gauge, to an arbitrary position from the pressure reduction apparatus (vacuum pump, etc.) to a site to be connected to the degassing region of the extruder.

For measuring and controlling the reduced pressure level, it is preferred to mount a valve or a valved air aspiration nozzle to an arbitrary position from the pressure reduction apparatus (vacuum pump, etc.) to a site to be connected to the degassing region of the extruder, for example. In this case, the reduced pressure level tends to be able to be easily adjusted by the open/close operation of this valve.

For these reasons, for the catalytic molecular weight-increasing extrusion method (3), it is preferred that an extruder having one or more degassing regions should be used, and the raw material polyamide resin (A) and the phosphorus compound (B) should be kneaded, followed by degassing. Also, for adding the metal compound (C2) (optional component) which is different from the phosphorus compound (B) as the metal element (C), it is preferred to adopt an aspect in which the raw material polyamide resin (A) and the phosphorus compound (B) are kneaded, followed by degassing, and after the kneaded product passes through the first degassing region of the extruder, the metal compound (C2) which is different from the phosphorus compound (B) is added to the obtained kneaded product. In this case, the molecular weight of the raw material polyamide resin (A) tends to be able to be increased conveniently and efficiently.

For the method for producing the polyamide resin composition of the present embodiment, it is particularly preferred that an extruder having one or more degassing regions should be used, 0.5 to 400 mmol of the phosphorus compound (B) in terms of a phosphorus element concentration per kg of the polyamide resin (A) should be kneaded, and 0.5 to 400 mmol of the metal compound (C2) should be added as the metal element (C) after the first degassing operation for the kneaded product. It is also preferred that the viscosity number [VN] of the polyamide resin component in the resulting polyamide resin composition should be 160 mL/g or higher.

In the method for producing the polyamide resin composition of the present embodiment, the metal compound (C2) is preferably at least one member selected from the group consisting of a metal halide, a metal oxide, a metal hydroxide, and a metal carbonate. In the case of selecting any of them, the catalytic effect of increasing molecular weights by the component (B) tends to be able to be deactivated more efficiently, and gelation during residence under heat tends to be able to be suppressed in the polyamide resin composition. Specific examples of the metal compound (C2) are the same as those described in the paragraph about the polyamide resin composition described above.

A drain pot that reserves drains in vent gas can be mounted between the pressure reduction apparatus (vacuum pump, etc.) and the melt kneading site. When a vent pot is mounted therein, an air aspiration nozzle may be attached to the vent pot.

It is preferred that at least one degassing region should be disposed (first degassing region) before the addition of the metal compound (C2) which is different from the phosphorus compound (B). A degassing region may or may not be disposed after the addition of the metal compound (C2) which is different from the phosphorus compound (B). It is preferred to dispose a degassing region after the addition of the metal compound (C2) which is different from the phosphorus compound (B), from the viewpoint of improving the take-over properties of a strand by removing gas components from the strand of an extruded melt resin. Specifically, in the present embodiment, it is more preferred that degassing should be carried out at least once again after the addition of the metal compound (C2) which is different from the phosphorus compound (B).

In the case of adding the reinforcing material (D), the method for producing the polyamide resin composition of the present embodiment may be any of the following methods (I) to (III) :

(I) a method which involves kneading the polyamide resin (A), the phosphorus compound (B), and the reinforcing material (D), and adding the metal compound (C2) after the first degassing operation for the kneaded product;
(II) a method which involves kneading the polyamide resin (A) and the phosphorus compound (B), adding the reinforcing material (D) after the first degassing operation for the kneaded product, and then adding the metal compound (C2); and
(III) a method which involves kneading the polyamide resin (A) and the phosphorus compound (B), and adding the metal compound (C2) and the reinforcing material (D) at the same time after the first degassing operation for the kneaded product.

An apparatus known in the art can be used as an apparatus for performing melt kneading. For example, a melt kneading machine such as a single-screw or twin-screw extruder, a Banbury mixer, or a mixing roll is preferably used. Among them, a multiple-screw extruder equipped with a degassing mechanism (vent) apparatus and side feeder equipment is preferred, and a twin-screw extruder equipped therewith is more preferably used.

In the melt kneading step in an extruder, the molecular weight of the polyamide resin can be adjusted for increase in molecular weight by appropriately setting kneading conditions such as a resin temperature, a reduced pressure level, and an average residence time for extrusion.

The resin temperature of the polyamide resin composition at the time of melt kneading is preferably equal to or higher than the melting point of the raw material polyamide resin (A) and 380°C or lower. The resin temperature of the polyamide resin composition at the time of melt kneading is equal or higher than the melting point of the raw material polyamide resin (A) as described above, whereby the raw material polyamide resin (A) is sufficiently melted, and loads on an extruder motor tend to be able to be reduced. Also, the resin temperature of the polyamide resin composition at the time of melt kneading is 380°C or lower, whereby the decomposition of the raw material polyamide resin (A) itself tends to be able to be suppressed. From these viewpoints, the resin temperature of the polyamide resin composition at the time of melt kneading is more preferably (the melting point of the raw material polyamide resin (A) + 5)°C or higher and 370°C or lower, further preferably (the melting point of the raw material polyamide resin (A) + 10)°C or higher and 360°C or lower, still further preferably (the melting point of the raw material polyamide resin (A) + 15)°C or higher and 355°C or lower, yet still further preferably (the melting point of the raw material polyamide resin (A) + 20)°C or higher and 350°C or lower. In the case of using, for example, polyamide 66 having a melting point of 264°C as the raw material polyamide resin (A), the resin temperature of the polyamide resin composition at the time of melt kneading is preferably 264°C or higher and 380°C or lower. In the case of using polyamide 66 having a melting point of 264°C as the raw material polyamide resin (A), the resin temperature of the polyamide resin composition at the time of melt kneading is 264°C or higher, whereby the polyamide 66 is sufficiently melted, and loads on an extruder motor tend to be able to be reduced. Also, the resin temperature of the polyamide resin composition at the time of melt kneading is 380°C or lower, whereby the decomposition of the polyamide 66 itself tends to be able to be suppressed. From these viewpoints, the resin temperature of the polyamide resin composition at the time of melt kneading is more preferably 270°C or higher and 370°C or lower, further preferably 275°C or higher and 360°C or lower, still further preferably 280°C or higher and 355°C or lower, yet still further preferably 285°C or higher and 350°C or lower. In the case of using a polyamide resin other than polyamide 66 as the raw material polyamide resin (A), the resin temperature of the polyamide resin composition at the time of melt kneading can also be appropriately adjusted according to its melting point.

The resin temperature of the polyamide resin composition can be measured, for example, by directly contacting a thermometer such as a thermocouple with the polyamide resin composition in a molten state that has come out of the discharge port (spinneret) of an extruder. The resin temperature of the polyamide resin composition can be adjusted by appropriately adjusting the amount of shear heating of the resin through adjustment by the heater temperature of an extruder cylinder or change in the number of rotations or the discharge rate of the extruder.

The average residence time at the time of melt kneading is preferably 10 seconds or longer and 120 seconds or shorter. Provided that the average residence time at the time of melt kneading is 10 seconds or longer, the desired polyamide resin composition of the present embodiment tends to be obtained more efficiently. Also, the average residence time at the time of melt kneading is 120 seconds or shorter, whereby the discharge speed (production speed) of extrusion tends to be enhanced to some extent. As a result, the productivity of the polyamide resin composition tends to be favorable. From these viewpoints, the average residence time at the time of melt kneading is more preferably 20 seconds or longer and 100 seconds or shorter, further preferably 25 seconds or longer and 90 seconds or shorter, still further preferably 30 seconds or longer and 80 seconds or shorter, yet still further preferably 35 seconds or longer and 70 seconds or shorter.

The average residence time means a residence time when the residence time in a melt kneading apparatus is constant, and means an average value of the shortest residence time and the longest residence time when the residence time therein is uneven. For example, a resin that can be distinguished from the raw material polyamide resin (A) used in the present embodiment, for example, a resin, such as a colorant master batch during melt kneading, which differs in color from the raw material polyamide resin (A) used in the present embodiment (hereinafter, such a resin is also simply referred to as X), is added to a melt kneading apparatus. The discharge start time and the discharge termination time in the darkest state of X are measured, and the discharge start time and the discharge termination time can be averaged to measure an average residence time. The average residence time can be appropriately adjusted by the discharge rate (discharge speed) or the number of rotations of the extruder.

[Polyamide resin composition]

The polyamide resin composition of the present embodiment is obtained by, for example, the aforementioned method for producing a polyamide resin composition. The polyamide resin composition of the present embodiment thus obtained not only has the raw material polyamide resin (A) with an increased molecular weight, but secures sufficient tensile strength while exerting excellent tensile elongation, and in addition, gelation during residence under heat is suppressed. Therefore, the polyamide resin composition of the present embodiment tends to be able to be favorably molded and processed by use of a molding method known in the art, for example, a generally known plastic molding method such as press molding, injection molding, gas-assisted injection molding, welding molding, extrusion molding, blow molding, film molding, hollow molding, multilayer molding, foam molding, or melt spinning.

[Material for polyamide resin molding]

The polyamide resin molding material of the present embodiment is a material for molding which is the aforementioned polyamide resin composition. Examples of the form of the material for molding include, but are not particularly limited to, pellets obtained by melt-kneading the aforementioned polyamide resin composition in an extruder. Examples of the form other than pellets include granules and powders.

The material for polyamide resin molding of the present embodiment is a material for polyamide resin molding which is the aforementioned polyamide resin composition, wherein the difference between a heat of fusion $\Delta H1$ (J/g) per g of the polyamide resin at the time of a first temperature rise and a heat of fusion $\Delta H2$ (J/g) per g of the polyamide resin at the time of a second temperature rise ($\Delta H1 - \Delta H2$) is 10 J/g or lower in the measurement of heats of fusion using a differential scanning calorimeter (DSC). The difference between the heats of fusion ($\Delta H1 - \Delta H2$) is preferably -30 to 10 J/g, more preferably -25 to 9 J/g, further preferably -20 to 8 J/g, particularly preferably -15 to 7 J/g. When the difference between the heats of fusion ($\Delta H1 - \Delta H2$) falls within the range described above, the material for polyamide resin molding can achieve both reduction in plasticization time and stabilization during molding.

Particularly, the material for polyamide resin molding of the present embodiment is preferably obtained by a production method comprising kneading the raw material polyamide resin (A) and the phosphorus compound (B), and adding the metal compound (C) after the first degassing operation for the kneaded product.

In the present embodiment, the difference between the heats of fusion ($\Delta H1 - \Delta H2$) can be measured by a method described in Examples mentioned later.

In the present embodiment, each heat of fusion can be measured by a method described in Examples mentioned later according to JIS-K7121. In this measurement, heating or cooling can be carried out at a rate of 20°C/min. For example, Diamond DSC manufactured by PerkinElmer, Inc. can be used as an apparatus for the measurement.

In the present embodiment, the heat of fusion per g of the polyamide resin excludes the heat of fusion of an additional component when the material for polyamide resin molding contains the additional component (e.g., the reinforcing material (D)) other than the polyamide resin. For example, when the material for polyamide resin molding contains 25% by mass of the reinforcing material (D) (e.g., inorganic matter), the heat of fusion of the material for polyamide resin molding, including the reinforcing material (D), is measured. As a result, when the heat of fusion is, for example, 50 J/g, the heat of fusion of 25% by mass of the reinforcing material (D) is subtracted therefrom, and the obtained value is converted to a heat of fusion per g of the polyamide resin. In this example, the heat of fusion per g of the polyamide resin is calculated as $50 \times (100/75) = 66.7$ J/g.

In the present embodiment, the heat of fusion $\Delta H1$ per g of the polyamide resin at the time of a first temperature rise means the amount of heat necessary for fusing 1 g of the polyamide resin in the polyamide resin molding material before molding. The heat of fusion serves as an index representing the crystallization status of the polyamide resin in the material and varies depending on the type of the polyamide resin, but also varies depending on the method for producing the material. The heat of fusion $\Delta H2$ per g of the polyamide resin at the time of a second temperature rise means the amount of heat necessary for fusing 1 g of the polyamide resin having a crystalline state prepared under given conditions (which involve a temperature drop to 25°C at a rate of temperature drop of 20°C/min) after the polyamide resin in the polyamide resin molding material is temporarily in a completely molten state. Thus, since the heat of fusion $\Delta H2$ is the amount of heat necessary for fusing 1 g of the polyamide resin having a crystalline state prepared under given conditions, the heat of fusion $\Delta H2$ serves as an index representing the crystalline state of the polyamide resin in the molding material prepared under almost the same conditions, which is different from the crystalline state of the polyamide resin in the molding material before complete melting. In the present embodiment, the complete melting of the polyamide resin is carried out by keeping the molding material at the melting point of the polyamide resin + approximately 30°C or higher for 3 minutes. After the complete melting of the polyamide resin, the temperature is dropped to 25°C at a rate of temperature drop of 20°C/min and kept at 25°C for 3 minutes, followed by a second temperature rise. In the case of, for example, polyamide 66, the polyamide 66 can be completely melted by keeping the molding material at the melting point 264°C of the polyamide 66 + approximately 35°C (e.g., 300°C) for 3 minutes.

In the present embodiment, $\Delta H1 - \Delta H2$ can indicate the difference in the crystallization of the polyamide resin depending on the difference in production method among the same types of polyamide resins, not the difference depending on the type of the polyamide resin.

In the material for polyamide resin molding of the present embodiment, $\Delta H1 - \Delta H2$ is preferably 10 J/g or lower from the viewpoint that reduction in plasticization time and stabilization can both be achieved, and moldability is improved. $\Delta H1 - \Delta H2$ is more preferably - 30 to 10 J/g, further preferably -25 to 5 J/g, still further preferably -15 to 0 J/g, particularly preferably -10 to -1 J/g.

Examples of the method for controlling $\Delta H1 - \Delta H2$ within the range described above include, but are not particularly limited to, a method which involves rapidly cooling the melted polyamide resin composition.

[Molded article]

The molded article of the present embodiment comprises the aforementioned polyamide resin composition. Therefore, the molded article of the present embodiment has high tenacity (tensile elongation and Charpy impact strength) and is excellent in moldability such as mold release properties and suppression of gelation during residence under heat and further excellent in color, surface appearance, thermal discoloration resistance, weather resistance, heat aging resistance, light resistance, chemical resistance, etc. Therefore, the molded article of the present embodiment is expected to be applied to various parts such as automobile parts, electric and electronic parts, industrial machinery parts, various gears, and use in extrusion.

Examples

Hereinafter, the present embodiment will be described further specifically with reference to Examples and Comparative Examples. However, the present embodiment is not intended to be limited by these Examples. The raw materials and the evaluation methods used in the present Examples were as follows.

[Raw material]

Polyamide resin (A) (produced in Production Example given below)

PA66-1 (PA66 pellets having VN: 141 mL/g, moisture content: 0.08% by mass, and [COOH] - [NH2] = 37 milliequivalents/kg).

PA66-2 (PA66 produced with reference to Comparative Example 2 of Japanese Patent Laid-Open No. 2000-226512, containing Ca phosphate and having viscosity number [VN]: 308 mL/g and moisture content: 0.08% by mass).

PA66-3 (end-corrected PA66 pellets having VN: 144 mL/g, moisture content: 0.08% by mass, and [COOH] - [NH2] = 13 milliequivalents/kg).

PA66-4 (end-corrected PA66 pellets having VN: 142 mL/g, moisture content: 0.08% by mass, and [COOH] - [NH2] = -26 milliequivalents/kg).

PA66-5 (PA66 pellets having VN: 141 mL/g, moisture content: 0.08% by mass, and [COOH] - [NH2] = -33 milliequivalents/kg).

PA66-6 (increased-molecular-weight PA66 pellets having VN: 257 mL/g, moisture content: 0.03% by mass, and [COOH] - [NH2] = 35 milliequivalents/kg).

Phosphorus compound (B)

Phosphoric acid; manufactured by Wako Pure Chemical Industries, Ltd., trade name: phosphoric acid (85% aqueous solution)
SHP; manufactured by Wako Pure Chemical Industries, Ltd., trade name: sodium phosphinate monohydrate (also called sodium hypophosphite)
Ca phosphate; manufactured by Wako Pure Chemical Industries, Ltd., trade name: calcium monohydrogen phosphate (dihydrate)
K phosphate; manufactured by Wako Pure Chemical Industries, Ltd., trade name: dipotassium hydrogen phosphate
PHS; salt powder of phosphoric acid and hexamethylenediamine produced in Production Example given below

Metal compound (C2)

KI; manufactured by Tokyo Chemical Industry Co., Ltd., trade name: potassium iodide
LiCl: manufactured by Wako Pure Chemical Industries, Ltd., trade name: lithium chloride
MgO; manufactured by Wako Pure Chemical Industries, Ltd., trade name: magnesium oxide
CaO; manufactured by Wako Pure Chemical Industries, Ltd., trade name: calcium oxide
$Ca(OH)_2$; manufactured by Wako Pure Chemical Industries, Ltd., trade name: calcium hydroxide
$Mg(OH)_2$; manufactured by Wako Pure Chemical Industries, Ltd., trade name: magnesium hydroxide Reinforcing material (D)
GF (glass fiber); manufactured by Nippon Electric Glass Co., Ltd., trade name: ECS03T275H, average fiber diameter (average particle size): 10 $\mu$m (perfect circle-shaped), cut length: 3 mm

Amine component (E)

NH2-P (amino group terminus-rich PA prepolymer (oligomer) (NH2 prepolymer (oligomer)) produced in Production Example given below, having number-average molecular weight (Mn): 1400)

(1) Viscosity number

<1-1> Viscosity number: VN (mL/g)

Pellets of the polyamide resin composition produced in each of Examples and Comparative Examples mentioned later were used. The viscosity number was measured according to ISO307 (JIS-K6933). More specifically, the viscosity number was measured using a solution having a polyamide resin concentration of 0.5% by mass in sulfuric acid with 96% concentration at 25°C. When the polyamide resin composition contained a reinforcing material such as GF, the ash content in the polyamide resin composition was measured in advance, for example, on the basis of the provision of ISO3451-4, and the amount of the polyamide resin was calculated from the resin composition using the content of the polyamide resin after subtraction of the ash content.

<1-2> Formic acid relative viscosity (RV)

Pellets of the polyamide resin composition produced in each of Examples and Comparative Examples mentioned later were used. The formic acid relative viscosity (RV) was obtained by comparing the viscosity of a solution of the polyamide resin composition added to formic acid with the viscosity of formic acid itself. The specific measurement method was carried out according to ASTM-D789. More specifically, the RV value measured at 25°C using a solution containing 8.4% by mass of the polyamide contained in 90% by mass of formic acid (10% by mass of water) was adopted. When the polyamide resin composition contained a reinforcing material such as GF, the ash content in the polyamide resin composition was measured in advance, for example, on the basis of the provision of ISO3451-4, and the amount of the polyamide resin was calculated from the resin composition using the content of the polyamide resin after subtraction of the ash content.

(2) Measurement of moisture content (% by mass)

Pellets of the polyamide resin composition produced in each of Examples and Comparative Examples mentioned later were used. The moisture content (% by mass) in the pellets was measured using a Karl Fischer moisture titrator (manufactured by Mitsubishi Chemical Analytech Co., Ltd., coulometric titration-type trace moisture measurement apparatus model CA-200) by a method that followed ISO 15512.

(3) Confirmation of apatite-based compound

The polyamide resin composition produced in each of Examples and Comparative Examples mentioned later was used. The apatite-based compound in the composition was confirmed as follows: 10 g of the polyamide resin composition was weighed, mixed with 200 mL of 90% by weight of phenol, and stirred at 40°C for 2 hours to obtain a mixture. The mixture was subjected to a separation operation at 20000 rpm for 1 hour using a centrifuge [manufactured by KOKUSAN Co., Ltd., H103RLH] to remove a supernatant solvent. Further, 200 mL of phenol was added to the mixture after the removal of the supernatant solvent, and subsequently, the same dissolution operation and separation operation using a centrifuge were carried out 4 repetitive times. Subsequently, 200 mL of 99.5% by weight of ethanol was added to the obtained mixture and stirred at 23°C for 2 hours, and a separation operation was carried out at 20000 rpm for 1 hour using a centrifuge to remove a supernatant solvent. This operation was repeated another 4 times, followed by drying at 80°C for 12 hours in a pressure reduction dryer to obtain insoluble matter.
The X-ray diffraction of the obtained insoluble matter was measured. The measurement conditions were as follows:
X-ray: copper Kα, wave number: 0.1542 nm, tube voltage: 40 KV, tube current: 200 mA, scanning rate: 4 deg./min, divergence slit: 1 deg., scattering slit: 1 deg., optical slit: 0.15 mm
When peaks were present at diffraction angles (2θ) of 25.5 to 26.5 degrees and 32.5 to 33.5 degrees, the polyamide resin composition was confirmed to contain the apatite-based compound, which was described as "Present" in a table. When these peaks were absent, the polyamide resin composition was confirmed to contain no apatite-based compound, which was described as "Absent" in a table.
When the polyamide resin composition contained the apatite compound, the polyamide resin composition was dried at 100 ± 20°C for 8 hours. Then, 1 g of thereof was weighed into a platinum dish, ashed in an electric furnace of 650 ± 20°C, and cooled, followed by the measurement of the weight thereof to quantify the content of the apatite-based compound. The amount (part by mass) of the apatite-based compound based on 100 parts by mass of the polyamide resin was described within parentheses.

(4) Production of ISO test specimen

A multipurpose test specimen (4 mm thick) was produced according to ISO 3167 using pellets obtained in each example and an injection molding machine. The injection molding apparatus used was PS40E manufactured by Nissei Plastic Industrial Co., Ltd. to which a two-cavity mold for the small tensile test specimen was attached. The cylinder temperature was set to the melting point of the polyamide resin + approximately 25°C (e.g., 290°C for PA66), and the mold temperature was set to 80°C. A dumbbell-shaped molded article was obtained from the polyamide resin composition pellets under injection molding conditions involving injection for 25 seconds, cooling for 15 seconds, and a plasticization level of 90 mm (cushion amount: approximately 10 mm).

(5) ISO tensile strength (MPa) and tensile elongation (%)

The tensile strength and the tensile elongation of the multipurpose test specimen produced in the paragraph (4) were measured according to ISO527. In this context, the tensile strength and the tensile elongation of the dumbbell were measured under conditions involving an inter-chuck distance of 115 mm and a tensile rate of 50 mm/min (non-reinforced). The tensile elongation was calculated as the percentage of elongation (displacement) at break with respect to the inter-chuck distance.

(6) Production of JIS test specimen

A small tensile test specimen (type CP13) (3 mm thick) was produced according to JIS-K7139 using pellets obtained in each example and an injection molding machine. The injection molding apparatus used was PS40E manufactured by Nissei Plastic Industrial Co., Ltd. to which a two-cavity mold for the small tensile test specimen was attached. The cylinder temperature was set to the melting point of the polyamide resin + approximately 15°C (e.g., 280°C for PA66), and the mold temperature was set to 80°C. A dumbbell-shaped molded article was obtained from the polyamide resin composition pellets under injection molding conditions involving injection for 10 seconds, cooling for 7 seconds, and a plasticization level of 30 mm (cushion amount: approximately 10 mm).

(7) JIS tensile strength (MPa) and tensile elongation (%)

The tensile strength and the tensile elongation of the small tensile test specimen produced in the paragraph (6) were measured according to ISO527. In this context, the tensile strength and the tensile elongation of the dumbbell were measured under conditions involving an inter-chuck distance of 30 mm and a tensile rate of 5 mm/min (reinforced). The tensile elongation was calculated as the percentage of elongation (displacement) at break with respect to the inter-chuck distance.

(8) Mold release properties

The mold release properties in the molding in the paragraph (6) were shown. The evaluation criteria were as given below. This was used as an index for the mold release properties (at the time of molding with continuous 30 shots).

(Evaluation criteria for mold release properties)

○: The test specimen was released from the mold without problem (level that permitted automatic molding).
×: The test specimen was sometimes not released (level that permitted semiautomatic molding).

(9) Gelation during residence in molding machine

Non-reinforced and reinforced small tensile test specimens were produced in the same way as in the paragraph (6) except that the cylinder temperature was changed to a setting of the melting point of the polyamide resin + approximately 35°C (e.g., 300°C for PA66); the injection molding conditions involved a plasticization level of 90 mm; after plasticization, the pellets were allowed to reside under heat for 30 minutes, followed by molding with 2 shots; the molded product after the 2nd shot was cut into approximately 3 to 5 mm pieces to obtain a test specimen for evaluation. This test specimen for evaluation was dissolved in sulfuric acid with 96% concentration at 25°C to prepare a solution having a polyamide resin concentration of 0.5% by mass. If the test specimen was not completely dissolved due to portions undissolved in sulfuric acid or swelled sites, gelation was confirmed to occur.

(Evaluation criteria for gelation)

○: The test specimen was dissolved in sulfuric acid.
Δ: Only a very small amount of a site was not dissolved in sulfuric acid or was swelled.
×: There existed sites undissolved in sulfuric acid or swelled (gelation).

(10) 120°C creep test

The pellets were blended with 0.04 parts by mass of CuI (manufactured by Wako Pure Chemical Industries, Ltd. trade name: copper iodide) based on 100 parts by mass of the pellets and then molded in the same way as in the paragraph (5) to prepare a CuI-supplemented JIS test specimen. This test specimen was placed under a weight having a load of 75 MPa in an environment of 120°C to conduct a creep test at 120°C for 1000 hours.

Evaluation criteria for creep resistance

○: The test specimen was not broken for 1000 hours.
Δ: The test specimen was broken within shorter than 1000 hours after 24 hours.
×: The test specimen was broken by 24 hours.
-: Not measured.

(11) Continuous operation performance

After continuous operation for 5 hours in the extrusion step in each of Examples and Comparative Examples mentioned later, whether the polyamide resin (A) was present or GF as the reinforcing material (D) accumulated in floc in vent ports (vent ports in Figure 1 (vent 1, vent 2, and vent 3) mounted to the degassing regions of an extruder, was confirmed.
When the polyamide resin (A) vented up, the polyamide resin (A) was confirmed to clog the vent ports at the time of further continuous operation, leading to reduction in degassing ability or contamination of the resin composition with carbide (black spots).
When GF as the reinforcing material (D) accumulated in floc, this was confirmed to be unfavorable from the viewpoint of continuous operation because of the possibility of having an adverse effect on degassing ability at the time of further continuous operation.
When a plurality of degassing regions were disposed, each vent (degassing region) was evaluated for the presence or absence of the polyamide resin (A) or fiber accumulation of GF as the reinforcing material (D). The mass productivity was evaluated according to the following criteria.

<Evaluation criteria for mass productivity>

○: The polyamide resin and GF accumulation (floc) were absent in the vent ports.
×: GF accumulation (floc) was present in the vent ports.
× ×: The polyamide resin was present in the vent ports.

(12) Difference between heats of fusion (J/g)

The difference between the heats of fusion (J/g) were determined according to the following expression (2) :

$$\text{Difference between the heats of fusion (J/g)} = \Delta H1 - \Delta H2$$
$$\text{Expression (2)}$$

Each heat of fusion was measured according to JIS-K7121 using Diamond-DSC manufactured by PerkinElmer, Inc. (hereinafter, also referred to as "DSC measurement"). The DSC measurement was carried out in a nitrogen atmosphere. Approximately 10 mg of pellets (material for polyamide resin molding) of the polyamide resin composition produced in each of Examples and Comparative Examples mentioned later was used as a sample. Specifically, in the DSC measurement, the sample was first heated from 25°C to the melting point of the polyamide resin + approximately 25°C (e.g., 300°C for PA66) at a rate of temperature rise of 20°C/min. The heat of fusion $\Delta H1$ (J/g) per g of the polyamide resin at the time of the first temperature rise was determined from the peak area at an endothermic peak (fusion peak) that appeared by this heating. Next, the polyamide resin was temporarily in a completely molten state by keeping the sample at the highest temperature of the first temperature rise for 3 minutes. Then, the sample was cooled to 25°C at a rate of temperature drop of 20°C/min and kept at 25°C for 3 minutes. Then, the sample was similarly heated again at a rate of temperature rise of 20°C/min. The heat of fusion $\Delta H2$ (J/g) per g of the polyamide resin at the time of the second temperature rise was determined from the peak area at an endothermic peak (fusion peak) that appeared by this heating.
When the material for polyamide resin molding contained a component (e.g., the reinforcing material (D)) other than the polyamide resin, heats of fusion ΔH1' and ΔH2' per g of the material for polyamide resin molding were first determined in the same way as above. The heats of fusion ΔH1 and ΔH2 per g of the polyamide resin were determined by conversion from the obtained ΔH1' and ΔH2' per g of the material for polyamide resin molding. Specifically, when the content of the component (e.g., the reinforcing material (D)) other than the polyamide resin in the material for polyamide resin molding was defined as "Y% by mass", the content of the polyamide resin was "(100 - Y) % by mass". Therefore, the conversion was carried out according to ΔH1 per g of the polyamide resin = ΔH1' per g of the material for polyamide resin molding × (100/100 - Y). ΔH2 per g of the polyamide resin was also calculated in the same way as above.

(13) Rate of phosphorus element concentration retention (%)

The rate of phosphorus element concentration retention (%) was determined according to the following expression (3):

$$\text{Rate of phosphorus element concentration retention (\%)} =$$

$$100 \times P1/P0 \quad \text{Expression (3)}$$

<13-1> In-water dipping treatment

Pellets of the polyamide resin composition produced in each of Examples and Comparative Examples mentioned later were freeze-crushed into a powder. At this time, the phosphorus element concentration in the polyamide resin composition was measured (initial phosphorus element concentration: P0). 1.0 g of the powder was placed in a container containing 50 mL of water (distilled water) of 80°C, which was then capped and kept at a water temperature of 80°C for 24 hours. Then, the polyamide resin composition powder was collected by filtration and dried, and the phosphorus element concentration of the resulting powder was measured (phosphorus element concentration after the dipping treatment: PI).

<13-2> Phosphorus element concentration measurement [P] (mass ppm)

0.5 g of the polyamide resin composition produced in each of Examples and Comparative Examples mentioned later was weighed and wet-decomposed on a heater after addition of 20 mL of concentrated sulfuric acid. The solution after the decomposition was cooled, and heated on a heater after addition of 5 mL of hydrogen peroxide so that the solution was concentrated until the whole amount became 2 to 3 mL. The solution after the concentration was cooled again, and the amount thereof was adjusted to 500 mL by the addition of pure water. The obtained aqueous solution was subjected to inductively coupled plasma (ICP) spectrometry using IRIS/IP manufactured by Thermo Jarrell Ash Corp. as a measurement apparatus to quantify the phosphorus element concentration [P] in the composition at a wavelength of 213.618 (nm).

The quantification of the phosphorus element employed IRIS/IP manufactured by Thermo Jarrell Ash Corp. as an apparatus, and the phosphorus element was quantified at a wavelength of 213.618 (nm) by inductively coupled plasma (ICP) spectrometry. The other metal elements were similarly quantified at their respective characteristic wavelengths.

(14) Rate of tensile strength retention (%)

The rate of tensile strength retention (%) was determined according to the following expression (4):

$$\text{Rate of tensile strength retention (\%)} = 100 \times \text{Tensile}$$

$$\text{strength with water absorption/Tensile strength}$$

$$\text{Expression (4)}$$

<14-1> Tensile test specimen production

A small tensile test specimen (type CP13) (3 mm thick) was produced as described below according to JIS-K7139 using pellets of the polyamide resin composition produced in each of Examples and Comparative Examples mentioned later, and an injection molding machine. The injection molding apparatus used was PS40E manufactured by Nissei Plastic Industrial Co., Ltd. to which a two-cavity mold for the small tensile test specimen was attached. The cylinder temperature was set to the melting point of the polyamide resin + approximately 15°C (e.g., 280°C for PA66), and the mold temperature was set to 80°C. A dumbbell-shaped small tensile test specimen was obtained from the polyamide resin composition pellets under injection molding conditions involving injection for 10 seconds, cooling for 7 seconds, and a plasticization level of 30 mm (cushion amount: approximately 10 mm).

<14-2> Water absorption treatment

The test specimen obtained in the paragraph <14-1> was placed in a container containing water (distilled water) of 80°C so that the whole test specimen was dipped in water. In this state, the container was capped and kept at a water temperature of 80°C for 24 hours. Then, the test specimen was isolated. Water adhering on the surface of the test specimen was wiped off, and the test specimen was left standing at 23°C for 30 minutes in a 50 RH% environment. The test specimen thus left standing was used as a test specimen for the measurement of tensile strength with water absorption.

<14-3> Tensile strength (MPa)

The tensile strength in a dried state (tensile strength) of the test specimen obtained in the paragraph <14-1>, and the tensile strength of the test specimen subjected to the water absorption treatment of <14-2> (test specimen for the measurement of tensile strength with water absorption) (tensile strength with water absorption) were measured. In this context, the tensile strength of the dumbbell was measured under conditions involving an inter-chuck distance of 30 mm and a tensile rate of 5 mm/min.

(15) Molding plasticizing properties (average plasticization time (sec) and plasticization maximum-minimum difference (sec))

A small tensile test specimen (type CP13) (3 mm thick) was produced according to JIS-K7139 using an injection molding machine from pellets (material for polyamide resin molding) of the polyamide resin composition produced in each of Examples and Comparative Examples mentioned later. The injection molding apparatus used was PS40E manufactured by Nissei Plastic Industrial Co., Ltd., and a two-cavity mold for the test specimen was attached to the injection molding apparatus. The cylinder temperature was set to the melting point of the polyamide resin + approximately 15°C (e.g., 280°C for PA66), and the mold temperature was set to 80°C. The injection molding conditions involved injection for 10 seconds, cooling for 7 seconds, and a plasticization level of 30 mm (cushion amount: approximately 10 mm).

In this injection molding, the first 20-shot molding was excluded from the evaluation as molding for stabilizing the molding cycle. The plasticization time of the material for polyamide resin molding was recorded as to molding with a total of 30 shots from the 21st shot to the 50th shot. The average of the plasticization times from these 30 shots was used as the average plasticization time (sec), and the difference between the largest plasticization time and the smallest plasticization time was used as the plasticization maximum-minimum difference. A smaller average plasticization time means that the material for polyamide resin molding is more easily plasticized. Thus, a smaller average plasticization time is favorable for reduction in molding time. A smaller plasticization maximum-minimum difference means that the material for polyamide resin molding is more stably plasticized for each shot. A smaller plasticization maximum-minimum difference tends to result in smaller variations in quality and is thus favorable.

(16) Charpy impact strength (kJ/m$^2$)

A multipurpose test specimen (4 mm thick) was produced according to ISO 3167 using an injection molding machine from pellets of the polyamide resin composition produced in each of Examples and Comparative Examples mentioned later. The injection molding apparatus used was PS40E manufactured by Nissei Plastic Industrial Co., Ltd., and a two-cavity mold for the test specimen was attached to the injection molding apparatus. The cylinder temperature was set to the melting point of the polyamide resin + approximately 25°C (e.g., 290°C for PA66), and the mold temperature was set to 80°C. The injection molding conditions involved injection for 25 seconds, cooling for 15 seconds, and a plasticization level of 90 mm (cushion amount: approximately 10 mm).

The notched Charpy impact strength was measured according to ISO-179 using the molded article thus obtained (multipurpose test specimen (4 mm thick)).

(17) Presence or absence of staining caused by mixing with CuI/KI

85% by weight of potassium iodide (KI), 5% by weight of copper iodide (CuI), and 10% by weight of calcium montanate were mixed by stirring to prepare granules. 70% by weight of the polyamide resin in a pellet form (PA66 obtained in Production Example 1 below) and 30% by weight of the potassium iodide/copper iodide/calcium montanate granules were mixed in a tumbler-shaped blender. The obtained mixture was melt-kneaded in a twin-screw extruder to obtain polyamide resin master batch pellets.

Pellets of the polyamide resin composition produced in each of Examples and Comparative Examples mentioned later, and the master batch pellets thus obtained were blended at a mass ratio (pellets obtained in each example : master batch pellets) of 98:2, and the obtained mixture was used in the same molding as in the paragraph (6) .

At this time, the presence or absence of purple discoloration (staining) was confirmed for the molded article (small tensile test specimen).

O: Purple discoloration was not confirmed.

×: Purple discoloration was confirmed.

(18) Torque of extrusion (%)

Loads on an extruder motor during melt kneading using an extruder in each of Examples and Comparative Examples mentioned later were measured as the percentage of output current (%) with respect to rated current.

(19) Difference between carboxyl group terminus concentration and amino group terminus concentration: [COOH] - [NH$_2$] (milliequivalent/kg))

In the polyamide resin composition obtained in each example, the carboxyl group terminus concentration [COOH] and the amino group terminus concentration [NH$_2$] of the polyamide resin were calculated as the amounts of terminal groups present in 1 kg of the polyamide resin by $^1$H-NMR (sulfuric acid-d2 solvent).

Carboxyl group terminus: the hydrogen of the methylene group (-CH$_2$-) adjacent to the terminal COOH was calculated as an integrated value of peak (a') at 2.724 ppm.

Amino group terminus: the hydrogen of the methylene group (-CH$_2$-) adjacent to the terminal NH$_2$ was calculated as an integrated value of peak (b') around 2.884 ppm.

Dicarboxylic acid unit in the principal chain of the polyamide: the hydrogen of the methylene group (-CH$_2$-) adjacent to an amide group was calculated as an integrated value of peak (a) at 2.451 ppm.

Diamine unit in the principal chain of the polyamide: the hydrogen of the methylene group (-CH$_2$-) adjacent to an amide group was calculated as an integrated value of peak (b) at 3.254 ppm.

The carboxyl group terminus concentration [COOH] (milliequivalent/kg) = (a'/2)/[{(b + b') × 114.2/4} + {(a + a') × 112.1/4}], and

the amino group terminus concentration [NH$_2$] (milliequivalent/kg) = (b'/2)/[{(b + b') × 114.2/4} + {(a + a') × 112.1/4}]

were each calculated using these integrated values of peaks to determine the difference between the carboxyl group terminus concentration and the amino group terminus concentration, [COOH] - [NH$_2$] (milliequivalent/kg).

(20) Pellet color (b value)

Pellets of the polyamide resin composition obtained in each of Examples and Comparative Examples mentioned later were assayed using a colorimeter ND-300A manufactured by Nippon Denshoku Industries, Co., Ltd., and assessed on the basis of a b value.

A larger negative (-) absolute value of the b value means that the color is white and favorable. A larger positive (+) absolute value of the b value means that yellow staining occurs and is not favorable as color.

(21) Minimum filling pressure

A small tensile test specimen (type CP13) (3 mm thick) was produced according to JIS-K7139 using an injection molding machine from pellets of the polyamide resin composition produced in each of Examples and Comparative Examples mentioned later.

The injection molding apparatus used was PS40E manufactured by Nissei Plastic Industrial Co., Ltd. to which a two-cavity mold for the test specimen was attached.

The cylinder temperature was set to the melting point of the polyamide resin in the polyamide resin composition + approximately 15°C (e.g., 280°C for PA66), and the mold temperature was set to 80°C.

Injection for 10 seconds, cooling for 7 seconds, a plasticization level of 30 mm (cushion amount: approximately 10 mm), and an injection rate of 20.0% were set, and the pellets of the polyamide resin composition obtained in each of Examples and Comparative Examples mentioned later were molded into a dumbbell-shaped molded article.

At this time, the first 20 shots were excluded for stabilizing the molding cycle. Molding was carried out from the 21st shot at varying injection pressures. The smallest injection pressure at which the mold was completely filled with the resin was recorded as the minimum filling pressure ($kg/cm^2$).

A smaller minimum filling pressure means better melt flowability and was confirmed to be excellent in moldability.

(22) Hydrolysis resistance

A 50% aqueous solution of an antifreeze composed mainly of ethylene glycol (Toyota Genuine Long Life Coolant) was heated to 130°C, and the small tensile test specimen (type CP13) (3 mm thick) prepared in the paragraph (6) was dipped therein for 500 hours. After the dipping, the tensile strength (MPa) of the small tensile test specimen was measured in the same way as in the paragraph (7). A test specimen having a higher value of this measurement was evaluated as having better hydrolysis resistance.

[Production Example of polyamide resin (PA66-1)]

30 kg of a 50% aqueous solution of an equivalent salt of hexamethylenediamine and adipic acid was added into a 40 L autoclave, and well stirred while the temperature was kept at 50°C so as not to deposit the monomers. After sufficient purging of the autoclave with nitrogen, the internal temperature of the autoclave was raised from approximately 50°C to approximately 160°C. In this operation, the aqueous solution was continuously heated while water was removed from the system in order to keep the internal pressure of the autoclave at approximately 0.25 MPa as a gauge pressure, so that the aqueous solution was concentrated into approximately 75%. Then, the removal of water was temporarily stopped, and the internal temperature of the autoclave was raised to approximately 220°C. When the internal pressure of the autoclave reached approximately 1.8 MPa, the aqueous solution was continuously heated again while water was removed such that the internal pressure of the autoclave was kept constant. After the internal temperature of the autoclave was then raised to 260°C, the internal pressure of the autoclave was finally decreased gradually to atmospheric pressure (gauge pressure: 0 $kg/cm^2$) over 60 minutes under continuous heating of the aqueous solution. The internal pressure of the autoclave was kept at atmospheric pressure for 30 minutes, and the internal temperature of the autoclave was finally raised to approximately 273°C to obtain a polyamide resin (PA66-1). Then, the inside of the autoclave was pressurized with nitrogen, and the polyamide resin (PA66-1) in a strand form was discharged from the lower nozzle, cooled in water, and cut to obtain a polyamide resin (PA66-1) in a pellet form.

This polyamide resin (PA66-1) in a pellet form had a moisture content of 0.08% by mass.

Also, the obtained polyamide resin (PA66-1) had a viscosity number (VN) of 141 mL/g, a carboxyl group terminus concentration [COOH] of 84 milliequivalents/kg, an amino group terminus concentration [NH2] of 47 milliequivalents/kg, and a difference between the terminus concentrations ([COOH] - [NH2]) of 37 milliequivalents/kg.

[Production Example of polyamide resin (PA66-2)]

A 50% aqueous solution of an equivalent salt of hexamethylenediamine and adipic acid was cooled, and the deposited salt was isolated and dried in vacuum at 80°C to prepare a solid salt. 3000 g of the equimolar solid salt of hexamethylenediamine and adipic acid and 10.5 g of Ca phosphate were well stirred in a Henschel mixer. After sufficient purging of a 5 L autoclave with nitrogen, the pressure was set to 0.49 MPa as a gauge pressure, and the temperature was raised from room temperature to 190°C. This state was kept for 2 hours. In this operation, the internal pressure of the autoclave reached 1.47 MPa as a gauge pressure. Subsequently, the pressure was decreased to 0.049 MPa, and the temperature was raised to 240°C. This state was kept for 8 hours. In this series of operations, formed water was removed using a dephlegmator in order to keep the pressure at 0.049 MPa. After cooling, the autoclave was opened, and the polymer was taken out thereof and crushed. The crushed polymer was dried in the current of nitrogen of 80°C for 24 hours. Then, pellets were obtained using a small twin-screw extruder (manufactured by Toyo Seiki Seisaku-Sho, Ltd., Labo Plastomill model ME) under conditions involving a cylinder temperature of 280°C, the number of screw rotations of 70 rpm, and an extrusion rate of 4 kg/hr.

The obtained pellets of PA66 contained an apatite-based compound formed at the same time with polymerization, and had a phosphorus element concentration of 23.5 mmol and a calcium element concentration of 23.5 mmol per kg of the polyamide resin.

[Production Example of end-corrected polyamide resin (PA66-3)]

A polyamide resin (PA66-3) in a pellet form was obtained in the same way as in the production of PA66-1 except that 22.3 g of hexamethylenediamine was added for end correction to 30 kg of the 50% aqueous solution of an equivalent salt of hexamethylenediamine and adipic acid.

This polyamide resin (PA66-3) in a pellet form had a moisture content of 0.08% by mass.

Also, the obtained polyamide resin (PA66-3) had a viscosity number (VN) of 144 mL/g, a carboxyl group terminus concentration [COOH] of 72 milliequivalents/kg, an amino group terminus concentration [NH2] of 59 milliequivalents/kg, and a difference between the terminus concentrations ([COOH] - [NH2]) of 13 milliequivalents/kg.

[Production Example of end-corrected polyamide resin (PA66-4)]

A polyamide resin (PA66-4) in a pellet form was obtained in the same way as in the production of PA66-1 except that 55.8 g of hexamethylenediamine was added for end correction to 30 kg of the 50% aqueous solution of an equivalent salt of hexamethylenediamine and adipic acid.

This polyamide resin (PA66-4) in a pellet form had a moisture content of 0.08% by mass.

Also, the obtained polyamide resin (PA66-4) had a viscosity number (VN) of 142 mL/g, a carboxyl group terminus concentration [COOH] of 52 milliequivalents/kg, an amino group terminus concentration [NH2] of 78 milliequivalents/kg, and a difference between the terminus concentrations ([COOH] - [NH2]) of -26 milliequivalents/kg.

[Production Example of end-corrected polyamide resin (PA66-5)]

A polyamide resin (PA66-5) in a pellet form was obtained in the same way as in the production of PA66-1 except that 67.0 g of hexamethylenediamine was added for end correction to 30 kg of the 50% aqueous solution of an equivalent salt of hexamethylenediamine and adipic acid.

This polyamide resin (PA66-5) in a pellet form had a moisture content of 0.08% by mass.

Also, the obtained polyamide resin (PA66-5) had a viscosity number (VN) of 141 mL/g, a carboxyl group terminus concentration [COOH] of 49 milliequivalents/kg, an amino group terminus concentration [NH2] of 82 milliequivalents/kg, and a difference between the terminus concentrations ([COOH] - [NH2]) of -33 milliequivalents/kg.

[Production of increased-molecular-weight polyamide resin (PA66-6)]

10 kg of the PA66-1 pellets was placed in a conical ribbon vacuum dryer (manufactured by Okawara MFG. Co., Ltd., trade name: Ribocone RM-10V), and the inside of the vacuum dryer was sufficiently purged with nitrogen. While nitrogen was injected at 1 L/min into the vacuum dryer, the PA66-1 pellets were heated with stirring at a temperature of 204°C for 6 hours. Then, while nitrogen was circulated in the vacuum dryer, the temperature was decreased. When the temperature reached approximately 50°C, the pellets were isolated form the vacuum dryer to obtain an increased-molecular-weight polyamide resin (PA66-6) .

The pellets of this increased-molecular-weight polyamide resin (PA66-6) had a moisture content of 0.03% by mass.

Also, the obtained polyamide resin (PA66-6) had a viscosity number (VN) of 257 mL/g, a carboxyl group terminus concentration [COOH] of 53 milliequivalents/kg, an amino group terminus concentration [NH2] of 18 milliequivalents/kg, and a difference between the terminus concentrations ([COOH] - [NH2]) of 35 milliequivalents/kg.

[Production Example of salt (PHS) of phosphoric acid and hexamethylenediamine]

5 L of methanol and 502 g of hexamethylenediamine were placed in a 10 L reaction container and stirred to prepare a homogeneous solution.

498 g of phosphoric acid was added dropwise to the solution and reacted.

Then, the solvent methanol was filtered off from the solution, and the filter cake was isolated. The obtained filter cake was dried and crushed to obtain a powder of a salt of phosphoric acid and hexamethylenediamine (molar ratio: 1:1) (PHS).

[Production of amino group terminus-rich PA prepolymer (oligomer) (NH2-P)]

30 g of hexamethylenediamine was added to 2000 g of a 50% aqueous solution of an equivalent salt of hexamethylenediamine and adipic acid to obtain a mixed solution. The obtained mixed solution was added into a 5 L autoclave, and well stirred while the temperature was kept at 50°C so as not to deposit the monomers. After sufficient purging of the autoclave with nitrogen, the internal temperature of the autoclave was raised from approximately 50°C to approximately 160°C. In this operation, the mixed solution was continuously heated while water was removed from the system in order to keep the internal pressure of the autoclave at approximately 0.25 MPa as a gauge pressure, so that the mixed solution was concentrated into approximately 75%. Then, the removal of water was temporarily stopped, and the internal temperature of the autoclave was raised to approximately 220°C. When the internal pressure of the autoclave reached approximately 1.8 MPa, the heating of the mixed solution was stopped. Then, the internal temperature of the autoclave was dropped to room temperature over approximately 8 hours. After the cooling, the autoclave was opened, and approximately 880 g of a prepolymer (oligomer) mass was taken out thereof and crushed into a size corresponding to pellets (approximately 3 to 5 mm). The obtained polyamide resin (PA) prepolymer was dried to remove moisture. This crushed product (polyamide resin (PA) prepolymer) had a moisture content of 0.04% by mass.

The obtained polyamide resin (PA) prepolymer was subjected to molecular weight measurement by GPC. The obtained polyamide resin (PA) prepolymer had a number-average molecular weight (Mn) of 1400 and a weight-average molecular weight (Mw) of 2900. Also, the obtained polyamide resin (PA) prepolymer had a carboxyl group terminus concentration [COOH] of 460 milliequivalents/kg, an amino group terminus concentration [NH2] of 970 milliequivalents/kg, and a difference between the terminus concentrations ([COOH] - [NH2]) of -510 milliequivalents/kg.

[Example 1]

An extruder having the configuration schematically shown in Figure 1 was used. The extruder used was a twin-screw extruder (manufactured by Coperion GmbH, ZSK25) that had one top feed port (hereinafter, simply referred to as top-F) on the upper face (top position) of the first upstream barrel, and was equipped with two downstream feed ports, i.e., the first downstream feed port (hereinafter, simply referred to as side 1) on the lateral side of the 6th barrel and the second downstream feed port (hereinafter, simply referred to as side 2) on the lateral side of the 9th barrel, and further, three pressure reduction ports, i.e., the first pressure reduction port (hereinafter, simply referred to as vent 1) on the upper face of the 5th barrel, the second pressure reduction port (hereinafter, simply referred to as vent 2) on the upper face of the 8th barrel, and the third pressure reduction port (hereinafter, simply referred to as vent 3) on the upper face of the 11th barrel. The side 1 and the vent 1 were plugged and were not used. The resin sealing of the upstream and downstream portions of each degassing region was enabled using, for example, a reverse rotating kneading disc-installed screw such that the first degassing region in the 7th and 8th barrels corresponded to the vent 2, and the second degassing region in the 10th, 11th, and 12th barrels corresponded to the vent 3.

A blend of the PA66 pellets impregnated in advance with 0.115 parts by mass of an 85% aqueous phosphoric acid solution, i.e., 0.098 parts by mass of phosphoric acid (phosphorus element concentration: 10 mmol/kg of the polyamide resin) based on 100 parts by mass of PA66-1, was prepared. In the extruder, the blend of PA66 and phosphoric acid was supplied from the top-F, and KI was supplied from the side 2 at 0.287 parts by mass (potassium element concentration: 17.3 mmol/kg of the polyamide resin) based on 100 parts by mass of PA66, followed by melt kneading at the number of screw rotations of 300 rpm, a cylinder temperature of 300°C, an extrusion rate of 20 kg/hr, and a reduced pressure level of 0.085 MPa for the vent 2 and the vent 3. In this operation, the resin temperature around the head nozzle was 315°C, and the average residence time was 55 seconds. Under these conditions, the polyamide resin composition was discharged in a strand form from the head nozzle, cooled in water, and cut to obtain pellets of the polyamide resin composition. Then, the obtained pellets were dried to adjust the moisture content in the pellets.

Evaluation was conducted in Example 1 as an example corresponding to an aspect in which PA66 and phosphoric acid supplied from the top-F are first kneaded, and after the kneaded product passes through the first degassing region at the vent 2, KI is added from the side 2, as described above. The obtained polyamide resin composition was evaluated for the viscosity number of the polyamide resin, the moisture content, the confirmation of the apatite-based compound, the ISO tensile strength, the ISO tensile elongation, the mold release properties, and the gelation during residence in a molding machine. The evaluation results are shown in Table 1.

[Examples 2 and 3]

Pellets of the polyamide resin composition were obtained in the same way as in Example 1 except that the reduced pressure levels of the vent 2 and the vent 3 were changed as shown in Table 1. Then, the obtained pellets were dried to adjust the moisture content in the pellets. Various evaluations were conducted in the same way as in Example 1. The evaluation results are shown in Table 1.

[Examples 4 to 7 and Comparative Example 1]

Pellets of the polyamide resin composition were obtained in the same way as in Example 1 except that the amounts of the phosphoric acid and KI added were changed as shown in Table 1. Then, the obtained pellets were dried to adjust the moisture content in the pellets. Various evaluations were conducted in the same way as in Example 1. The evaluation results are shown in Table 1.

[Examples 9 and 10]

Pellets of the polyamide resin composition were obtained in the same way as in Example 1 except that the type and the amount of the metal compound (C2) were changed as shown in Table 1. Then, the obtained pellets were dried to adjust the moisture content in the pellets. Various evaluations were conducted in the same way as in Example 1. The evaluation results are shown in Table 1.

[Comparative Example 2]

Pellets of the polyamide resin composition were obtained in the same way as in Example 1 except that the position of addition of KI was changed from the side 2 to the top-F. Then, the obtained pellets were dried to adjust the moisture content in the pellets. Various evaluations were conducted in the same way as in Example 1. The evaluation results are shown in Table 1.

[Comparative Example 3]

Pellets of the polyamide resin composition were obtained in the same way as in Example 1 except that KI was not added. Then, the obtained pellets were dried to adjust the moisture content in the pellets. Various evaluations were conducted in the same way as in Example 1. The evaluation results are shown in Table 1.

[Comparative Example 4]

Pellets of the polyamide resin composition were obtained in the same way as in Example 1 except that the amounts of the phosphoric acid and KI added were changed. Then, the obtained pellets were dried to adjust the moisture content in the pellets. Various evaluations were conducted in the same way as in Example 1. The evaluation results are shown in Table 1.

[Comparative Example 5]

10 kg of the PA66-1 pellets obtained in Production Example above was placed in a conical ribbon vacuum dryer (manufactured by Okawara MFG. Co., Ltd., trade name: Ribocone RM-10V), and the inside of the vacuum dryer was sufficiently purged with nitrogen. While nitrogen was injected at 1 L/min into the vacuum dryer, the PA66-1 pellets were heated with stirring at a temperature of 210°C for 4 hours to perform the solid-phase polymerization of the polyamide resin. Then, while nitrogen was circulated in the vacuum dryer, the temperature was decreased. When the temperature reached approximately 50°C, the pellets were directly isolated form the vacuum dryer to obtain pellets of a material for polyamide resin molding containing the polyamide resin with a molecular weight increased by solid-phase polymerization. Various evaluations were conducted for the obtained pellets in the same way as in Example 1. The evaluation results are shown in Table 1.

[Comparative Example 6]

Various evaluations were conducted for PA66-2 produced in Production Example above in the same way as in Example 1. The evaluation results are shown in Table 1.

[Table 1]

| | Category | Example 1 | Example 2 | Example 3 | Example 4 | Example 5 | Example 6 | Example 7 | Comparative Example 1 | Example 9 | Example 10 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Composition | (A) Polyamide resin | PA66-1 | PA66-1 | PA66-1 | PA66-1 | PA66-1 | PA66-1 | PA66-1 | PA66-1 | PA66-1 | PA66-1 | PA66-1 | PA66-1 | PA66-1 | PA66-1 | PA66-2 |
| | part by mass | 100.0 | 100.0 | 100.0 | 100.0 | 100.0 | 100.0 | 100.0 | 100.0 | 100.0 | 100.0 | 100.0 | 100.0 | 100.0 | 100 | 100 |
| | (B) Phosphorus compound | Phosphoric acid | Phosphoric acid | Phosphoric acid | Phosphoric acid | Phosphoric acid | Phosphoric acid | Phosphoric acid | Phosphoric acid | Phosphoric acid | Phosphoric acid | Phosphoric acid | Phosphoric acid | Phosphoric acid | - | Ca phosphate |
| | part by mass | 0.098 | 0.098 | 0.098 | 0.049 | 0.49 | 0.98 | 1.96 | 4.9 | 0.098 | 0.098 | 0.098 | 0.098 | 0.003 | - | 0.40 |
| | Phosphorus element concentration: mmol/kg of polyamide resin | 10.0 | 10.0 | 10.0 | 5.0 | 50.0 | 100 | 200 | 500 | 10.0 | 10.0 | 10.0 | 10.0 | 0.3 | - | 23.6 |
| | Metal element concentration: mmol/kg of polyamide resin | | | | | | | | | | | | | | - | 23.6 |
| | (C2) Metal compound | KI | KI | KI | KI | KI | KI | KI | KI | LiCl | MgO | KI | - | KI | - | - |
| | part by mass | 0.287 | 0.287 | 0.287 | 0.144 | 1.39 | 2.87 | 5.74 | 14.4 | 0.042 | 0.040 | 0.287 | - | 0.009 | - | - |
| | Metal element concentration: mmol/kg of polyamide resin | 17.3 | 17.3 | 17.3 | 8.7 | 86.5 | 173 | 346 | 865 | 10.0 | 10.0 | 17.3 | - | 0.5 | - | - |
| Extrusion Conditions | Cylinder temperature (°C) | 300 | 300 | 300 | 300 | 300 | 300 | 300 | 300 | 300 | 300 | 300 | 300 | 300 | - | - |
| | Resin temperature (°C) | 315 | 315 | 315 | 315 | 315 | 315 | 315 | 315 | 313 | 310 | 307 | 318 | 304 | - | - |
| | Average residence time (s) | 55 | 55 | 55 | 55 | 55 | 55 | 55 | 55 | 55 | 55 | 55 | 55 | 55 | - | - |
| | top-F | - | - | - | - | - | - | - | - | - | - | KI | - | - | - | - |
| | vent2 reduced pressure level (MPa) | 0.085 | 0.060 | 0.095 | 0.085 | 0.085 | 0.085 | 0.085 | 0.085 | 0.085 | 0.085 | 0.085 | 0.085 | 0.085 | - | - |
| | Side-2 | KI | KI | KI | KI | KI | KI | KI | KI | LiCl | MgO | - | - | KI | - | - |
| | Vent-3 reduced pressure level (MPa) | 0.085 | 0.06 | 0.095 | 0.085 | 0.085 | 0.085 | 0.085 | 0.085 | 0.085 | 0.085 | 0.085 | 0.085 | 0.085 | - | - |
| | Solid-phase polymerization (postpolymerization) | Absent | Absent | Absent | Absent | Absent | Absent | Absent | Absent | Absent | Absent | Absent | Absent | Absent | Present | Absent |
| Physical properties | Containment of apatite-based compound | Absent | Absent | Absent | Absent | Absent | Absent | Absent | Absent | Absent | Absent | Absent | Absent | Absent | Absent | Present (0.35) |
| | Viscosity number VN of polyamide resin (mL/g) | 194 | 178 | 204 | 182 | 246 | 243 | 251 | 308 | 184 | 187 | 152 | 214 | 155 | 229 | 308 |
| | Pellet RV | 85 | 71 | 95 | 74 | 150 | 146 | 160 | 300 | 76 | 78 | 53 | 106 | 55 | 125 | 300 |

| | Category | Example 1 | Example 2 | Example 3 | Example 4 | Example 5 | Example 6 | Example 7 | Comparative Example 1 | Example 9 | Example 10 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| | Moisture content (% by mass) | 0.08 | 0.08 | 0.08 | 0.08 | 0.08 | 0.08 | 0.08 | 0.08 | 0.08 | 0.08 | 0.08 | 0.08 | 0.08 | 0.03 | 0.08 |
| | ISO tensile strength (MPa) | 81 | 81 | 80 | 82 | 80 | 80 | 79 | 77 | 81 | 80 | 84 | 81 | 82 | 81 | 79 |
| | ISO tensile elongation (%) | 39 | 36 | 46 | 31 | 40 | 39 | 25 | 21 | 34 | 35 | 19 | 31 | 22 | 45 | 23 |
| | Mold release properties | ○ | ○ | ○ | ○ | ○ | ○ | ○ | ○ | ○ | ○ | ○ | × | × | × | × |
| | Gelation during residence in molding machine | ○ | ○ | ○ | ○ | ○ | ○ | △ | × | ○ | ○ | ○ | × | ○ | ○ | ○ |

[Example 11]

The same twin-screw extruder (manufactured by Coperion GmbH, ZSK25) as in Example 1 was used. The vent 1 was plugged and was not used. The resin sealing of the upstream and downstream portions of each degassing region was enabled using, for example, a reverse rotating kneading disc-installed screw such that the first degassing region in the 7th and 8th barrels corresponded to the vent 2, and the second degassing region in the 10th, 11th, and 12th barrels corresponded to the vent 3.

A blend of the PA66 pellets impregnated in advance with 0.115 parts by mass of an 85% aqueous phosphoric acid solution, i.e., 0.098 parts by mass of phosphoric acid (phosphorus element concentration: 10 mmol/kg of the polyamide resin) based on 100 parts by mass of PA66-1, was prepared. In the extruder, the blend of PA66 and phosphoric acid was supplied from the top-F, and GF was supplied from the side 1 at 33 parts by mass based on 100 parts by mass of PA66, and further, KI was supplied from the side 2 at 0.287 parts by mass (potassium element concentration: 17.3 mmol/kg of the polyamide resin) based on 100 parts by mass of PA66, followed by melt kneading at the number of screw rotations of 300 rpm, a cylinder temperature of 300°C, an extrusion rate of 20 kg/hr, and a reduced pressure level of 0.085 MPa for the vent 2 and the vent 3. In this operation, the resin temperature around the head nozzle was 336°C, and the average residence time was 55 seconds. Under these conditions, the polyamide resin composition was discharged in a strand form from the head nozzle, cooled in water, and cut to obtain pellets of the polyamide resin composition. Then, the obtained pellets were dried to adjust the moisture content in the pellets.

Evaluation was conducted in this Example as an example corresponding to an aspect in which PA66 and phosphoric acid supplied from the top-F are first kneaded, then GF is kneaded, and then, after the kneaded product passes through the first degassing region at the vent 2, KI is added from the side 2, as described above. The obtained polyamide resin composition was evaluated for the viscosity number of the polyamide resin, the moisture content, the confirmation of the apatite-based compound, the JIS tensile strength, the JIS tensile elongation, the gelation during residence in a molding machine, and the creep resistance at 120°C. Also, the mass productivity (continuous operation performance) was evaluated at the time of extrusion. The evaluation results are shown in Table 2.

[Example 12]

The vent 2 was plugged and was not used. Pellets of the polyamide resin composition were obtained in the same way as in Example 11 except that: the resin sealing of the upstream and downstream portions of each degassing region was enabled using, for example, a reverse rotating kneading disc-installed screw such that the first degassing region in the 4th and the 5th barrels corresponded to the vent 1, and the second degassing region in the 10th, 11th, and 12th barrels corresponded to the vent 3; and the reduced pressure level was set to 0.085 MPa for the vent 1 and the vent 3. Then, the obtained pellets were dried to adjust the moisture content in the pellets. Specifically, evaluation was conducted in this Example as an example corresponding to an aspect in which PA66 and phosphoric acid supplied from the top-F are first kneaded, then after the kneaded product passes through the first degassing region at the vent 1, GF is kneaded, and KI is added from the side 2. Various evaluations were conducted for the obtained pellets in the same way as in Example 11. The evaluation results are shown in Table 2.

[Example 13]

Pellets of the polyamide resin composition were obtained in the same way as in Example 11 except that nothing was added from the side 1, and both KI and GF were added from the side 2. Then, the obtained pellets were dried to adjust the moisture content in the pellets. Specifically, evaluation was conducted in this Example as an example corresponding to an aspect in which PA66 and phosphoric acid supplied from the top-F are first kneaded, then after the kneaded product passes through the first degassing region at the vent 2, GF and KI are added at the same time from the side 2. Various evaluations were conducted for the obtained pellets in the same way as in Example 11. The evaluation results are shown in Table 2.

[Comparative Example 7]

Pellets of the polyamide resin composition were obtained in the same way as in Example 11 except that KI from the side 2 was not added. Then, the obtained pellets were dried to adjust the moisture content in the pellets. Various evaluations were conducted in the same way as in Example 11. The evaluation results are shown in Table 2.

[Comparative Example 8]

Pellets of the polyamide resin composition were obtained in the same way as in Example 11 except that KI was added from the top-F, and nothing was added from the side 2. Then, the obtained pellets were dried to adjust the moisture content in the pellets. Various evaluations were conducted in the same way as in Example 11. The evaluation results are shown in Table 2.

[Table 2]

| Category | | Example 11 | Example 12 | Example 13 | Comparative Example 7 | Comparative Example 8 |
|---|---|---|---|---|---|---|
| Composition | (A) Polyamide resin | PA66-1 | PA66-1 | PA66-1 | PA66-1 | PA66-1 |
| | part by mass | 100.0 | 100.0 | 100.0 | 100.0 | 100.0 |
| | (B) Phosphorus compound | Phosphoric acid | Phosphoric acid | Phosphoric acid | Phosphoric acid | Phosphoric acid |
| | part by mass | 0.098 | 0.098 | 0.098 | 0.098 | 0.098 |
| | Phosphorus element concentration: mmol/kg of polyamide resin | 10.0 | 10.0 | 10.0 | 10.0 | 10.0 |
| | Metal element concentration: mmol/kg of polyamide resin | | | | | |

(continued)

| Category | | Example 11 | Example 12 | Example 13 | Comparative Example 7 | Comparative Example 8 |
|---|---|---|---|---|---|---|
| | (C2) Metal compound | KI | KI | KI | - | KI |
| | part by mass | 0.287 | 0.287 | 0.287 | - | 0.287 |
| | Metal element concentration: mmol/kg of polyamide resin | 17.3 | 17.3 | 17.3 | - | 17.3 |
| | (D) Reinforcing material | GF | GF | GF | GF | GF |
| | part by mass | 33 | 33 | 33 | 33 | 33 |
| Extrusion conditions | Cylinder temperature (°C) | 300 | 300 | 300 | 300 | 300 |
| | Resin temperature (°C) | 336 | 332 | 337 | 345 | 327 |
| | Average residence time (s) | 55 | 55 | 55 | 55 | 55 |
| | top-F | - | - | - | - | KI |
| | vent1 reduced pressure level (MPa) | - | 0.085 | - | - | - |
| | Side-1 | GF | GF | - | GF | GF |
| | vent2 reduced pressure level (MPa) | 0.085 | - | 0.085 | 0.085 | 0.085 |
| | Side-2 | KI | KI | GF+KI | - | - |
| | Vent-3 reduced pressure level (MPa) | 0.085 | 0.085 | 0.085 | 0.085 | 0.085 |
| Physical properties | Containment of apatite-based compound | Absent | Absent | Absent | Absent | Absent |
| | Viscosity number VN of polyamide resin (mL/g) | 220 | 211 | 222 | 227 | 158 |
| | Pellet RV | 113 | 102 | 115 | 122 | 57 |
| | Moisture content (% by mass) | 0.08 | 0.08 | 0.08 | 0.08 | 0.08 |
| | JIS tensile strength | 178 | 174 | 173 | 169 | 178 |
| | JIS tensile elongation | 4.7 | 4.5 | 4.9 | 4.2 | 4.2 |
| | Gelation during residence in molding machine | ○ | ○ | ○ | × | ○ |

(continued)

| Category | | Example 11 | Example 12 | Example 13 | Comparative Example 7 | Comparative Example 8 |
|---|---|---|---|---|---|---|
| | Creep resistance at 120 (°C) | ○ | Δ | Δ | × | - |
| Continuous operation performance | vent1 Polyamide resin or GF accumulation | - | ○ | - | - | - |
| | vent2 Polyamide resin or GF accumulation | × | - | ○ | × | × |
| | vent3 Polyamide resin or GF accumulation | ○ | ○ | × | ×× | ○ |

[Comparative Example 7] Already described

The extruder used was a twin-screw extruder (manufactured by Coperion GmbH, ZSK25) that had a top feed port (hereinafter, simply referred to as top-F) on the upper face (top position) of an upstream barrel, and was equipped with two feed ports on the lateral side of downstream barrels and two pressure reduction ports on the upper face of downstream barrels. The feed ports on the lateral side were the first feed port (hereinafter, simply referred to as side 1) and the second feed port (hereinafter, simply referred to as side 2), respectively, from the upstream side. The pressure reduction ports on the upper face were the first pressure reduction port (hereinafter, simply referred to as vent 1) and the second pressure reduction port (hereinafter, simply referred to as vent 2), respectively, from the upstream side. The side 1, the vent 1, the side 2, and the vent 2 were mounted in this order from the upstream side. The resin sealing of the upstream and downstream portions of each degassing region (pressure reduction port) was enabled using, for example, a reverse rotating kneading disc-installed screw.

A blend of the PA66 pellets impregnated in advance with 0.115 parts by mass of an 85% aqueous phosphoric acid solution, i.e., 0.098 parts by mass of phosphoric acid (phosphorus element concentration: 10.0 mmol/kg of the polyamide resin) based on 100 parts by mass of PA66-1, was prepared. In the extruder, the blend of PA66 and phosphoric acid was supplied from the top-F, and GF was supplied from the side 1 at 33 parts by mass based on 100 parts by mass of PA66-1, followed by melt kneading at the number of screw rotations of 300 rpm, a cylinder temperature of 300°C, an extrusion rate of 20 kg/hr, and a reduced pressure level of 0.085 MPa for the vent 1 and the vent 2. In this operation, the resin temperature around the head nozzle was 315°C, and the average residence time was 55 seconds. Under these conditions, the polyamide resin composition was discharged in a strand form from the head nozzle, cooled in water, and cut to obtain pellets of the polyamide resin composition. Then, the pellets were dried to adjust the moisture content in the pellets. The obtained polyamide resin composition was evaluated for the viscosity number of the polyamide resin, the moisture content, the confirmation of the apatite-based compound, the difference between the heats of fusion, the rate of phosphorus element concentration retention, the rate of tensile strength retention, the molding plasticizing properties, the Charpy impact strength, the gelation during residence in a molding machine, and the staining caused by mixing with CuI/KI. The evaluation results are shown in Table 3.

[Example 11] Already described

Pellets of the polyamide resin composition were obtained in the same way as in Comparative Example 7 except that 0.287 parts by mass of KI, i.e., KI (potassium element concentration: 17.3 mmol/kg of the polyamide resin), based on 100 parts by mass of PA66-1 were supplied from the side 2. Then, the pellets were dried to adjust the moisture content in the pellets. Various evaluations were conducted in the same way as in Comparative Example 7. The evaluation results are shown in Table 3.

[Example 14]

Pellets of the polyamide resin composition were obtained in the same way as in Comparative Example 7 except that 0.0112 parts by mass of CaO, i.e., CaO (calcium element concentration: 2.0 mmol/kg of the polyamide resin), based on 100 parts by mass of PA66-1 were supplied from the side 2. Then, the pellets were dried to adjust the moisture content in the pellets. Various evaluations were conducted in the same way as in Comparative Example 7. The evaluation results are shown in Table 3.

[Examples 15, 16, 18, and 19]

Pellets of the polyamide resin composition were obtained in the same way as in Comparative Example 7 except that the amount of CaO added was changed as shown in Table 3. Then, the pellets were dried to adjust the moisture content in the pellets. Various evaluations were conducted in the same way as in Comparative Example 7. The evaluation results are shown in Table 3.

[Example 17]

A blend of the PA66-1 pellets and PHS was prepared by adding in advance 0.214 parts by mass of PHS obtained in Production Example above (phosphorus element concentration: 10.0 mmol/kg of the polyamide resin) based on 100 parts by mass of PA66-1.
Pellets of the polyamide resin composition were obtained in the same way as in Comparative Example 7 except that in the extruder, the blend of PA66-1 and PHS thus prepared was supplied instead of the blend of PA66-1 and phosphoric acid from the top-F, and 0.056 parts by mass of CaO, i.e., CaO (calcium element concentration: 10.0 mmol/kg of the polyamide resin), based on 100 parts by mass of PA66-1 were supplied from the side 2. Then, the pellets were dried to adjust the moisture content in the pellets. Various evaluations were conducted in the same way as in Comparative Example 7. The evaluation results are shown in Table 3.

[Example 20]

Pellets of the polyamide resin composition were obtained in the same way as in Comparative Example 7 except that 0.0561 parts by mass of CaO, i.e., CaO (calcium element concentration: 10.0 mmol/kg of the polyamide resin), and 0.287 parts by mass of KI, i.e., KI (potassium element concentration: 17.3 mmol/kg of the polyamide resin), based on 100 parts by mass of PA66-1 were supplied from the side 2. Then, the pellets were dried to adjust the moisture content in the pellets. Various evaluations were conducted in the same way as in Comparative Example 7. The evaluation results are shown in Table 3.

[Example 21]

Pellets of the polyamide resin composition were obtained in the same way as in Comparative Example 7 except that 0.0741 parts by mass of $Ca(OH)_2$, i.e., $Ca(OH)_2$ (calcium element concentration: 10.0 mmol/kg of the polyamide resin), based on 100 parts by mass of PA66-1 were supplied from the side 2. Then, the pellets were dried to adjust the moisture content in the pellets. Various evaluations were conducted in the same way as in Comparative Example 7. The evaluation results are shown in Table 3.

[Example 22]

Pellets of the polyamide resin composition were obtained in the same way as in Comparative Example 7 except that 0.0403 parts by mass of MgO, i.e., MgO (magnesium element concentration: 10.0 mmol/kg of the polyamide resin), based on 100 parts by mass of PA66-1 were supplied from the side 2. Then, the pellets were dried to adjust the moisture content in the pellets. Various evaluations were conducted in the same way as in Comparative Example 7. The evaluation results are shown in Table 3.

[Example 23]

Pellets of the polyamide resin composition were obtained in the same way as in Comparative Example 7 except that 0.0583 parts by mass of $Mg(OH)_2$, i.e., $Mg(OH)_2$ (magnesium element concentration: 10.0 mmol/kg of the polyamide resin), based on 100 parts by mass of PA66-1 were supplied from the side 2. Then, the pellets were dried to adjust the moisture content in the pellets. Various evaluations were conducted in the same way as in Comparative Example 7. The evaluation results are shown in Table 3.

[Comparative Example 9]

A blend of the PA66-1 pellets and SHP was prepared by adding in advance 0.106 parts by mass of SHP, i.e., SHP (phosphorus element concentration: 10.0 mmol/kg of the polyamide resin, sodium element concentration: 10.0 mmol/kg of the polyamide resin) based on 100 parts by mass of PA66-1.

Pellets of the polyamide resin composition were obtained in the same way as in Comparative Example 7 except that in the extruder, the blend of PA66-1 and SHP was supplied from the top-F, 33 parts by mass of GF based on 100 parts by mass of PA66 were supplied from the side 1, and 0.0561 parts by mass of CaO, i.e., CaO (calcium element concentration: 10.0 mmol/kg of the polyamide resin) were supplied from the side 2. Then, the pellets were dried to adjust the moisture content in the pellets. Various evaluations were conducted in the same way as in Comparative Example 7. The evaluation results are shown in Table 3.

[Example 24]

A blend of the PA66-1 pellets and Ca phosphate was prepared by adding in advance 0.172 parts by mass of Ca phosphate, i.e., Ca phosphate (phosphorus element concentration: 10.0 mmol/kg of the polyamide resin, calcium element concentration: 10.0 mmol/kg of the polyamide resin) based on 100 parts by mass of PA66-1.

Pellets of the polyamide resin composition were obtained in the same way as in Comparative Example 7 except that in the extruder, the blend of PA66-1 and Ca phosphate was supplied from the top-F, and 33 parts by mass of GF based on 100 parts by mass of PA66 were supplied from the side 1. 10 kg of the pellets was placed in a conical ribbon vacuum dryer (manufactured by Okawara MFG. Co., Ltd., trade name: Ribocone RM-10V), and the inside of the vacuum dryer was sufficiently purged with nitrogen. While nitrogen was injected at 1 L/min into the vacuum dryer, the pellets were heated with stirring at a temperature of 210°C for 4 hours to perform the solid-phase polymerization of the polyamide resin. Then, while nitrogen was circulated in the vacuum dryer, the temperature was decreased. When the temperature reached approximately 50°C, the pellets were directly isolated form the vacuum dryer to obtain pellets of a polyamide resin composition containing the polyamide resin with a molecular weight increased by solid-phase polymerization (postpolymerization). Various evaluations were conducted for the obtained pellets in the same way as in Comparative Example 7. The evaluation results are shown in Table 3.

[Example 25]

Pellets of the polyamide resin composition were obtained in the same way as in Example 24 except that the Ca phosphate was changed to 0.172 parts by mass of K phosphate, i.e., K phosphate (phosphorus element concentration: 10.0 mmol/kg of the polyamide resin, potassium element concentration: 20.0 mmol/kg of the polyamide resin), based on 100 parts by mass of PA66-1. Various evaluations were conducted for the obtained pellets in the same way as in Comparative Example 7. The evaluation results are shown in Table 3.

[Table 3]

| Category | Comparative Example 7 (already described) | Example 11 already described | Example 14 | Example 15 | Example 16 | Example 17 | Example 18 | Example 19 | Example 20 | Example 21 | Example 22 | Example 23 | Comparative Example 9 | Example 24 | Example 25 |
|---|---|---|---|---|---|---|---|---|---|---|---|---|---|---|---|
| (A) Polyamide resin | PA66-1 | PA66-1 | PA66-1 | PA66-1 | PA66-1 | PA66-1 | PA66-1 | PA66-1 | PA66-1 | PA66-1 | PA66-1 | PA66-1 | PA66-1 | PA66-1 | PA66-1 |
| part by mass | 100 | 100 | 100 | 100 | 100 | 100 | 100 | 100 | 100 | 100 | 100 | 100 | 100 | 100 | 100 |
| (B) Phosphorus compound | Phosphoric acid | Phosphoric acid | Phosphoric acid | Phosphoric acid | Phosphoric acid | PHS | Phosphoric acid | Phosphoric acid | Phosphoric acid | Phosphoric acid | Phosphoric acid | Phosphoric acid | SHP | Ca phosphate | K phosphate |
| part by mass | 0.098 | 0.098 | 0.098 | 0.098 | 0.098 | 0.214 | 0.098 | 0.098 | 0.098 | 0.098 | 0.098 | 0.098 | 0.106 | 0.172 | 0.174 |
| Phosphorus element concentration: mmol/kg of polyamide resin | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 |
| Metal element concentration: mmol/kg of polyamide resin | | | | | | | | | | | | | 10.0 | 10.0 | 20.0 |
| (C2) Metal compound | | KI | CaO | CaO | CaO | CaO | CaO | CaO | CaO | Ca(OH)2 | MgO | Mg(OH)2 | CaO | | |
| part by mass | | 0.287 | 0.011 | 0.028 | 0.056 | 0.056 | 0.084 | 0.112 | 0.056 | 0.074 | 0.040 | 0.058 | 0.056 | | |
| Metal element concentration: mmol/kg of polyamide resin | | 17.3 | 2.0 | 5.0 | 10.0 | 10.0 | 15.0 | 20.0 | 10.0 | 10.0 | 10.0 | 10.0 | 10.0 | | |
| (C2) Metal compound | | | | | | | | | KI | | | | | | |
| part by mass | | | | | | | | | 0.287 | | | | | | |
| Metal element concentration: mmol/kg of polyamide resin | | | | | | | | | 17.3 | | | | | | |
| (D) Reinforcing material | GF | GF | GF | GF | GF | GF | GF | GF | GF | GF | GF | GF | GF | GF | GF |
| part by mass | 33 | 33 | 33 | 33 | 33 | 33 | 33 | 33 | 33 | 33 | 33 | 33 | 33 | 33 | 33 |
| Solid-phase polymerization (postpolymerization) | Absent | Absent | Absent | Absent | Absent | Absent | Absent | Absent | Absent | Absent | Absent | Absent | Absent | Present | Present |

| Category | Comparative Example 7 | Example 11 | Example 14 | Example 15 | Example 16 | Example 17 | Example 18 | Example 19 | Example 20 | Example 21 | Example 22 | Example 23 | Comparative Example 9 | Example 24 | Example 25 |
|---|---|---|---|---|---|---|---|---|---|---|---|---|---|---|---|
| Containment of apatite-based compound | Absent | Absent | Absent | Absent | Absent | Absent | Absent | Absent | Absent | Absent | Absent | Absent | Absent | Absent | Absent |
| Viscosity number VN of polyamide resin (mL/g) | 227 | 220 | 215 | 208 | 203 | 211 | 201 | 200 | 204 | 194 | 200 | 196 | 155 | 225 | 222 |
| Formic acid relative viscosity RV | 122 | 113 | 107 | 99 | 94 | 102 | 91 | 90 | 95 | 85 | 90 | 87 | 55 | 120 | 116 |
| Moisture content in pellets (% by mass) | 0.08 | 0.08 | 0.08 | 0.08 | 0.08 | 0.08 | 0.08 | 0.08 | 0.08 | 0.08 | 0.08 | 0.08 | 0.08 | 0.03 | 0.03 |
| Difference between heats of fusion (J/g) | -2.8 | -3.2 | -3.5 | -3.3 | -3.8 | -3.8 | -3.7 | -3.9 | -3.9 | -3.7 | -3.2 | -3.1 | -3.2 | 10.6 | 10.3 |
| Initial phosphorus element concentration (ppm) | 205 | 213 | 215 | 212 | 217 | 215 | 216 | 211 | 214 | 216 | 218 | 213 | 218 | 215 | 212 |
| Phosphorus element concentration after dipping treatment (ppm) | 96 | 99 | 118 | 140 | 166 | 166 | 168 | 167 | 155 | 163 | 140 | 147 | 115 | 181 | 95 |
| Rate of phosphorus element concentration retention (%) | 47 | 47 | 55 | 66 | 76 | 77 | 78 | 79 | 73 | 76 | 64 | 69 | 53 | 84 | 45 |
| Tensile strength (MPa) | 169 | 178 | 179 | 177 | 176 | 176 | 175 | 176 | 176 | 173 | 175 | 175 | 175 | 181 | 175 |
| Rate of water absorption | 7.9 | 7.8 | 7.8 | 7.8 | 7.7 | 7.7 | 7.7 | 7.7 | 7.7 | 7.6 | 7.7 | 7.7 | 7.8 | 7.7 | 7.7 |
| Tensile strength with water absorption (MPa) | 73 | 74 | 81 | 84 | 90 | 91 | 91 | 93 | 90 | 89 | 82 | 84 | 75 | 91 | 60 |
| Rate of tensile strength retention (%) | 43 | 42 | 45 | 47 | 51 | 52 | 52 | 53 | 51 | 51 | 47 | 48 | 43 | 50 | 34 |
| Average plasticization time (sec) | 1.85 | 1.81 | 1.76 | 1.75 | 1.73 | 1.73 | 1.73 | 1.75 | 1.77 | 1.75 | 1.77 | 1.78 | 1.75 | 1.96 | 1.96 |
| Plasticization maximum-minimum difference (sec) | 0.22 | 0.20 | 0.18 | 0.16 | 0.14 | 0.13 | 0.14 | 0.14 | 0.15 | 0.16 | 0.18 | 1.18 | 0.18 | 0.40 | 0.42 |
| Charpy impact strength (kJ/m²) | 17.6 | 16.8 | 17.0 | 16.8 | 16.6 | 16.8 | 16.4 | 16.3 | 16.6 | 16.0 | 16.3 | 16.1 | 13.6 | 17.8 | 16.9 |
| Gelation during residence in molding machine | × | ○ | ○ | ○ | ○ | ○ | ○ | ○ | ○ | ○ | ○ | ○ | ○ | ○ | ○ |
| Staining caused by mixing with CuI/KI | Absent | Absent | Absent | Absent | Absent | Absent | Absent | Absent | Absent | Absent | Absent | Absent | Present | Absent | Absent |

[Example 16] Already described

The extruder used was a twin-screw extruder (manufactured by Coperion GmbH, ZSK25) that had a top feed port (hereinafter, simply referred to as top-F) on the upper face (top position) of an upstream barrel, and was equipped with two feed ports on the lateral side of downstream barrels and two pressure reduction ports on the upper face of downstream barrels. The feed ports on the lateral side were the first feed port (hereinafter, simply referred to as side 1) and the second feed port (hereinafter, simply referred to as side 2), respectively, from the upstream side. The pressure reduction ports on the upper face were the first pressure reduction port (hereinafter, simply referred to as vent 1) and the second pressure reduction port (hereinafter, simply referred to as vent 2), respectively, from the upstream side. The side 1, the vent 1, the side 2, and the vent 2 were mounted in this order from the upstream side. The resin sealing of the upstream and downstream portions of each degassing region (pressure reduction port) was enabled using, for example, a reverse rotating kneading disc-installed screw.

A blend of the PA66 pellets impregnated in advance with 0.115 parts by mass of an 85% aqueous phosphoric acid solution, i.e., 0.098 parts by mass of phosphoric acid (phosphorus element concentration: 10.0 mmol/kg of the polyamide resin) based on 100 parts by mass of PA66-1, was prepared. In the extruder, the blend of PA66 and phosphoric acid was supplied from the top-F, GF was supplied from the side 1 at 33 parts by mass based on 100 parts by mass of PA66-1, and CaO was supplied from the side 2 at 0.056 parts by mass (calcium element concentration: 10.0 mmol/kg of the polyamide resin) based on 100 parts by mass of PA66, followed by melt kneading at the number of screw rotations of 300 rpm, a cylinder temperature of 300°C, an extrusion rate of 20 kg/hr, and a reduced pressure level of 0.085 MPa for the vent 1 and the vent 2. In this operation, the resin temperature around the head nozzle was 345°C, and the average residence time was 55 seconds. Under these conditions, the polyamide resin composition was discharged in a strand form from the head nozzle, cooled in water, and cut to obtain pellets of the polyamide resin composition. Then, the pellets were dried to adjust the moisture content in the pellets. The obtained polyamide resin composition was evaluated for the viscosity number of the polyamide resin, the moisture content, the confirmation of the apatite-based compound, the difference between the carboxyl group terminus concentration and the amino group terminus concentration, the difference between the heats of fusion, the pellet color (b value), the molding plasticizing properties, the minimum filling pressure, the JIS tensile strength, the Charpy impact strength, the hydrolysis resistance, the mold release properties, and the staining caused by mixing with CuI/KI. Also, the torque of extrusion was recorded at the time of extrusion. The evaluation results are shown in Table 4.

[Example 26]

A blend of 0.115 parts by mass of an 85% aqueous phosphoric acid solution added based on 100 parts by mass of PA66-1 obtained in Production Example above, i.e., a blend of 100 parts by mass of the PA66-1 pellets impregnated in advance with 0.098 parts by mass of phosphoric acid (phosphorus element concentration: 10 mmol/kg of the polyamide resin) and further supplemented with 0.28 parts by mass of the amino group terminus-rich PA prepolymer (oligomer) (NH2-P) obtained in Production Example above (2 mmol/kg of the polyamide resin) based on 100 parts by mass of PA66-1, was prepared.

Pellets of the polyamide resin composition were obtained in the same way as in Example 16 except that in the twin-screw extruder, the blend of PA66-1, phosphoric acid, and the amino group terminus-rich PA prepolymer (oligomer) thus prepared was supplied instead of the blend of PA66-1 and phosphoric acid from the top-F. Then, the obtained pellets were dried to adjust the moisture content in the pellets. Various evaluations were conducted in the same way as in Example 16. The evaluation results are shown in Table 4.

[Examples 27 to 29]

Pellets of the polyamide resin composition were obtained in the same way as in Example 26 except that the amount of the amino group terminus-rich PA prepolymer (oligomer) (NH2-P) added was changed as shown in Table 4. Then, the pellets were dried to adjust the moisture content in the pellets. Various evaluations were conducted in the same way as in Example 16. The evaluation results are shown in Table 4.

[Example 17] Already described

A blend of the PA66-1 pellets and PHS was prepared by adding in advance 0.214 parts by mass of PHS obtained in Production Example above (phosphorus element concentration: 10 mmol/kg of the polyamide resin) based on 100 parts by mass of PA66-1 obtained in Production Example above.

Pellets of the polyamide resin composition were obtained in the same way as in Example 16 except that in the twin-screw extruder, the blend of PA66-1 and PHS thus prepared was supplied instead of the blend of PA66-1 and phosphoric acid from the top-F. Then, the obtained pellets were dried to adjust the moisture content in the pellets. Various evaluations were conducted in the same way as in Example 16. The evaluation results are shown in Table 4.

[Comparative Example 10]

Pellets of the polyamide resin composition were obtained in the same way as in Example 16 except that in the twin-screw extruder, only PA66-3 obtained in Production Example above was supplied instead of the blend of PA66-1 and phosphoric acid from the top-F.

Next, 10 kg of the obtained pellets of the polyamide resin composition was placed in a conical ribbon vacuum dryer (manufactured by Okawara MFG. Co., Ltd., trade name: Ribocone RM-10V), and the inside of the vacuum dryer was sufficiently purged with nitrogen. While nitrogen was injected at 1 L/min into the vacuum dryer, the pellets of the polyamide resin composition were heated with stirring at a temperature of 210°C for 2 hours to perform the solid-phase polymerization of the polyamide resin. Then, while nitrogen was circulated in the vacuum dryer, the temperature was decreased. When the temperature reached approximately 50°C, the pellets were directly isolated from the vacuum dryer to obtain pellets of a polyamide resin composition containing the polyamide resin with a molecular weight increased by solid-phase polymerization. Various evaluations were conducted for the obtained pellets in the same way as in Example 16. The evaluation results are shown in Table 4.

[Comparative Examples 11 and 12]

Pellets of the polyamide resin composition were obtained in the same way as in Comparative Example 10 except that the PA66-3 was changed to the polyamide as shown in Table 4. Various evaluations were conducted for the obtained pellets in the same way as in Example 16. The evaluation results are shown in Table 4.

[Comparative Example 13]

A blend of the PA66-1 pellets, SHP, and the amino group terminus-rich PA prepolymer (oligomer) was prepared by adding in advance 0.106 parts by mass of SHP (phosphorus element concentration: 10 mmol/kg of the polyamide resin) and 1.40 parts by mass of the amino group terminus-rich PA prepolymer (oligomer) (NH2-P) obtained in Production Example above (10 mmol/kg of the polyamide resin) based on 100 parts by mass of PA66-1 obtained in Production Example above.
Pellets of the polyamide resin composition were obtained in the same way as in Example 16 except that in the twin-screw extruder, the blend of PA66-1, SHP, and the amino group terminus-rich PA prepolymer (oligomer) thus prepared was supplied instead of the blend of PA66-1 and phosphoric acid from the top-F. Then, the obtained pellets were dried to adjust the moisture content in the pellets. Various evaluations were conducted in the same way as in Example 16. The evaluation results are shown in Table 4.

[Comparative Example 14]

Pellets of the polyamide resin composition were obtained in the same way as in Comparative Example 13 except that the amino group terminus-rich PA prepolymer (oligomer) was not added. Then, the obtained pellets were dried to adjust the moisture content in the pellets. Various evaluations were conducted in the same way as in Example 16. The evaluation results are shown in Table 4.

[Comparative Example 15]

Pellets of the polyamide resin composition were obtained in the same way as in Example 16 except that in the twin-screw extruder, only PA66-1 obtained in Production Example above was supplied instead of the blend of PA66-1 and phosphoric acid from the top-F, and CaO was not added.
Next, 10 kg of the obtained pellets of the polyamide resin composition was placed in a conical ribbon vacuum dryer (manufactured by Okawara MFG. Co., Ltd., trade name: Ribocone RM-10V), and the inside of the vacuum dryer was sufficiently purged with nitrogen. While nitrogen was injected at 1 L/min into the vacuum dryer, the pellets of the polyamide resin composition were heated with stirring at a temperature of 210°C for 2.5 hours to perform the solid-phase polymerization of the polyamide resin. Then, while nitrogen was circulated in the vacuum dryer, the temperature was decreased. When the temperature reached approximately 50°C, the pellets were directly isolated form the vacuum dryer to obtain pellets of a polyamide resin composition containing the polyamide resin with a molecular weight increased by solid-phase polymerization. Various evaluations were conducted for the obtained pellets in the same way as in Example 16. The evaluation results are shown in Table 4.

[Comparative Example 16]

Pellets of the polyamide resin composition were obtained in the same way as in Example 16 except that in the twin-screw extruder, only PA66-6 obtained in Production Example above was supplied instead of the blend of PA66-1 and phosphoric acid from the top-F, and CaO was not added. Then, the obtained pellets were dried to adjust the moisture content in the pellets. Various evaluations were conducted in the same way as in Example 16. The evaluation results are shown in Table 4.

[Table 4]

| | | Example 16 already described | Example 26 | Example 27 | Example 28 | Example 29 | Example 17 already described | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|---|---|---|---|---|---|
| Raw material component | (A) Polyamide resin | PA66-1 | PA66-1 | PA66-1 | PA66-1 | PA66-1 | PA66-1 | PA66-3 | PA66-4 | PA66-5 | PA66-1 | PA66-1 | PA66-1 | PA66-6 |
| | part by mass | 100 | 100 | 100 | 100 | 100 | 100 | 100 | 100 | 100 | 100 | 100 | 100 | 100 |
| | (B) Phosphorus compound | Phosphoric acid | Phosphoric acid | Phosphoric acid | Phosphoric acid | Phosphoric acid | PHS | Absent | Absent | Absent | SHP | SHP | Absent | Absent |
| | part by mass | 0.098 | 0.098 | 0.098 | 0.098 | 0.098 | 0.214 | - | - | - | 0.106 | 0.106 | - | - |
| | Phosphorus element concentration: mmol/kg of polyamide resin | 10 | 10 | 10 | 10 | 10 | 10 | - | - | - | 10 | 10 | 0 | 0 |
| | (C2) Metal compound | CaO | CaO | CaO | CaO | CaO | CaO | CaO | CaO | CaO | CaO | CaO | | |
| | part by mass | 0.056 | 0.056 | 0.056 | 0.056 | 0.056 | 0.056 | 0.056 | 0.056 | 0.056 | 0.056 | 0.056 | | |
| | Metal element concentration: mmol/kg of polyamide resin | 10.0 | 10.0 | 10.0 | 10.0 | 10.0 | 10.0 | 10.0 | 10.0 | 10.0 | 10.0 | 10.0 | | |
| | (D) Reinforcing material | GF | GF | GF | GF | GF | GF | GF | GF | GF | GF | GF | GF | GF |
| | part by mass | 33 | 33 | 33 | 33 | 33 | 33 | 33 | 33 | 33 | 33 | 33 | 33 | 33 |
| | (E) Amine component | Absent | NH2-P | NH2-P | NH2-P | NH2-P | Contained in PHS | Absent | Absent | Absent | NH2-P | Absent | Absent | Absent |
| | part by mass | - | 0.28 | 0.70 | 1.40 | 2.80 | - | - | - | - | 1.40 | - | - | - |
| | As amine: mmol/kg of component (A) | - | 2 | 5 | 10 | 20 | 10 | - | - | - | 10 | - | - | - |
| Extrusion conditions | Resin temperature (°C) | 334 | 331 | 327 | 330 | 332 | 330 | 317 | 317 | 317 | 322 | 327 | 317 | 358 |
| | reduced pressure level (MPa) | 0.085 | 0.085 | 0.085 | 0.085 | 0.085 | 0.085 | 0.085 | 0.085 | 0.085 | 0.085 | 0.085 | 0.085 | 0.085 |
| | Average residence time (s) | 55 | 55 | 55 | 55 | 55 | 55 | 55 | 55 | 55 | 55 | 55 | 55 | 55 |
| | Torque of extrusion (%) | 72 | 69 | 66 | 65 | 67 | 64 | - | - | - | 40 | 44 | - | >100 |
| Solid-phase polymerization | Heating temperature (°C) | - | - | - | - | - | - | 210 | 210 | 210 | - | - | 210 | - |
| | Heating time (h) | - | - | - | - | - | - | 2 | 2 | 2 | - | - | 2.5 | - |
| Evaluation results | Containment of apatite-based compound | Absent | Absent | Absent | Absent | Absent | Absent | Absent | Absent | Absent | Absent | Absent | Absent | Absent |
| | Viscosity number VN of polyamide resin (mL/g) | 203 | 204 | 210 | 215 | 221 | 211 | 232 | 227 | 222 | 152 | 157 | 231 | 199 |
| | Pellet RV | 94 | 95 | 101 | 107 | 114 | 102 | 129 | 122 | 115 | 53 | 56 | 127 | 89 |
| | Moisture content (% by mass) | 0.08 | 0.08 | 0.08 | 0.08 | 0.08 | 0.08 | 0.03 | 0.03 | 0.03 | 0.08 | 0.08 | 0.03 | 0.08 |
| | [COOH]-[NH2] (milliequivalent/kg) | 31 | 27 | 19 | 13 | 6 | 9 | 11 | -21 | -26 | 22 | 35 | 34 | 32 |
| | Difference between heats of fusion(J/g) | -2.9 | -2.9 | -3.5 | -4.4 | -3.8 | -4.2 | 12.3 | 11.9 | 12.1 | -4.1 | -2.8 | 12.2 | -4.2 |
| | Pellet color (b value) | 7 | 5 | 5 | 5 | 7 | 5 | 11 | 13 | 17 | 4 | 4 | 12 | 11 |
| | Average plasticization time (sec) | 1.83 | 1.8 | 1.75 | 1.71 | 1.76 | 1.7 | 1.96 | 1.98 | 1.99 | 1.76 | 1.74 | 1.91 | 1.76 |
| | Plasticization maximum-minimum difference (sec) | 0.23 | 0.23 | 0.17 | 0.15 | 0.15 | 0.15 | 0.43 | 0.37 | 0.39 | 0.18 | 0.17 | 0.31 | 0.13 |
| | Minimum filling pressure (kg/cm$^2$) | 45 | 42 | 41 | 40 | 40 | 39 | - | - | - | 42 | 42 | - | 41 |
| | JIS Tensile strength (MPa) | 176 | 177 | 177 | 179 | 177 | 176 | 176 | 176 | 174 | 178 | 177 | 181 | 174 |
| | Charpy impact strength (kJ/m$^2$) | 16.6 | 16.8 | 16.9 | 16.9 | 17.3 | 16.8 | 19.6 | 19.2 | 18.7 | 13.9 | 13.9 | 16.7 | 15.9 |
| | Hydrolysis resistance | 50 | 51 | 55 | 57 | 56 | 57 | 56 | 58 | 54 | 50 | 47 | 52 | 53 |
| | Staining caused by mixing with CuI/KI | ○ | ○ | ○ | ○ | ○ | ○ | ○ | ○ | ○ | × | × | ○ | ○ |
| | Mold release properties | ○ | ○ | ○ | ○ | ○ | ○ | × | × | × | ○ | ○ | × | × |

[Example 30]

The extruder used was a twin-screw extruder (manufactured by Coperion GmbH, ZSK25) that had a top feed port (hereinafter, simply referred to as top-F) on the upper face (top position) of an upstream barrel, and was equipped with two feed ports on the lateral side of downstream barrels and two pressure reduction ports on the upper face of downstream barrels. The feed ports on the lateral side were the first feed port (hereinafter, simply referred to as side 1) and the second feed port (hereinafter, simply referred to as side 2), respectively, from the upstream side. The pressure reduction ports on the upper face were the first pressure reduction port (hereinafter, simply referred to as vent 1) and the second pressure reduction port (hereinafter, simply referred to as vent 2), respectively, from the upstream side. The side 1, the vent 1, the side 2, and the vent 2 were mounted in this order from the upstream side. The resin sealing of the upstream and downstream portions of each degassing region (pressure reduction port) was enabled using, for example, a reverse rotating kneading disc-installed screw.

A blend of 0.115 parts by mass of an 85% aqueous phosphoric acid solution added based on 100 parts by mass of PA66-1 obtained in Production Example above, i.e., a blend of 100 parts by mass of the PA66-1 pellets impregnated in advance with 0.098 parts by mass of phosphoric acid (phosphorus element concentration: 10 mmol/kg of the polyamide resin), was prepared.

In the twin-screw extruder, the blend of PA66-1 and phosphoric acid thus prepared was supplied from the top-F, and 0.056 parts by mass of CaO (calcium element concentration: 10.0 mmol/kg of the polyamide resin) based on 100 parts by mass of PA66 were supplied from the side 2, followed by melt kneading at the number of screw rotations of 300 rpm, a cylinder temperature of 300°C, an extrusion rate of 20 kg/hr, and a reduced pressure level of 0.085 MPa for the vent 2 and the vent 3. Under these conditions, the polyamide resin composition in a molten state was discharged in a strand form from the head nozzle, cooled in water, and cut to obtain pellets of the polyamide resin composition. Then, the obtained pellets were dried at 80°C for 12 hours in a nitrogen atmosphere to adjust the moisture content in the pellets. The obtained polyamide resin composition was evaluated for the viscosity number of the polyamide resin, the moisture content, the confirmation of the apatite-based compound, the difference between the carboxyl group terminus concentration and the amino group terminus concentration, the difference between the heats of fusion, the molding plasticizing properties, the ISO tensile strength, the ISO tensile elongation, the Charpy impact strength, and the mold release properties. Also, the torque of extrusion was recorded at the time of extrusion. The evaluation results are shown in Table 5.

[Example 31]

A blend of 0.115 parts by mass of an 85% aqueous phosphoric acid solution added based on 100 parts by mass of PA66-1 obtained in Production Example above, i.e., a blend of 100 parts by mass of the PA66-1 pellets impregnated in advance with 0.098 parts by mass of phosphoric acid (phosphorus element concentration: 10 mmol/kg of the polyamide resin) and further supplemented with 1.40 parts by mass of the amino group terminus-rich PA prepolymer (oligomer) (NH2-P) obtained in Production Example above (10 mmol/kg of the polyamide resin) based on 100 parts by mass of PA66-1, was prepared.

Pellets of the polyamide resin composition were obtained in the same way as in Example 30 except that in the twin-screw extruder, the blend of PA66-1, phosphoric acid, and the amino group terminus-rich PA prepolymer (oligomer) thus prepared was supplied instead of the blend of PA66-1 and phosphoric acid from the top-F. Then, the obtained pellets were dried to adjust the moisture content in the pellets. Various evaluations were conducted in the same way as in Example 30. The evaluation results are shown in Table 5.

[Comparative Example 17]

10 kg of the PA66-3 pellets obtained in Production Example above was placed in a conical ribbon vacuum dryer (manufactured by Okawara MFG. Co., Ltd., trade name: Ribocone RM-10V), and the inside of the vacuum dryer was sufficiently purged with nitrogen. While nitrogen was injected at 1 L/min into the vacuum dryer, the PA66-3 pellets were heated with stirring at a temperature of 210°C for 4 hours to perform the solid-phase polymerization of the polyamide resin. Then, while nitrogen was circulated in the vacuum dryer, the temperature was decreased. When the temperature reached approximately 50°C, the pellets were directly isolated form the vacuum dryer to obtain pellets of a polyamide resin composition containing the polyamide resin with a molecular weight increased by solid-phase polymerization. Various evaluations were conducted for the obtained pellets in the same way as in Example 30. The evaluation results are shown in Table 5.

[Comparative Example 5] Already described

10 kg of the PA66-1 pellets obtained in Production Example above was placed in a conical ribbon vacuum dryer (manufactured by Okawara MFG. Co., Ltd., trade name: Ribocone RM-10V), and the inside of the vacuum dryer was sufficiently purged with nitrogen. While nitrogen was injected at 1 L/min into the vacuum dryer, the PA66-1 pellets were heated with stirring at a temperature of 210°C for 4 hours to perform the solid-phase polymerization of the polyamide resin. Then, while nitrogen was circulated in the vacuum dryer, the temperature was decreased. When the temperature reached approximately 50°C, the pellets were directly isolated form the vacuum dryer to obtain pellets of a polyamide resin composition containing the polyamide resin with a molecular weight increased by solid-phase polymerization. Various evaluations were conducted for the obtained pellets in the same way as in Example 30. The evaluation results are shown in Table 5.

[Table 5]

|  |  |  | Example 30 | Example 31 | Comparative Example 17 | Comparative Example 5 already described |
|---|---|---|---|---|---|---|
| Raw material component | | (A) Polyamide resin | PA66-1 | PA66-1 | PA66-3 | PA66-1 |
| | | part by mass | 100 | 100 | 100 | 100 |
| | | (B) Phosphorus compound | Phosphoric acid | Phosphoric acid | Absent | Absent |
| | | part by mass | 0.098 | 0.098 | – | – |
| | | Phosphorus element concentration: mmol/kg of polyamide resin | 10 | 10 | – | – |
| | | (C2) Metal compound | CaO | CaO | | |
| | | part by mass | 0.056 | 0.056 | | |
| | | Metal element concentration: mmol/kg of polyamide resin | 10.0 | 10.0 | | |
| | | (E) Amine component | Absent | NH2-P | Absent | Absent |
| | | part by mass | – | 1.40 | – | – |
| | | As amine: mmol/kg of component (A) | – | 10 | – | – |
| Extrusion conditions | | Resin temperature (°C) | 314 | 308 | – | – |
| | | Reduced pressure level (MPa) | 0.085 | 0.085 | – | – |
| | | Average residence time (s) | 55 | 55 | – | – |

| | | 50 | 42 | – | – |
|---|---|---|---|---|---|
| Solid-phase polymerization | Torque of extrusion (%) | 50 | 42 | – | – |
| | Heating temperature (°C) | – | – | 210 | 210 |
| | Heating time (h) | – | – | 4 | 4 |
| Evaluation results | Containment of apatite-based compound | Absent | Absent | Absent | Absent |
| | Viscosity number VN of polyamide resin (milliequivalent/kg) | 200 | 221 | 233 | 229 |
| | Pellet RV | 90 | 114 | 130 | 125 |
| | Moisture content (% by mass) | 0.08 | 0.08 | 0.03 | 0.08 |
| | [COOH]–[NH2] (milliequivalent/kg) | 31 | 10 | 11 | 32 |
| | $\Delta H1-\Delta H2$ (J/g) | 6.7 | 5.3 | 20.5 | 20.2 |
| | Average plasticization time (sec) | 1.58 | 1.54 | 1.65 | 1.67 |
| | Plasticization maximum-minimum difference (sec) | 0.2 | 0.16 | 0.31 | 0.33 |
| | ISO tensile strength (MPa) | 81 | 81 | 80 | 81 |
| | ISO tensile elongation (%) | 46 | 54 | 41 | 45 |
| | Charpy impact strength (kJ/m$^2$) | 7 | 7.5 | 6.9 | 6.8 |
| | Mold release properties | ○ | ○ | × | × |

Industrial Applicability

The polyamide resin composition of the present invention has high tenacity (tensile elongation and Charpy impact strength) and is excellent in moldability such as mold release properties and suppression of gelation during residence under heat. The polyamide resin composition of the present invention has industrial applicability in the fields of automobile parts, electric and electronic parts, industrial machinery parts, various gears, use in extrusion, etc.

**Claims**

1. A method for producing a polyamide resin composition containing (A) a polyamide resin, (B) 0.5 to 400 mmol of a phosphorus compound in terms of a phosphorus element concentration, and (C2) 0.5 to 400 mmol of a metal compound in terms of a metal element (C), per kg of the polyamide resin, the method comprising
   kneading the polyamide resin (A) and the phosphorus compound (B), and
   adding the metal compound (C2) after at least one degassing step;
   wherein an extruder having one or more degassing regions is used, the polyamide resin (A) and the phosphorus compound (B) are kneaded to obtain a kneaded product, and after the kneaded product passes through the first degassing region of the extruder, the metal compound (C2) is added as the metal element (C) to the kneaded product.

2. The method for producing the polyamide resin composition according to claim 1, wherein a viscosity number [VN] of the polyamide resin component in the polyamide resin composition is 160 mL/g or higher, measured according to ISO307.

3. The method for producing the polyamide resin composition according to claim 1 or 2, wherein the metal compound (C2) is at least one member selected from the group consisting of a metal halide, a metal oxide, a metal hydroxide, and a metal carbonate.

4. The method for producing the polyamide resin composition according to any one of claims 1 to 3, wherein degassing is carried out at least once again after the addition of the metal compound (C2).

5. The method for producing the polyamide resin composition according to any one of claims 1 to 4, wherein the polyamide resin (A), the phosphorus compound (B), and a reinforcing material (D) are kneaded, and the metal compound (C2) is added after the first degassing operation for the kneaded product.

6. The method for producing the polyamide resin composition according to any one of claims 1 to 4, wherein the polyamide resin (A) and the phosphorus compound (B) are kneaded, a reinforcing material (D) is added after the first degassing operation for the kneaded product, and then the metal compound (C2) is added.

7. The method for producing the polyamide resin composition according to any one of claims 1 to 4, wherein the polyamide resin (A) and the phosphorus compound (B) are kneaded, and the metal compound (C2) and a reinforcing material (D) are added at the same time after the first degassing operation for the kneaded product.

**Patentansprüche**

1. Verfahren zur Herstellung einer Polyamidharzzusammensetzung, die (A) ein Polyamidharz, pro kg des Polyamidharzes (B) 0,5 bis 400 mmol an einer Phosphorverbindung bezogen auf die Phosphorelementkonzentration und (C2) 0,5 bis 400 mmol an einer Metallverbindung bezogen auf ein Metallelement (C) umfasst, wobei das Verfahren umfasst:

   Kneten des Poylamidharzes (A) und der Phosphorverbindung (B) und
   Zugeben der Metallverbindung (C2) nach wenigstens einem Entgasungsschritt;
   wobei ein Extruder mit einem oder mehreren Entgasungsbereichen verwendet wird, das Polyamidharz (A) und die Phosphorverbindung (B) geknetet werden, um ein geknetetes Produkt zu erhalten, und nachdem das geknetete Produkt durch den ersten Entgasungsbereich des Extruders getreten ist, die Metallverbindung (C2) als das Metallelement (C) zu dem gekneteten Produkt zugegeben wird.

2. Verfahren zur Herstellung der Polyamidharzzusammensetzung gemäß Anspruch 1, wobei die Viskositätszahl [VN] der Polyamidharzkomponente in der Polyamidharzzusammensetzung 160 ml/g oder mehr, gemessen gemäß ISO 307, beträgt.

3. Verfahren zur Herstellung der Polyamidharzzusammensetzung gemäß Anspruch 1 oder 2, wobei die Metallverbindung (C2) wenigstens ein Element ausgewählt aus der Gruppe bestehend aus einem Metallhalogenid, einem Metalloxid, einem Metallhydroxid und einem Metallcarbonat ist.

4. Verfahren zur Herstellung der Polyamidharzzusammensetzung gemäß einem der Ansprüche 1 bis 3, wobei das Entgasen wenigstens ein weiteres Mal nach dem Zugeben der Metallverbindung (C2) durchgeführt wird.

5. Verfahren zur Herstellung der Polyamidharzzusammensetzung gemäß einem der Ansprüche 1 bis 4, wobei das Polyamidharz (A), die Phosphorverbindung (B) und ein Verstärkungsmaterial (D) geknetet werden und die Metallverbindung (C2) nach dem ersten Entgasungsvorgang für das geknetete Produkt zugegeben wird.

6. Verfahren zur Herstellung der Polyamidharzzusammensetzung gemäß einem der Ansprüche 1 bis 4, wobei

das Polyamidharz (A) und die Phosphorverbindung (B) geknetet werden,
ein Verstärkungsmaterial (D) nach dem ersten Entgasungsvorgang für das geknetete Produkt zugegeben wird und
anschließend die Metallverbindung (C2) zugegeben wird.

7. Verfahren zur Herstellung der Polyamidharzzusammensetzung gemäß einem der Ansprüche 1 bis 4, wobei
das Polyamidharz (A) und die Phosphorverbindung (B) geknetet werden und
die Metallverbindung (C2) und ein Verstärkungsmaterial (D) gleichzeitig nach dem ersten Entgasungsvorgang für
das geknetete Produkt zugegeben werden.

**Revendications**

1. Procédé de production d'une composition de résine de polyamide contenant (A) une résine de polyamide, (B) 0,5
à 400 mmol d'un composé de phosphore en termes de concentration d'un élément phosphore, et (C2) 0,5 à 400
mmol d'un composé de métal en termes d'un élément métal (C), par kg de résine de polyamide, le procédé
comprenant :

le malaxage de la résine de polyamide (A) et du composé de phosphore (B), et
l'addition du composé de métal (C2) après au moins une étape de dégazage ;
dans lequel une extrudeuse comportant une ou plusieurs régions de dégazage est utilisée, la résine de polyamide
(A) et le composé de phosphore (B) sont malaxés pour obtenir un produit malaxé, et après le passage du produit
malaxé dans la première région de dégazage de l'extrudeuse, le composé de métal (C2) est ajouté comme
élément métal (C) au produit malaxé.

2. Procédé de production de la composition de résine de polyamide selon la revendication 1, dans lequel un indice
de viscosité [IV] du constituant résine de polyamide dans la composition de résine de polyamide est de 160 ml/g
ou plus, mesuré selon ISO307.

3. Procédé de production de la composition de résine de polyamide selon la revendication 1 ou 2, dans lequel le
composé de métal (C2) est au moins un élément sélectionné dans le groupe constitué d'un halogénure de métal,
d'un oxyde de métal, d'un hydroxyde de métal, et d'un carbonate de métal.

4. Procédé de production de la composition de résine de polyamide selon l'une quelconque des revendications 1 à 3,
dans lequel le dégazage est effectué au moins une fois de plus après l'addition du composé de métal (C2).

5. Procédé de production de la composition de résine de polyamide selon l'une quelconque des revendications 1 à 4,
dans lequel
la résine de polyamide (A), le composé de phosphore (B) et un matériau de renforcement (D) sont malaxés, et
le composé de métal (C2) est ajouté après la première opération de dégazage pour le produit malaxé.

6. Procédé de production de la composition de résine de polyamide selon l'une quelconque des revendications 1 à 4,
dans lequel
la résine de polyamide (A) et le composé de phosphore (B) sont malaxés,
un matériau de renforcement (D) est ajouté après la première opération de dégazage pour le produit malaxé, et
le composé de métal (C2) est ajouté ensuite.

7. Procédé de production de la composition de résine de polyamide selon l'une quelconque des revendications 1 à 4,
dans lequel
la résine de polyamide (A) et le composé de phosphore (B) sont malaxés, et
le composé de métal (C2) et un matériau de renforcement (D) sont ajoutés en même temps après la première
opération de dégazage pour le produit malaxé.

[Fig.1]

**REFERENCES CITED IN THE DESCRIPTION**

**Patent documents cited in the description**

- JP 2011026396 A
- JP 1153725 A
- JP 2000226512 A